(19) Europäisches Patentamt
European Patent Office
Office européen des brevets

(11) EP 4 233 051 B1

(12) EUROPEAN PATENT SPECIFICATION

(45) Date of publication and mention of the grant of the patent:
10.07.2024 Bulletin 2024/28

(21) Application number: 21723988.8

(22) Date of filing: 06.05.2021

(51) International Patent Classification (IPC):
G10L 21/0208 (2013.01)   G10L 25/30 (2013.01)

(52) Cooperative Patent Classification (CPC):
G10L 21/0208; G10L 25/30

(86) International application number:
PCT/EP2021/062076

(87) International publication number:
WO 2022/083900 (28.04.2022 Gazette 2022/17)

(54) **AN APPARATUS FOR PROVIDING A PROCESSED AUDIO SIGNAL, A METHOD FOR PROVIDING A PROCESSED AUDIO SIGNAL, AN APPARATUS FOR PROVIDING NEURAL NETWORK PARAMETERS AND A METHOD FOR PROVIDING NEURAL NETWORK PARAMETERS**

VORRICHTUNG ZUR BEREITSTELLUNG EINES VERARBEITETEN AUDIOSIGNALS, VERFAHREN ZUR BEREITSTELLUNG EINES VERARBEITETEN AUDIOSIGNALS, VORRICHTUNG ZUR BEREITSTELLUNG VON PARAMETERN EINES NEURONALEN NETZWERKS UND VERFAHREN

APPAREIL DE FOURNITURE D'UN SIGNAL AUDIO TRAITÉ, PROCÉDÉ DE FOURNITURE D'UN SIGNAL AUDIO TRAITÉ, APPAREIL DE FOURNITURE DE PARAMÈTRES DE RÉSEAU NEURONAL ET PROCÉDÉ DE FOURNITURE DE PARAMÈTRES DE RÉSEAU NEURONAL

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 20.10.2020 EP 20202890

(43) Date of publication of application:
30.08.2023 Bulletin 2023/35

(73) Proprietor: Fraunhofer-Gesellschaft zur Förderung
der angewandten Forschung e.V.
80686 München (DE)

(72) Inventors:
• STRAUSS, Martin
  91058 Erlangen (DE)
• EDLER, Bernd
  91058 Erlangen (DE)

(74) Representative: Burger, Markus et al
Schoppe, Zimmermann, Stöckeler
Zinkler, Schenk & Partner mbB
Patentanwälte
Radlkoferstraße 2
81373 München (DE)

(56) References cited:
• SHI YING ET AL: "Can We Trust Deep Speech Prior?", 2021 IEEE SPOKEN LANGUAGE TECHNOLOGY WORKSHOP (SLT), IEEE, 19 January 2021 (2021-01-19), pages 742 - 749, XP033891525, DOI: 10.1109/SLT48900.2021.9383499
• BOHAN ZHAI ET AL: "SqueezeWave: Extremely Lightweight Vocoders for On-device Speech Synthesis", ARXIV.ORG, CORNELL UNIVERSITY LIBRARY, 201 OLIN LIBRARY CORNELL UNIVERSITY ITHACA, NY 14853, 16 January 2020 (2020-01-16), XP081579960
• LI ZENG-XI ET AL: "A Conditional Generative Model for Speech Enhancement", CIRCUITS, SYSTEMS AND SIGNAL PROCESSING, CAMBRIDGE, MS, US, vol. 37, no. 11, 13 March 2018 (2018-03-13), pages 5005 - 5022, XP036615831, ISSN: 0278-081X, [retrieved on 20180313], DOI: 10.1007/S00034-018-0798-4

- **RYAN PRENGER ET AL: "Waveglow: A Flow-based Generative Network for Speech Synthesis", ICASSP 2019 - 2019 IEEE INTERNATIONAL CONFERENCE ON ACOUSTICS, SPEECH AND SIGNAL PROCESSING (ICASSP), IEEE, 17 May 2019 (2019-05-17), pages 3617 - 3621, XP033565695, DOI: 10.1109/ICASSP.2019.8683143**
- **STRAUSS MARTIN ET AL: "A Flow-Based Neural Network for Time Domain Speech Enhancement", ICASSP 2021, 2021 IEEE INTERNATIONAL CONFERENCE ON ACOUSTICS, SPEECH AND SIGNAL PROCESSING (ICASSP), 6 June 2021 (2021-06-06), pages 5754 - 5758, XP055823227, ISBN: 978-1-7281-7605-5, DOI: 10.1109/ICASSP39728.2021.9413999**

**Description**

Technical Field

Embodiments according to the invention are related to an apparatus for providing a processed audio signal.
Further embodiments according to the invention are related to a method for providing a processed audio signal.
Further embodiments according to the invention are related to an apparatus for providing neural network parameters.
Further embodiments according to the invention are related to a method for providing neural network parameters.
Embodiments according to the present application are concerned with audio signal processing using neural networks, particularly with audio signal enhancement, particularly with speech enhancement.
According to an aspect, embodiments according to the invention can be applied to provide a direct enhancement of noisy utterances by neural networks.

Background of the invention

A multitude of approaches to audio enhancement, particularly to speech enhancement involving the distinction of a target speech signal from an intrusive background is currently known. The goal of speech enhancement is to emphasize a target speech signal from an interfering background to ensure better intelligibility of the spoken content. The speech enhancement is important to a wide range of applications, including, e.g. hearing aids or automatic speech recognition.
Different generative approaches for speech enhancement have increasingly been used in recent years, such as variational autoencoders, generative adversarial networks (GANs), autoregressive models etc.
The article "Can We Trust Deep Speech Prior?" of Ying Shi (published in: 2021 IEEE spoken language technology workshop, IEEE, 2021, pages 742-749) describes that recently speech enhancement (SE) based on deep speech prior has attracted much attention such as the variational auto-encoder with non-negative matrix factorization (VAE-NMF) architecture. Compared to conventional approaches that represent clean speech by shallow models such as Gaussians with a low-rank covariance, the new approach employs deep generated models to represent the clean speech, which may provide a better prior. The article describes that despite the clear advantage in theory, deep priors must be used with much caution since the likelihood produced by a deep generative model does not always coincide with the speech quality. The article provides a comprehensive study on this issue and demonstrates that based on deep speech priors, a reasonable SE performance can be achieved but that results might be suboptimal. It is described that this problem is deeply rooted in the disharmony between the flexibility of deep generative models and the nature of the maximum likelihood (ML) training.
The article "Squeeze Wave: Extremely Lightweight Vocoders for On-Device Speech Synthesis" of Bohan Zhai et al. (published in: Cornell University Library, New York, January 16, 2020) describes that typical text-to-speech pipelines include a vocoder which translates audio representations into an audio wave form. It is described that most existing vocoders are difficult to parallelize since each generated sample is conditioned on previous samples. It is also described that WaveGlow is a flow-based food-forward alternative to these auto-regressive models. The paper presents Squeeze Wave, a family of lightweight vocoders based on WaveGlow that can generate audio of similar quality to WaveGlow with 61x to 2214x fewer MACs.
The article "Conditional Generative Model for Speech Enhancement" of Zeng-Xi Li et al. (published in: Circuits, Systems and Signal Processing, Cambridge, MS, US, Volume 37, No. 1, March 13, 2018, pages 1005-5022) describes that deep learning-based speech enhancement approaches like deep neural networks (DNN) and long short-term memory (LSTM) have already demonstrated superior results to classical methods. It is also described that these methods do not take full advantage of temporal context information. It is described that while DNN and LSTM consider temporal context in the noisy speech source, it does not do so for the estimated clean speech. It is further described that both DNN and LSTM also have a tendency to over-smooth spectra, which causes the enhanced speech to sound muffled. The paper propose an architecture to address both issues, which is named conditional generative model (CGM). By adopting an adversarial training scheme applied to a generator of deep delated convolutional layers, CGM is designed to model the joint and symmetric conditions of both noisy and estimated clean spectra. The paper evaluates CGM against both DNN and LSTM in terms of perceptual evaluation of speech quality (PESQ) and short-time objective intelligibility (STOI) on TIMIT sentences corrupted by noise in a range of matched and mismatched noise conditions.
The article "WaveGlow: a Flow-Based Generative Network for Speech Synthesis" of R.Prenger et al. (published at ICASSP 2019, IEEE International Conference on Acoustics, Speech and Signal Processing, IEEE, May 17, 2019, pages 3617-3621) describes the so-called "WaveGlow", a flow-based network capable of generating high quality speech from mel-Spectrograms. It is described that WaveGlow combines insights from Slow and WaveNet in order to provide fast, efficient and high quality synthesis, without the need for auto-regression. It is described that WaveGlow is implemented using only a single network, trained using only a single cross function: maximizing the likelihood of the training data, which makes the training procedure simple and stable.

In view of the above, there is a desire to create a concept for an audio signal enhancement which provides for an improved tradeoff between computational complexity and an achievable audio quality.

This object is achieved by the subject matter of the pending independent claims.

Further advantageous aspects are the subject of the dependent claims.

Summary of the invention

An embodiment according to the invention creates an apparatus, as set forth in the appended independent claim 1, for providing a processed audio signal, e.g. a processed speech signal, e.g. an enhanced audio signal, e.g. an enhanced speech signal, or e.g. an enhanced general audio signal, e.g. $\hat{x}$, on the basis of an input audio signal, e.g. a speech signal, e.g. a distorted audio signal, e.g. a noisy speech signal y, e.g. a clean signal x extracted from the noisy speech signal y, where, for example, y=x+n, where n is noise, e.g. a noisy background. The apparatus is configured to process, e.g. using an affine scaling, or using a sequence of affine scaling operations, a noise signal, e.g. z, or a signal derived from the noise signal, using one or more flow blocks, e.g. 8 flow blocks, e.g. using a flow block system, e.g. including affine coupling layers, e.g. including invertible convolution, in order to obtain the processed audio signal, e.g. the enhanced audio signal, e.g. $\hat{x}$. The apparatus is configured to adapt a processing performed using the one or more flow blocks in dependence on the input audio signal, e.g. the distorted audio signal, e.g. in dependence on a noisy speech signal y; e.g. in dependence on noisy time domain speech samples, and using a neural network. The neural network, for example, provides one or more processing parameters for the flow block, e.g. parameters of an affine processing, like a scaling factor and a shift value, on the basis of the distorted audio signal, and preferably also in dependence on at least a part of the noise signal, or a processed version thereof.

This embodiment is based on the finding that processing of audio signals, for example, for speech enhancement purpose, can be performed directly using flow blocks processing, which may, for example, model a generative process. It has been found that the flow block processing allows to process a noise signal, e.g. a noise signal z, e.g. generated by the apparatus, or e.g. stored in the apparatus, in a manner conditioned on the input audio signal, e.g. a noisy audio signal y. The noise signal z represents (or comprises) a given (e.g. simple or complex) probability distribution, preferably a Gaussian probability distribution. It has been found that upon processing of the noise signal conditioned on the distorted audio signal, an enhanced clean part of the input audio signal is provided as a result of the processing without introducing this clean part, e.g. without a noisy background, as an input to the apparatus.

The proposed apparatus provides an effective and easy-to-implement audio signal processing, particularly a direct audio signal processing, e.g. a direct enhancement of speech samples. At the same time a high performance, e.g. an improved speech enhancement, or e.g. an improved quality of the processed audio signal, are provided in the proposed apparatus.

To conclude, the concept described herein provides an improved compromise between computational complexity and an achievable audio quality.

According to an embodiment, the input audio signal is represented by a set of time domain audio samples, e.g. noisy time domain audio, e.g. speech, samples, e.g. time domain speech utterances. For example, the time domain audio samples of the input audio signal, or time domain audio samples derived therefrom, are input into the neural network, wherein, for example, the time domain audio samples of the input audio signal, or the time domain audio samples derived therefrom, are processed in the neural network in the form of a time domain representation, without applying a transformation to transform domain representation, e.g. a spectral domain representation.

Performing flow block processing directly in speech domain (or time domain) allows audio signal processing without a need of any predefined features or time-frequency, T-F, transformations. Since both noise signal and input audio signal are of the same dimension, no upsampling layer in a generative process is needed. Moreover, it has been recognized that a processing of time domain samples allows for an efficient modification of signal statistics in a sequence of flow blocks that perform an invertible affine processing, and also allows to derive an audio signal from a noise signal in such a sequence of flow blocks. It has been found that a processing of time domain samples in a sequence of flow blocks allows to adapt the signal characteristics in such a manner, that a reconstructed audio signal comprises a good hearing impression. Moreover, it has been recognized that resource-consuming transform operation between different signal representation domains can be avoided by performing the processing in the time domain. Moreover, it has been recognized that performing flow block processing directly in speech domain (or time domain) reduces an amount of parameters of the flow block processing using the neural network. Thus, a less computationally heavy audio signal processing is provided.

According to an embodiment, a neural network associated with a given flow block, e.g. a given stage of an affine processing, of the one or more flow blocks is configured to determine one or more processing parameters, e.g. a scaling factor, e.g. S, and e.g. a shift value, e.g. T, for the given flow block in dependence on the noise signal, e.g. z, or a signal derived from the noise signal, and in dependence on the input audio signal, e.g. y.

Determining one or more processing parameters of an affine processing using the neural network, which also receives and processes time domain samples of the input audio signal, allows to control the synthesis of the processed audio signal on the basis of the noise signal in dependence on the input audio signal. Accordingly, the neural network can be trained in such a manner, that the neural network provides appropriate processing parameters for the affine processing on the basis of the input audio signal (and typically also in dependence on a part of the noise signal, or a part of the processed noise signal). Also, it has been recognized that the training of the neural network is possible with reasonable effort using a training structure which comprises an affine processing which is inverse to the affine processing used for the derivation of the processed audio signal.

According to an embodiment, a neural network associated with a given flow block, e.g. a given stage of an affine processing, is configured to provide one or more parameters, e.g. a scaling factor, e.g. S, and e.g. a shift value, e.g. T, of an affine processing, e.g. in an affine coupling layer, which is applied to the noise signal, or to a processed version of the noise signal, or to a portion of the noise signal, or to a portion of a processed version of the noise signal, e.g. z, during the processing.

By providing one or more parameters of an affine processing using the neural network, and by applying the affine processing e.g. to the noise signal, or to a processed version of the noise signal, the processing applied to the noise signal is invertible. Accordingly, it can be avoided to feed the complete noise signal through the neural net, which would typically result in a non-invertible operation. However, by controlling an invertible (affine) processing using the neural net, a training of the neural net can be significantly facilitated, which results in a complexity of the processing which can be handled.

According to an embodiment, a neural network associated with the given flow block, e.g. the given stage of the affine processing, is configured to determine one or more parameters, e.g. a scaling factor, e.g. S, and e.g. a shift value, e.g. T, of the affine processing, in dependence on a first part, e.g. $z_1$, of a flow block input signal, e.g. z, or in dependence on a first part of a pre-processed flow block input signal, e.g. z', and in dependence on the input audio signal, e.g. y. An affine processing associated with the given flow block, e.g. the given stage of the affine processing, is configured to apply the determined parameters, e.g. a scaling factor, e.g. S, and e.g. a shift value, e.g. T, to a second part, e.g. $z_2$, of the flow block input signal, e.g. z, or to a second part of the pre-processed flow block input signal, e.g. z', to obtain an affinely processed signal, $\widehat{z}_2$. The first part, e.g. $z_1$, of the flow block input signal, e.g. z, or of the pre-processed flow block input signal, e.g. z', which is not modified by the affine processing, and the affinely processed signal, e.g. $\widehat{z}_2$, form, e.g. constitute, a flow block output signal, e.g. $z_{new}$, e.g. a stage output signal, of the given flow block, e.g. the given stage of the affine processing. Affine processing, e.g. an affine coupling layer, of the given flow block ensures generating the processed audio signal by inverting flow block processing used upon training the used neural network.

According to an embodiment, the neural network associated with the given flow block includes a depthwise separable convolution in the affine processing associated with the given flow block. The neural network may, for example, include the depthwise separable convolution instead of any standard convolution conventionally used in the neural networks. Applying the depthwise separable convolution, e.g. instead of any other standard convolution, may reduce an amount of parameters of the flow block processing using the neural network. For example, applying a depthwise separable convolution in the neural network in combination with performing flow block processing directly in speech domain (or time domain) may reduce the number of the neural network parameters, e.g. from 80 millions to 20-50 millions, e.g. 25 millions. Thus, a less computationally heavy audio signal processing is provided.

According to an embodiment, the apparatus is configured to apply an invertible convolution, e.g. a 1x1 invertible convolution, to the flow block output signal, e.g. $z_{new}$, e.g. the stage output signal, of the given flow block, e.g. the given stage of the affine processing, which may, for example, be an input signal for a subsequent stage, or for other subsequent stages following the first stage, to obtain the processed flow block output signal, $z'_{new}$, e.g. a processed version of the flow block output signal, e.g. a convolved version of the flow block output signal. The invertible convolution may help to ensure that different samples are processed by the affine processing in different flow blocks (or processing stages). Also, the invertible convolution may help to ensure that different samples are fed into the neural nets of different (subsequent) flow blocks. Accordingly, a synthesis of the processed audio signal on the basis of the noise signal can be improved by efficiently changing statistical characteristics of a sequence of time domain samples.

According to an embodiment, the apparatus is configured to apply a nonlinear compression, e.g. a $\mu$-law transformation, to the input audio signal, e.g. y, prior to processing the noise signal, e.g. z, in dependence on the input audio signal, e.g. y. Regarding advantages of this functionality, reference is made to the below discussion of the apparatus for providing neural network parameters, particularly to the discussion of the nonlinear compression algorithm used in the apparatus for providing neural network parameters.

According to an embodiment, the apparatus is configured to apply a $\mu$-law transformation, e.g. a $\mu$-law function, as the nonlinear compression to the input audio signal, e.g. y. Regarding advantages of this functionality, reference is made to the below discussion of the apparatus for providing neural network parameters, particularly to the discussion of applying the μ-law transformation as the nonlinear compression algorithm used in the apparatus for providing neural network parameters.

According to an embodiment, the apparatus is configured to apply a transformation according to

$$g(y) = sgn(y) \cdot \frac{\ln(1+\mu|y|)}{\ln(1+\mu)}$$

; to the input audio signal, e.g., wherein sgn() is a sign function and μ is a parameter defining a level of compression. Regarding advantages of this functionality, reference is made to the below discussion of the apparatus for providing neural network parameters, particularly to the discussion of applying the same transformation as the nonlinear compression algorithm used in the apparatus for providing neural network parameters.

According to an embodiment, the apparatus is configured to apply a nonlinear expansion, e.g. an inverse μ-law transformation, e.g. reverting a μ-law transformation, to the processed, e.g. enhanced, audio signal. This provides an effective post-processing tool, e.g. an effective post-processing technique for density estimation, which increases an enhancement outcome and an improved performance of the audio signal processing. As a result, an enhanced signal with minimized high-frequency additives is provided as an output of the apparatus.

According to an embodiment, the apparatus is configured to apply an inverse μ-law transformation, e.g. inverse μ-law function; e.g. by reverting μ-law transform, as the nonlinear expansion to the processed, e.g. enhanced, audio signal ($\hat{x}$). Using an inverse μ-law transformation provides an improved result of a modelling of a generative process from a noisy input signal to an enhanced output signal, thus providing and improved enhancement performance. This provides an effective post-processing tool, e.g. an effective post-processing technique for density estimation, which increases an enhancement outcome and an improved performance of the audio signal processing.

According to an embodiment, the apparatus is configured to apply a transformation according to

$$g^{-1}(\hat{x}) = sgn(\hat{x}) \cdot \left(\frac{(1+\mu)^{\hat{x}}-1}{\mu}\right)$$

to the processed, e.g. enhanced, audio signal, e.g. $\hat{x}$, wherein sgn() is a sign function; and μ is a parameter defining a level of expansion. An increased enhancement outcome and an improved performance of the audio signal processing is provided. This provides an effective post-processing tool, e.g. an effective post-processing technique for density estimation, which increases an enhancement outcome and an improved performance of the audio signal processing.

According to an embodiment, neural network parameters of the neural network for processing the noise signal, or the signal derived from the noise signal, are obtained, e.g. predetermined, e.g. saved in the apparatus, e.g. saved in a remote server, using a processing of a training audio signal or a processed version thereof, in one or more training flow blocks in order to obtain a training result signal, wherein a processing of the training audio signal or of the processed version thereof using the one or more training flow blocks is adapted in dependence on a distorted version of the training audio signal and using the neural network. The neural network parameters of the neural networks are determined, such that a characteristic, e.g. a probability distribution, of the training result audio signal approximates or comprises a predetermined characteristic, e.g. a noise-like characteristic; e.g. a Gaussian distribution. The one or more neural networks used for the provision of the processed audio signal are identical to the one or more neural networks used for the provision of the training result signal; wherein the training flow blocks perform an affine processing that is inverse to an affine processing performed in the provision of the processed audio signal.

An effective training tool of the neural networks associated with the flow blocks are thus provided, which provides the parameters of the neural networks to be used in the flow block processing in the apparatus. This results at an improved audio signal processing, particularly at an improved signal enhancement in the apparatus. For example, obtaining neural network parameters in such a manner allows for an efficient training. It is possible to use inverse processing approaches (e.g. defined by inverse affine transforms) in the training of the neural network parameters and in the inference (derivation of the processed audio signal), which brings along a high efficiency and a well-predictable signal transformation. Thus, a good hearing impression can be achieved with a feasible complexity.

According to an embodiment, the apparatus is configured to provide neural network parameters of the neural network for processing the noise signal, or the signal derived from the noise signal, wherein the apparatus is configured to process a training audio signal or a processed version thereof, using the one or more flow blocks in order to obtain a training result signal. The apparatus is configured to adapt a processing of the training audio signal or of the processed version thereof which is performed using the one or more flow blocks in dependence on a distorted version of the training audio signal and using the neural network. The apparatus is configured to determine neural network parameters of the neural networks, e.g. using an evaluation of a cost function, e.g. an optimization function; e.g. using a parameter optimization procedure, such that a characteristic, e.g. a probability distribution, of the training result audio signal approximates or comprises a predetermined characteristic, e.g. a noise-like characteristic; e.g. a Gaussian distribution. Using the parameter optimization procedure may, for example, reduce the number of the neural network parameters, e.g. from 80 millions to 20-50 millions, e.g. to 25 millions. The apparatus is configured to provide neural network parameters for the neural networks associated with the flow blocks used in the processing of the audio signals in the apparatus. The apparatus thus provides an effective training tool for the neural networks associated with the flow blocks without a prerequisite of an external training tools.

According to an embodiment, the apparatus comprises an apparatus for providing neural network parameters, wherein the apparatus for providing neural network parameters is configured to provide neural network parameters of the neural network for processing the noise signal, or the signal derived from the noise signal. The apparatus for providing neural network parameters is configured to process a training audio signal or a processed version thereof, using one or more training flow blocks in order to obtain a training result signal. The apparatus for providing neural network parameters is configured to adapt a processing of the training audio signal or the processed version thereof which is performed using the one or more flow blocks in dependence on a distorted version of the training audio signal and using the neural network. The apparatus is configured to determine neural network parameters of the neural networks, e.g. using an evaluation of a cost function, e.g. an optimization function; e.g. using a parameter optimization procedure, such that a characteristic, e.g. a probability distribution, of the training result audio signal approximates or comprises a predetermined characteristic, e.g. a noise-like characteristic; e.g. a Gaussian distribution. The apparatus thus comprises an effective training tool for the neural networks associated with the flow blocks without a prerequisite of an external training tools.

According to an embodiment, the one or more flow blocks are configured to synthesize the processed audio, e.g. speech, signal on the basis of the noise signal under the guidance of the input audio, e.g. speech, signal. Thus the input audio signal may serve as an input quantity of the neural networks and thereby control the synthesis of the processed audio signal on the basis of the noise signal. For example, the neural network may effectively control the affine processing to approximate signal characteristics of the noise signal (or of a processed version thereof) to (statistical) signal characteristics of the input audio signal, wherein noise contributions of the input audio signal are at least partially reduced. Consequently, an improvement of the signal quality of the processed audio signal when compared to the input audio signal may be achieved.

According to an embodiment, the one or more flow blocks are configured to synthesize the processed audio, e.g. speech, signal on the basis of the noise signal under the guidance of the input audio, e.g. speech, signal using the affine processing of sample values of the noise signal, or of a signal derived from the noise signal. Processing parameters, e.g. a scaling factor, e.g. S, and e.g. a shift value, e.g. T, of the affine processing are determined on the basis of, e.g. time-domain, sample values of the input audio signal using the neural network. It has been found that such a processing brings along a good resulting processed audio signal quality at reasonable processing load.

According to an embodiment, the apparatus is configured to perform a normalizing flow processing, in order to derive the processed audio signal from the noise signal, e.g. under the guidance of the input audio signal. It has been recognized that normalizing flow processing provides an ability to successfully generate high quality samples of the processed audio signal in an audio enhancement application.

An embodiment according to the invention creates a method, as set forth in appended independent claim 20, for providing a processed audio signal on the basis of an input audio signal. The method comprises processing a noise signal, or a signal derived from the noise signal, using one or more flow blocks, in order to obtain the processed audio signal. The method comprises adapting the processing performed using the one or more flow blocks in dependence on the input audio signal, e.g. a distorted audio signal, and using a neural network.

The method according to this embodiment is based on the same considerations as an apparatus for providing a processed audio signal described above. Moreover, this disclosed embodiment may optionally be supplemented by any other features, functionalities and details disclosed herein in connection with the apparatus for providing a processed audio signal, both individually and taken in combination.

An embodiment according to the invention creates an apparatus, as set forth in appended independent claim 21, for providing neural network parameters, like e.g. edge weights, e.g. θ, of neural networks providing scaling factors, e.g. s, and shift values, e.g. t, on the basis of a portion, e.g. $x_1$, of a clean audio signal, or a processed version thereof, and on the basis of a distorted audio signal, e.g. y, in a training mode, which may correspond to edge weights of neural networks providing scaling factors, e.g. s, and shift values, e.g. t, on the basis of a portion of a noise signal, e.g. z, or a processed version thereof, and on the basis of an input audio signal, e.g. y, in an inference mode, for an audio processing, e.g. speech processing. The apparatus is configured to, e.g. in multiple iterations, process a training audio signal, e.g. a speech signal, e.g. x, or a processed version thereof, using one or more flow blocks, e.g. 8 flow blocks, e.g. using a flow block system, e.g. including affine coupling layers, e.g. including invertible convolution, in order to obtain a training result signal, which should be equal e.g. to a noise signal. The apparatus is configured to adapt a processing performed using the one or more flow blocks in dependence on a distorted version of the training audio signal, e.g. y, e.g. the distorted audio signal, e.g. in dependence on a noisy speech signal y, and using a neural network. The neural network, for example, provides one or more processing parameters for the flow block, e.g. parameters of an affine processing, like a scaling factor and a shift value, on the basis of the distorted version of the training audio signal, and preferably also in dependence on at least a part of the training audio signal, or a processed version thereof. The apparatus is configured to determine neural network parameters of the neural network, e.g. using an evaluation of a cost function, e.g. an optimization function, e.g. using a parameter optimization procedure, e.g. performed by the neural networks, such that a characteristic, e.g. a probability distribution, of the training result signal approximates or comprises a predetermined characteristic, e.g. a noise-like characteristic, e.g. a Gaussian distribution.

This embodiment is based on the finding that flow blocks processing can be applied in an audio signal processing, particularly to determine neural network parameters of neural networks to be used in the audio signal processing, by learning a mapping from an easy to a more complex probability distribution based on clean speech samples, e.g. x, conditioned on their noisy counterpart, e.g. y, e.g. learning a probability distribution of clean speech. For example, parameters of neural networks associated with a sequence of flow blocks have been found to be well-useable in inference, i.e. when obtaining a processed audio signal on the basis of a noise signal. Also, it has been found that it is easily possible to design inference flow blocks that correspond to the training flow blocks and that can be controlled using neural networks that use the trained neural network parameters.

The proposed apparatus provides an effective training tool of the neural networks associated with the flow blocks, which provides the parameters of the neural networks to be used in audio signal processing. This results in an improved audio signal processing, particularly in an improved audio signal enhancement, using the neural networks with the determined neural network parameters, which provides a high performance, e.g. an improved speech enhancement, or e.g. an improved quality of the processed audio signal.

According to an embodiment, the apparatus is configured to evaluate a cost function, e.g. a loss function, in dependence on characteristics of the obtained training result signal, e.g. in dependence on a distribution, e.g. a Gaussian function distribution, of the obtained noise signal and a variance $\delta 2$ of the obtained noise signal, and e.g. processing parameters, e.g. scaling factors, e.g. s, of the flow blocks, which may, for example, be dependent on input signals of respective flow blocks. The apparatus is configured to determine neural network parameters to reduce or minimize a cost defined by the cost function. A correlation between a modelled generative process and a generative process represented by modelling is optimized. Moreover, the cost function helps to adjust the neural network parameters in such a manner that the processing in the sequence of flow blocks, which is controlled by the neural networks, transforms the training audio signal into a signal having desired statistical characteristics (e.g. into a noise like signal). A deviation between the desired statistical characteristics and the signal provided by the training flow blocks may be efficiently represented by the cost function. Accordingly, the neural network parameters can be trained or optimized in such a manner, that the processing in the training flow blocks provides a signal, statistical characteristics of which approximate desired (e.g. noise-like) characteristics. In this training, the cost function may be a simple (and efficiently computable) training target function, and may therefore facilitate the adaptation of the neural network parameters. The trained neural network parameters trained in this manner can then be used in an inference processing to synthesize a processed audio signal on the basis of a noise signal.

According to an embodiment, the training audio signal, e.g. x, and/or the distorted version of the training audio signal, e.g. y, is represented by a set of time domain audio samples, e.g. noisy time domain audio, e.g. speech, samples, e.g. time domain speech utterances. The time domain audio samples of the input audio signal, or time domain audio samples derived therefrom, are, for example, input into the neural network. The time domain audio samples of the training audio signal, or the time domain audio samples derived therefrom, are, for example, processed in the neural network in the form of a time domain representation, without applying a transformation to transform domain representation, e.g. a spectral domain representation. Performing flow block processing directly in speech domain (or time domain) allows audio signal processing without a need of any predefined features or time-frequency, T-F, transformations. Where both the training audio signal and the distorted version of the training audio signal are of the same dimension, no upsampling layer is needed in the processing. Moreover, reference is also made to the above discussed advantages of a time domain processing.

According to an embodiment, a neural network associated with a given flow block, e.g. a given stage of an affine processing, of the one or more flow blocks is configured to determine one or more processing parameters, e.g. scaling factors, e.g. s, and e.g. shift values, e.g. t, for the given flow block in dependence on the training audio signal, e.g. x, or a signal derived from the training audio signal, and in dependence on the distorted version of the training audio signal, e.g. y. Regarding advantages of this functionality, reference is also made to the above discussion of the apparatus for providing a processed audio signal.

According to an embodiment, a neural network associated with a given flow block, e.g. a given stage of an affine processing, is configured to provide one or more parameters, e.g. scaling factors, e.g. s, and e.g. shift values, e.g. t, of an affine processing, e.g. in an affine coupling layer, which is applied to the training audio signal, e.g. x, or to a processed version of the training audio signal, or to a portion of the training audio signal, or to a portion of a processed version of the training audio signal during the processing. Regarding advantages of this functionality, reference is also made to the above discussion of the apparatus for providing a processed audio signal.

According to an embodiment, a neural network associated with the given flow block, e.g. the given stage of the affine processing, is configured to determine one or more parameters, e.g. scaling factors, e.g. s, and e.g. shift values, e.g. t, of the affine processing, in dependence on a first part, e.g. $x_1$, of a flow block input signal, e.g. x, or in dependence on a first part of a pre-processed flow block input signal, e.g. x', and in dependence on the distorted version of the training audio signal, e.g. y. An affine processing associated with the given flow block, e.g. the given stage of the affine processing, is configured to apply the determined parameters to a second part, e.g. $x_2$, of the flow block input signal, x, or to a second part of the pre-processed flow block input signal, x', to obtain an affinely processed signal, e.g. $\widehat{x_2}$ . The first part, e.g. $x_1$, of the flow block input signal, e.g. x, or of the pre-processed flow block input signal, e.g. x', which is e.g. not modified by the affine processing, and the affinely processed signal, e.g. $\widehat{x_2}$ , form, e.g. constitute, a flow block output signal, $x_{new}$, e.g. a stage output signal, of the given flow block, e.g. the given stage of the affine processing. Affine processing, e.g. an affine coupling layer, of the given flow block ensures invertibility of the flow blocks processing and efficient computing of the characteristic of the training result audio signal, for example, the Jacobian determinant used upon determining a probability density function. Moreover, by affinely processing only a part of the flow block input signal while leaving another part of the flow block input signal unchanged by the affine processing, an invertability of the processing is achieved while still having the chance to input a part of the flow block input signal into the neural network. Since that part of the flow block input signal which is used as an input of the neural network is not affected by the affine processing, it is available both before and after the affine processing, which in turn allows for an inversion of the processing direction (when going from the training stage to the inference stage), provided that the affine processing is invertible (which is normally the case). Thus, the learned neural network coefficients learned during the training are highly meaningful at the inference stage.

According to an embodiment, the neural network associated with the given flow block includes a depthwise separable convolution in the affine processing associated with the given flow block. The neural network may, for example, include the depthwise separable convolution instead of any standard convolution conventionally used in the neural networks. Applying a depthwise separable convolution, e.g. instead of any other standard convolution may reduce an amount of parameters of the flow block processing using the neural network. For example, applying a depthwise separable convolution in the neural network in combination with performing flow block processing directly in speech domain (or time domain) may reduce the number of the neural network parameters, e.g. from 80 millions to 20-50 millions, e.g. 25 millions. Thus, a less computationally heavy audio signal processing is provided.

According to an embodiment, the apparatus is configured to apply an invertible convolution, e.g. a 1x1 invertible convolution, to the flow block input signal, e.g. x, e.g. the stage input signal, of the given flow block, e.g. of the given stage of the affine processing, which may, for example, be the training audio signal or a signal derived from the training audio signal for a first stage, and which may, for example, be an output signal of a previous stage, for other subsequent stages following the first stage, to obtain the pre-processed flow block input signal, e.g. x', a pre-processed version of the flow block input signal, e.g. a convolved version of the flow block input signal. Regarding advantages of this functionality, reference is made to the above discussion of the apparatus for providing a processed audio signal.

According to an embodiment, the apparatus is configured to apply a nonlinear input compression, e.g. a nonlinear compression, e.g. a μ-law transformation, to the training audio signal, e.g. x, prior to processing the training audio signal, e.g. x. A nonlinear compression algorithm is applied to map small amplitudes of audio data samples to a wider and larger amplitudes to a smaller interval. This solves a problem of higher absolute amplitudes being underrepresented in clean data samples. This provides an effective pre-processing tool, e.g. an effective pre-processing technique for density estimation, which increases an enhancement outcome and an improved performance of the audio signal processing using the neural networks with the determined neural network parameters. Regarding advantages of this functionality, reference is also made to the above discussion of the apparatus for providing a processed audio signal. The nonlinear input compression may, for example, be inverse to the nonlinear expansion discussed above.

According to an embodiment, the apparatus is configured to apply a μ-law transformation, e.g. a μ-law function, as the nonlinear input compression to the training audio signal, e.g. x. A distribution of a compressed signal is learned, rather than to learn a distribution of a clean signal. The flow processing using the μ-law transformation is able to capture more fine grain speech parts with less background leaking. An improved enhancement performance is thus provided upon audio signal processing using the neural networks with the determined neural network parameters. Regarding advantages of this functionality, reference is also made to the above discussion of the apparatus for providing a processed audio signal. The μ-law transformation may, for example, be (at least approximately) inverse to the transform discussed above with respect to the apparatus for providing a processed audio signal. This provides an effective pre-processing tool, e.g. an effective pre-processing technique for density estimation, which increases an enhancement outcome and an improved performance of the audio signal processing using the neural networks with the determined neural network parameters.

According to an embodiment, the apparatus is configured to apply a transformation according to

$$g(x) = sgn(x) \cdot \frac{\ln(1+\mu|x|)}{\ln(1+\mu)}$$ to the training audio signal (x), wherein sgn() is a sign function; and μ is a parameter defining a level of compression. An increased enhancement outcome and an improved performance of the audio signal processing using the neural networks with the determined neural network parameters is provided. Regarding advantages of this functionality, reference is also made to the above discussion of the apparatus for providing a processed audio signal. The transformation may, for example, be (at least approximately) inverse to the transform discussed above with respect to the apparatus for providing a processed audio signal. This provides an effective pre-processing tool, e.g. an effective pre-processing technique for density estimation, which increases an enhancement outcome and an improved performance of the audio signal processing using the neural networks with the determined neural network parameters.

According to an embodiment, the apparatus is configured to apply a nonlinear input compression, e.g. a $\mu$-law transformation, to the distorted version of the training audio signal, e.g. y, prior to processing the training audio signal, e.g. x, in dependence on the distorted version of the training audio signal, e.g. y. Regarding advantages of this functionality, reference is made to the above discussion of the nonlinear compression algorithm used to process the training audio signal, e.g. x.

According to an embodiment, the apparatus is configured to apply a $\mu$-law transformation, e.g. a $\mu$-law function, as the nonlinear input compression to the distorted version of the training audio signal, e.g. y. Regarding advantages of this functionality, reference is made to the above discussion of applying the $\mu$-law transformation as the nonlinear compression algorithm used to process the training audio signal, e.g. x.

According to an embodiment, the apparatus is configured to apply a transformation according to

$$g(y) = sgn(y) \cdot \frac{\ln(1+\mu|y|)}{\ln(1+\mu)}$$ ; to the distorted version of the training audio signal, e.g., wherein sgn() is a sign function and $\mu$ is a parameter defining a level of compression. Regarding advantages of this functionality, reference is made to the above discussion of applying the same transformation as the nonlinear compression algorithm used to process the training audio signal, e.g. x.

According to an embodiment, the one or more flow blocks are configured to convert the training audio signal into the training result signal, which approximates a noise signal, or which comprises a noise-like characteristic. It has been found that neural networks associated with flow blocks and trained to convert the training audio signal into a noise signal (or at least into a noise-like signal), are well useable for speech enhancement (for example using "inverse" inference flow blocks, performing a functionality that is substantially inverse when compared to the functionality of the training flow blocks).

According to an embodiment, the one or more flow blocks are adjusted, e.g. by an appropriate determination of the neural network parameters, to convert the training audio signal into the training result signal under the guidance of the distorted version of the training audio signal e.g. a speech signal, using the affine processing of sample values of the training audio signal, or of a signal derived from the training audio signal. The processing parameters, e.g. scaling factors, e.g. s, and e.g. shift values, e.g. t, of the affine processing are determined on the basis of, e.g. time-domain, sample values of the distorted version of the training audio signal using the neural network. It has been found that the neural networks used to adjust the one or more flow blocks (e.g. by providing scaling values and/or shift values) are well useable for an audio enhancement in an inference apparatus (e.g. the apparatus for providing a processed audio signal discussed herein).

According to an embodiment, the apparatus is configured to perform a normalizing flow processing, in order to derive the training result signal from the training audio signal, e.g. under the guidance of the distorted version of the training audio signal. Normalizing flow processing provides an ability to successfully generate high quality samples of the training result signal. Also, the normalizing flow processing has been found to provide good results for speech enhancement, using neural network parameters obtained by the training.

An embodiment according to the invention creates a method, as set forth in appended independent claim 38, for providing neural network parameters, like e.g. edge weights, e.g. $\theta$, of neural networks providing scaling factors, e.g. s, and shift values, e.g. t, on the basis of a portion, e.g. $x_1$, of a clean audio signal, or a processed version thereof, and on the basis of a distorted audio signal, e.g. y, in a training mode, which may correspond to edge weights of neural networks providing scaling factors, e.g. s, and shift values, e.g. t, on the basis of a portion of a noise signal, e.g. z, or a processed version thereof, and on the basis of an input audio signal, e.g. y, in an inference mode, for an audio processing, e.g. speech processing. The method comprises processing, e.g. in multiple iterations, a training audio signal, e.g. a speech, signal, e.g. x, or a processed version thereof, using one or more flow blocks, e.g. using a flow block system, e.g. including affine coupling layers, e.g. including invertible convolution, in order to obtain a training result signal, which should be, for example, equal to a noise signal, e.g. z. The method comprises adapting the processing performed using the one or more flow blocks in dependence on a distorted version of the training audio signal, e.g. y, e.g. the distorted audio signal, e.g. a noisy speech signal y, and using a neural network. The neural network, for example, provides one or more processing parameters for the flow block, e.g. parameters of an affine processing, like a scaling factor and a shift value, on the basis of the distorted version of the training audio signal, and preferably also in dependence on at least a part of the training audio signal, or a processed version thereof. The method comprises determining the neural network parameters of the neural network, e.g. using an evaluation of a cost function; e.g. using a parameter optimization procedure, such that a characteristic, e.g. a probability distribution, of the training result signal approximates or comprises a predetermined characteristic, e.g. a noise-like characteristic; e.g. a Gaussian distribution.

The method according to this embodiment is based on the same considerations as an apparatus for providing neural network parameters described above. Moreover, this disclosed embodiment may optionally be supplemented by any other features, functionalities and details disclosed herein in connection with the apparatus for providing neural network parameters, both individually and taken in combination.

An embodiment according to the invention creates a computer program, as set forth in appended independent claim 39, having a program code which, when the program is executed by a computer, causes the computer to carry out the method according to any of the embodiments described above.

The apparatus for providing a processed audio signal, the method for providing a processed audio signal, the apparatus for providing neural network parameters, the method for providing neural network parameters and the computer program for implementing these methods may optionally be supplemented by any of the features, functionalities and details disclosed herein (in the entire document), both individually and taken in combination.

Brief description of the Figures

Preferred embodiments of the present application are set out below on the basis of the figures among which

Fig 1 shows a schematic representation of an apparatus for providing a processed signal in accordance with an embodiment;

Fig 2 shows a schematic representation of an apparatus for providing a processed signal in accordance with an embodiment;

Fig 3 shows a schematic representation of an inference flow block of an apparatus for providing a processed signal in accordance with an embodiment;

Fig 4 shows a schematic representation of an apparatus for providing a processed signal in accordance with an embodiment;

Fig 5 shows a schematic representation of an apparatus for providing neural network parameters in accordance with an embodiment;

Fig 6 shows a schematic representation of an apparatus for providing neural network parameters in accordance with an embodiment;

Fig 7 shows a schematic representation of a training flow block of an apparatus for providing neural network parameters in accordance with an embodiment;

Fig 8 shows a schematic representation of an apparatus for providing neural network parameters in accordance with an embodiment;

Fig 9 shows an illustration of providing a nonlinear input companding (compression and expansion) in an apparatus for providing a processed signal in accordance with an embodiment or in an apparatus for providing neural network parameters according to an embodiment;

Fig 10 shows a flow block system for audio signal processing in accordance with an embodiment;

Fig 11 shows a table illustrating a comparison of the apparatuses and methods in accordance with an embodiment with conventional techniques;

Fig 12 shows a graphic representation of a performance of the apparatuses and methods in accordance with an embodiment.

Detailed description

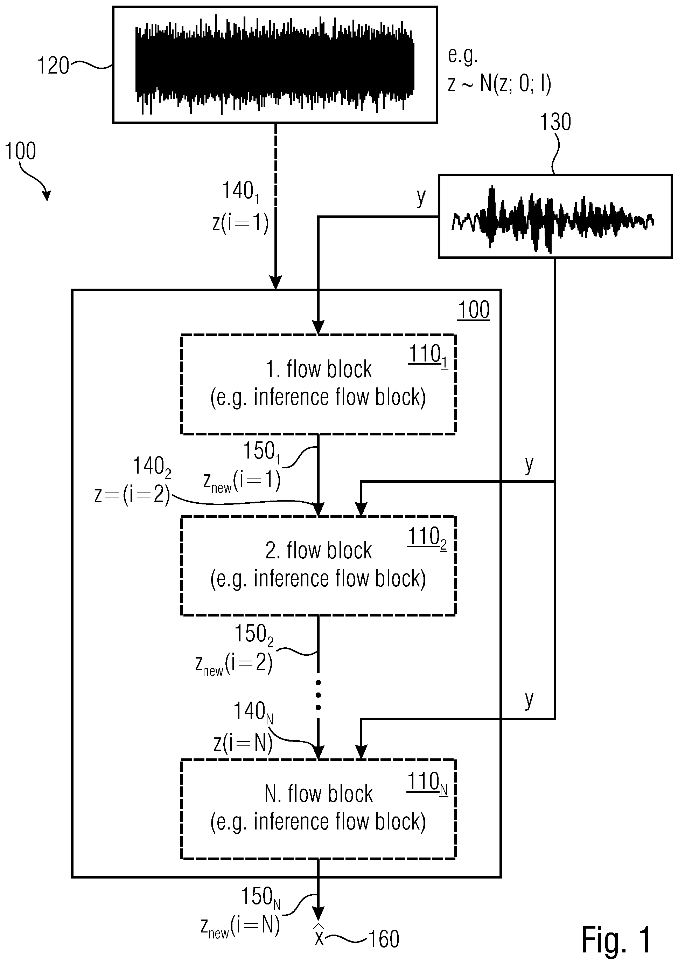

Fig. 1 shows a schematic representation of an apparatus 100 for providing a processed audio signal in accordance with an embodiment.

The apparatus 100 is configured to provide a processed, e.g. enhanced, audio signal 160 on the basis on an input audio signal y, 130. Processing is performed, for example, in N flow blocks, e.g. inference flow blocks $110_{1...N}$, associated with neural networks (not shown). The flow blocks $110_{1...N}$ are configured to process incoming audio signals, e.g. speech signals.

The input audio signal y, 130 is introduced into the apparatus 100 to be processed. The input audio signal y is, for example, a noisy input signal, or e.g. a distorted audio signal. The input audio signal y, 130 may, for example, be defined as $y = x + n$, wherein x is a clean part of the input signal, and n is noisy background. The input audio signal y, 130 may be represented, for example, as time domain audio samples, e.g. noisy time domain speech samples.

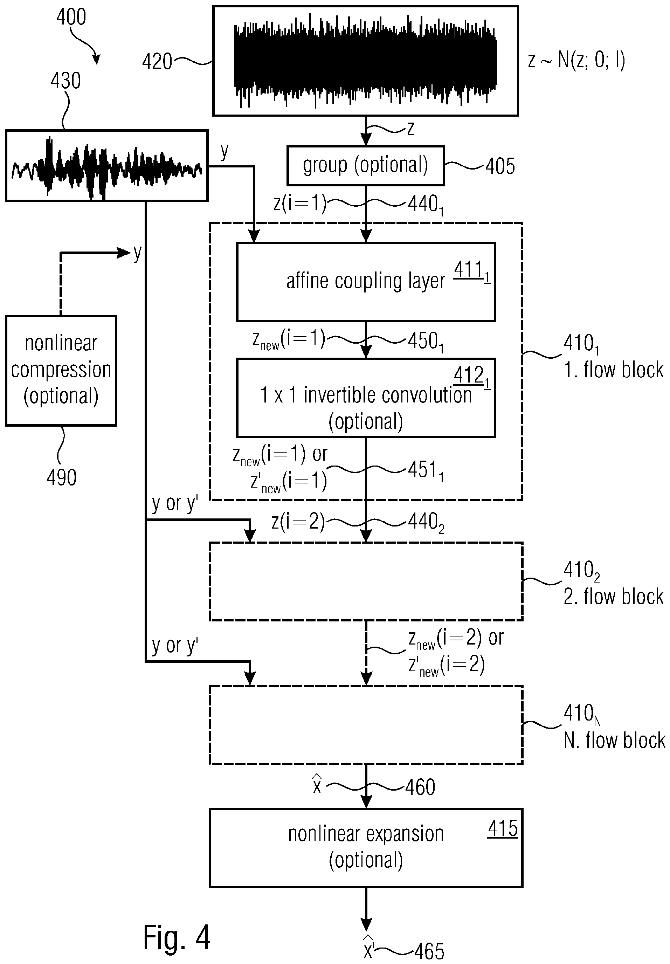

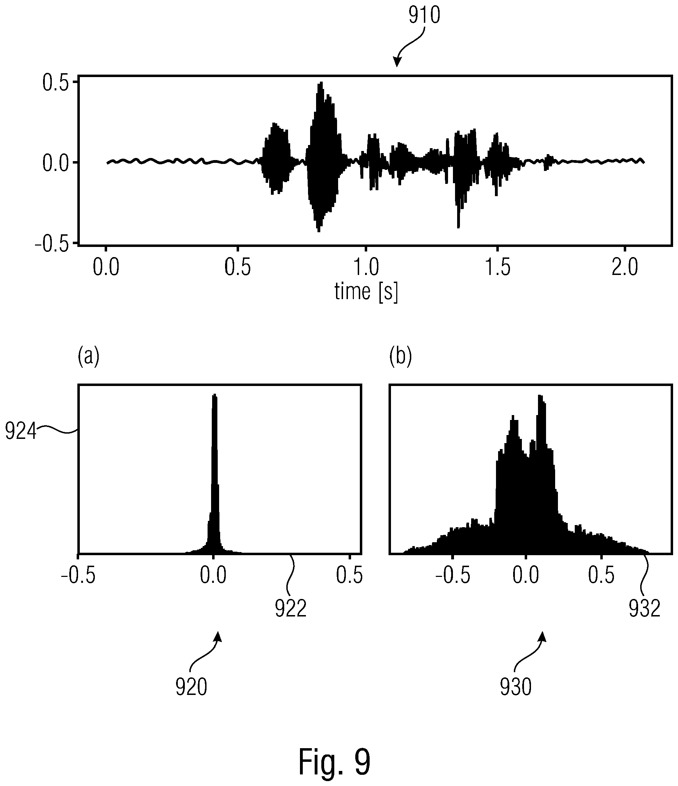

The input audio signal y, 130 may optionally be pre-processed, e.g. compressed, e.g. as shown in Fig. 4, e.g. by a nonlinear compression, e.g. as the nonlinear compression described with the reference to Fig. 9.

The input audio signal y and correspondingly its clean part x may optionally be grouped into a vector representation (or into a matrix representation).

A noise signal z, 120 (or a pre-processed version $z(i=1)$) thereof, is introduced into a first flow block $110_1$ of the apparatus 100 together with the input audio signal y, 130.

The noise signal z, 120 is, for example, generated at the apparatus 100, or, e.g. generated externally and provided to the apparatus 100. The noise signal z, 120 may be stored in the apparatus 100, or may be provided to the apparatus from an external storage, e.g. a remote server. The noise signal z, 120 is defined, for example, as being sampled from a normal distribution of zero mean and unit variance, e.g. $z \sim N(z; 0; I)$. The noise signal z, 120 is represented, for example, as noise samples, e.g. as time domain noise samples.

The signal z may be pre-processed into the noise signal $z(i=1)$ prior to coming into the apparatus 100 or within the apparatus 100.

For example, the noise samples z of the noise signal z, or the noise samples of the pre-processed noise signal $z(i=1)$, may optionally be grouped into groups of samples, e.g. into groups of 8 samples, e.g. grouped into a vector representation (or into a matrix representation).

Optional preprocessing steps are not shown in Fig. 1.

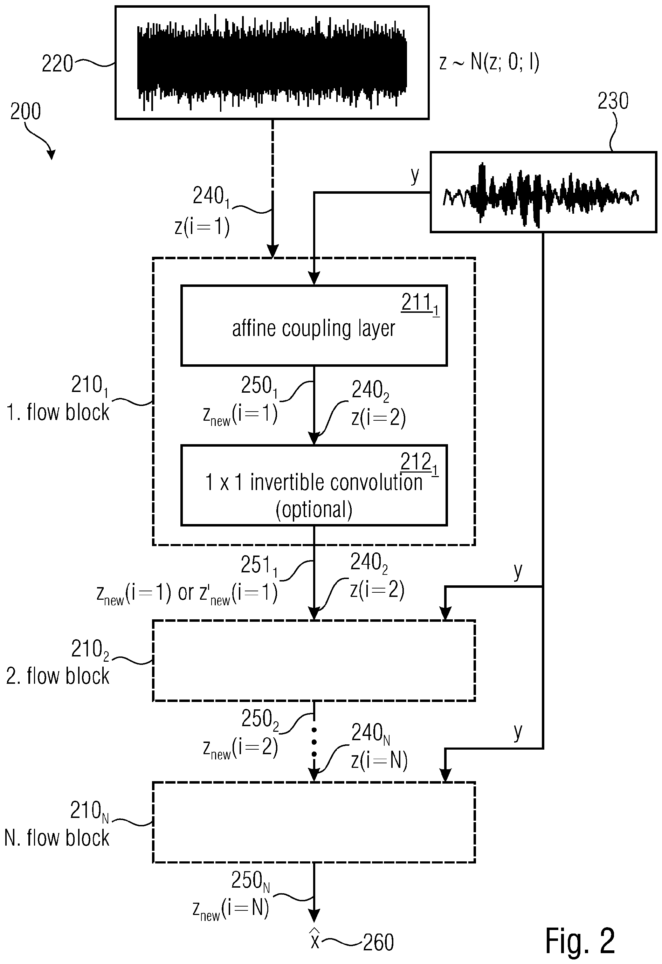

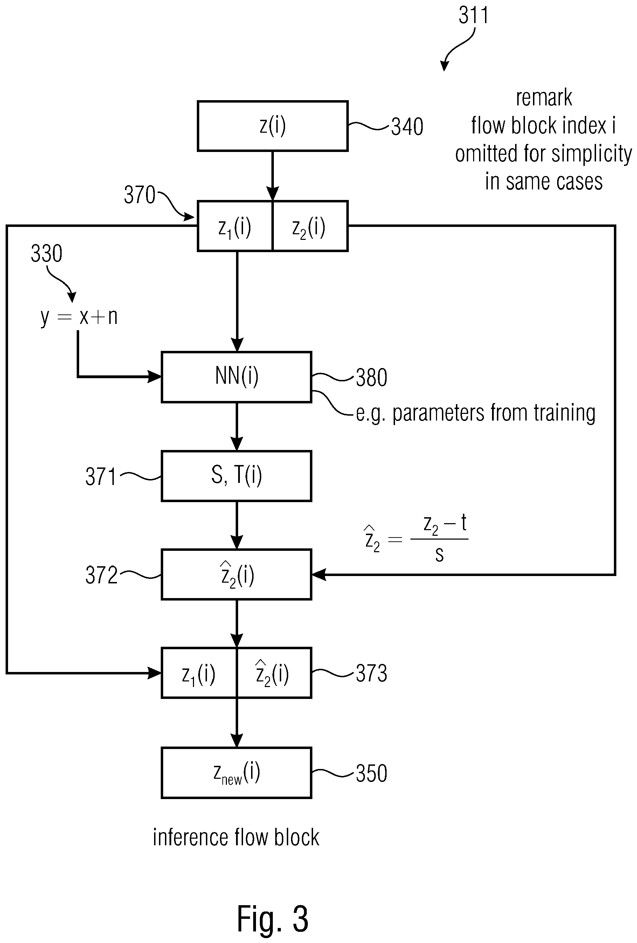

The noise signal $z(i=1)$, $140_1$ (or, alternatively, the noise signal z) is introduced into the first flow block $110_1$, e.g. an inference flow block, of the apparatus 100, together with the input audio signal y, 130. The processing of the noise signal $z(i=1)$, $140_1$ and of the input audio signal y in the first flow block $110_1$ and in subsequent flow blocks of the flow blocks $110_{1...N}$ will be described further with the references to Figs. 2 and 3. The input signal $z(i)$ is processed in the flow blocks $110_{1...N}$ (or, generally, $110_i$) on the basis of, e.g. conditioned by, the input audio signal y, 130. The input audio signal y, 130 is, for example, introduced in each flow block of the flow blocks $110_{1...N}$.

After processing in the first flow block $110_1$ of the noise signal $z(i=1)$, $140_1$ an output signal $z_{new}(i=1)$, $150_1$ is outputted. The signal $z_{new}(i=1)$, 150, is an input signal $z(i=2)$, $140_2$ for the second flow block $110_2$ of the apparatus 100 together with the input audio signal y, 130. An output signal $z_{new}(i=2)$, $150_2$ of the second flow block $110_2$ is an input signal $z(i=3)$ of the third block etc. The last N flow block $110_N$ has a signal $z(i=N)$, $140_N$ as an input signal and outputs a signal $z_{new}(i=N)$, $150_N$, which forms an output signal 160 of the apparatus 100. The signal $z_{new}(i=N)$, $150_N$ forms a processed audio signal $\hat{x}$, 160 e.g. an enhanced audio signal, which represents, for example, an enhanced clean part of the input audio signal y, 130.

The clean part x of the input audio signal y, 130 is not introduced separately into the apparatus 100. The apparatus 100 processes the, e.g. generated, noise signal z, 120 based on the input audio signal y, 130 to receive, e.g. generate, e.g. output, an enhanced audio signal, being e.g. an enhancement of the clean part of the input audio signal y, 130.

Generally speaking, it can be said that the apparatus is configured to process a noise signal (e.g. the noise signal z), or a signal derived from the noise signal (e.g. the pre-processed noise signal $z(i=1)$), using one or more flow blocks $110_1$ to $110_N$, in order to obtain the processed (e.g. enhanced) audio signal 160. Generally speaking, the apparatus 100 is configured to adapt a processing performed using the one or more flow blocks $110_1$ to $110_N$ in dependence on the input audio signal (e.g. the distorted audio signal y) and using a neural network (which may, for example, provide one or more processing parameters for the flow block, e.g. parameters of an affine processing, like a scaling factor and a shift value, on the basis of the distorted audio signal, and preferably also in dependence on at least a part of the noise signal, or a processed version thereof).

However, it should be noted that the apparatus 100 may optionally be supplemented by any of the features, functionalities and details disclosed herein, both individually or taken in combination.

Fig. 2 shows a schematic representation of an apparatus 200 for providing a processed signal in accordance with an embodiment.

In an embodiment, features, functionalities and details of the apparatus 100 shown in Fig. 1 may optionally be introduced into the apparatus 200 (both individually and in combination), or vice versa.

The apparatus 200 is configured to provide a processed, e.g. enhanced, audio signal $\hat{x}$, 260 on the basis on an input audio signal y, 230. Processing is performed in N flow blocks, e.g. inference flow blocks $210_{1...N}$, associated with neural networks (not shown). The flow blocks $210_{1...N}$ are configured to process incoming audio signals, e.g. speech signals.

The input audio signal y, 230 is introduced into the apparatus 200 to be processed. The input audio signal y is, for example, a noisy input signal, or e.g. a distorted audio signal. The input audio signal y, 230 is, for example, defined as $y = x + n$, wherein x is a clean part of the input signal, and n is noisy background. The input audio signal y, 230 may be represented, for example, as time domain audio samples, e.g. noisy time domain speech samples.

The input audio signal y, 230 may optionally be pre-processed, e.g. compressed, e.g. as shown in Fig. 4, e.g. by a nonlinear compression, e.g. as the nonlinear compression described with the reference to Fig. 9.

The input audio signal y and correspondingly its clean part x may optionally be grouped into a vector representation (or into a matrix representation).

A noise signal z, 220 (or a pre-processed version z(i=1) thereof is introduced into a first flow block $210_1$ of the apparatus 200 together with the input audio signal y, 230. The noise signal z, 220 may be, for example, generated at the apparatus 200, or, e.g. generated externally and provided to the apparatus 200. The noise signal z may be stored in the apparatus 200 or provided to the apparatus from an external storage, e.g. a remote server. The noise signal z, 220 may be defined, for example, as being sampled from a normal distribution of zero mean and unit variance, e.g. $z \sim N(z; 0; I)$. The noise signal z, 220 may be represented, for example, as noise samples, e.g. as time domain noise samples.

The signal z, 220 may be pre-processed prior to its introducing into the apparatus 200. For example, the noise samples of the noise signal z, 220 may be optionally grouped into groups of samples, e.g. into groups of 8 samples, e.g. grouped into a vector representation (or into a matrix representation). Optional preprocessing steps are not shown in Fig. 2.

The noise signal z(i=1), $240_1$ is introduced into the first flow block $210_1$, e.g. an inference flow block, of the apparatus 200, together with the input audio signal y, 230. The noise signal z(i), $240_1$ is processed in the flow blocks $110_{1...N}$ on the basis of, e.g. conditioned by, the input audio signal y, 230. The input audio signal y, 230 is introduced in each flow block of the flow blocks $110_{1...N}$.

The processing in the first flow block $210_1$ is performed, for example, in two steps, e.g. in two blocks (or using two functional blocks), e.g. in two operations: affine coupling layers $211_1$ and, optionally, 1x1 invertible convolution $212_1$.

In the affine coupling layer block $211_1$, the noise signal z(i=1), $240_1$ is processed on the basis of, e.g. conditioned by, the input audio signal y, 230, which is introduced into the affine coupling layer block $211_1$ of the first flow block $210_1$. An example of the processing of the noise signal z(i=1), $240_1$ and of the input audio signal y, 230 in the affine coupling layer block $211_1$ of the first flow block $210_1$ as well as in affine coupling layer blocks $211_{1...N}$ of the subsequent flow blocks of the flow blocks $210_{1...N}$ will be described further with the reference to Fig. 3. After processing in the affine coupling layer block $211_1$ of the first flow block $210_1$ an output signal $z_{new}(i=1)$, $250_1$ is outputted.

In the invertible convolution block 212, samples of the output signal $z_{new}(i=1)$, 250, are mixed to receive a processed flow block output signal $z'_{new}(i=1)$. The invertible convolution block $212_1$, for example, reverses (or, generally, changes) ordering of channels at an output of the affine coupling layer block $211_1$. The invertible convolution block $212_1$ may be, for example, performed using a weight matrix W, e.g. as a random rotation matrix, or e.g. a pseudo-random but deterministic rotation matrix or a permutation matrix. The first flow block $210_1$ provides the output signal $z_{new}(i=1)$ or the processed flow block output signal $z'_{new}(i=1)$ as an output flow block signal $251_1$, which is, correspondingly, an input signal z(i=2), $240_2$ for the second flow block $210_2$ of the apparatus 200 together with the input audio signal y, 230. An output signal $z_{new}(i=2)$, $250_2$ of the second flow block $210_2$ is an input signal z(i=3) of the third block etc. The last N flow block $210_N$ has a signal z(i=N), $240_N$ as an input signal and outputs a signal $z_{new}(i=N)$, $250_N$ which forms an output signal 260 of the apparatus 200. The signal $z_{new}(i=N)$, $250_N$ forms a processed audio signal $\hat{x}$, 260 e.g. an enhanced audio signal, which represents, for example, an enhanced clean part of the input audio signal y, 230.

Processing in all subsequent flow blocks of the flow blocks $210_{1...N}$ may be performed in two steps, e.g. in two blocks, e.g. in two operations: affine coupling layers and 1x1 invertible convolution. These two steps may for example be the same as described related to the first flow block $210_1$ (wherein, for example, different neural net parameters may be used in different flow blocks).

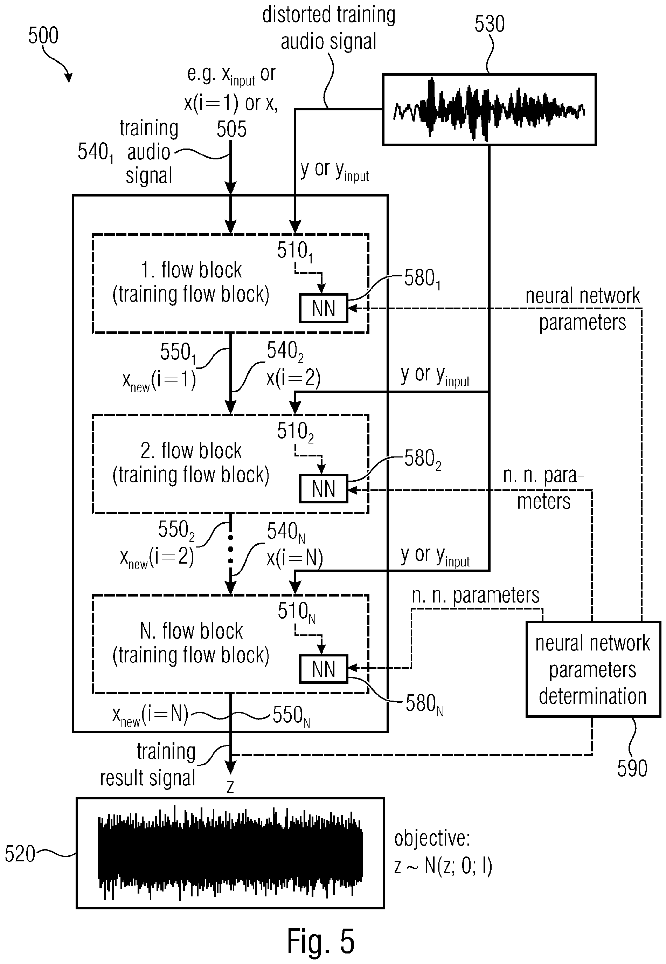

The affine coupling layer blocks $211_{1...N}$ of the flow blocks $210_{1...N}$ are associated with (or comprise) corresponding neural networks (not shown), the networks associated with the flow blocks $210_{1...N}$, as indicated above. The parameters of the networks are, for example, predetermined during the training of the networks by the apparatuses (or functionalities) described with the reference to Figs. 5-8.

The clean part x of the input audio signal y, 230 is not introduced separately into the apparatus 200. The apparatus 200 processes the, e.g. generated, noise signal z, 220 based on the input audio signal y, 230 to receive, e.g. generate, e.g. output, an enhanced audio signal, being e.g. an enhancement of the clean part of the input audio signal y, 230.

However, it should be noted that the apparatus 200 may optionally be supplemented by any of the features, functionalities and details disclosed herein, both individually or taken in combination.

Fig. 3 shows a schematic representation of a flow block 311, e.g. an inference flow block, in accordance with an embodiment.

The flow block 311 may be a part of processing, for example, by the apparatus 100 shown in Fig. 1 or by the apparatus 200, shown in Fig. 2. The flow blocks of the apparatus 100, shown in Fig. 1, may have the same structure as flow block 311 shown in Fig. 3 or may comprise the functionality (and/or structure) of the flow block 311 (e.g. together with additional functionalities). The affine coupling layer blocks of the flow blocks of the apparatus 200, shown in Fig. 2, may have the same structure as flow block 311 shown in Fig. 3, or may comprise the functionality (and/or structure) of the flow block 311 (e.g. together with additional functionalities).

The flow block index i is partly omitted in Fig. 3 and in the following description for simplicity.

An input signal 340 is introduced into the flow block. The input signal 340 may represent a noise signal (or a processed version thereof) $z(i)$, for example as illustrated in an embodiment shown in Fig. 1. For example, the input signal 340 may be represented in the form of time domain samples. The input signal 340 may optionally be grouped into a vector representation (or into a matrix representation).

The input signal 340 is splitted (370) into two parts $z_1(i)$ and $z_2(i)$, e.g. randomly or in a pseudo-random but deterministic manner, or in a predetermined manner (e.g. into two subsequent portions).

The first part $z_1(i)$ (which may, for example, comprise a subset of time domain samples of the input signal 340) is introduced into a neural network 380 (also designated as NN(i)), associated with a flow block 311 (having flow block index i). The neural network 380 could be, for example, a neural network associated with any of the flow blocks $110_{1...N}$ of the apparatus 100 shown in Fig. 1. The neural network 380 could be, for example, a neural network associated with any of the affine coupling layer(s) blocks of the flow blocks $210_{1...N}$ of the apparatus 200 shown in Fig. 2. The parameters of the neural network 380 could be, for example, predetermined, e.g. in the training of the network, by the apparatuses described with the reference to Figs. 5-8.

The first part $z_1(i)$ is introduced into a neural network 380 together with an input audio signal y, 330. The input audio signal y, 330 is, for example, a noisy input signal, or e.g. a distorted audio signal. The input audio signal y, 330 is, for example, defined as $y = x + n$, wherein x is a clean part of the input audio signal y, 330, and n is a noisy background.

The input audio signal y, 330 may optionally be pre-processed, e.g. compressed, e.g. as shown in Fig. 4, e.g. by a nonlinear compression, e.g. as the nonlinear compression described with the reference to Fig. 9.

The input audio signal y and correspondingly its clean part x may optionally be grouped into a vector representation (or into a matrix representation).

The neural network 380 processes the first part $z_1(i)$ and the input audio signal y, 330 e.g. processes the first part $z_1(i)$ depending on, e.g. conditioned by, the input audio signal y, 330. The neural network 380 determines processing parameters, e.g. a scaling factor, e.g. S, and a shift value, e.g. T, which are output (371) of the neural network 380. The determined parameters S, T have, for example, a vector representation. For example, different scaling values and/shift values may be associated with different samples of the second part $z_2(i)$ The second part $z_2(i)$ of the noise signal z (which may, for example, comprise a subset of time domain samples of the input signal 340) is processed (372) using the determined parameters S, T. The processed (affinely processed) second part second part $\widehat{z_2}$ (i) is defined by the equation:

$$\widehat{z_2} = \frac{z_2 - t}{s}. \qquad (1)$$

In this equation, s may be equal to S (e.g. if only a single scale factor value is provided by the neural net), or s may be an element of a vector S of scale factor values (e.g. if a vector of scale factor values is provided by the neural net). Similarly, t may be equal to T (e.g. if only a single shift value is provided by the neural net), or t may be an element of a vector T of shift values (e.g. if a vector of scale factor values is provided by the neural net, entries of which are associated with different sample values of $z_2(i)$).

For example, the above equation for $\widehat{z_2}$ may be applied in an element-wise manner on individual elements or on groups of elements of the second part $z_2$. However, if only a single value s and a single value t is provided by the neural net, this single value s and this single value t may be applied to all elements of the second part $z_2$ in the same manner.

The unprocessed first part $z_1(i)$ of the signal z and the processed part $\widehat{z_2}$ of the signal z are combined (373) to form signal $z_{new}$, 350 processed at the flow block 311. This output signal $z_{new}$ is introduced into the next, e.g. consequent or subsequent flow block, e.g. into the second flow block, e.g. into the flow block i plus 1. If i=N, the signal $z_{new}$, 350 is an output signal, e.g. x, of a corresponding apparatus.

However, it should be noted that the flow block 311 may optionally be supplemented by any of the features, functionalities and details disclosed herein, both individually or taken in combination.

Also, the flow block 311 may optionally be used in any of the embodiments disclosed herein.

Fig. 4 shows a schematic representation of an apparatus 400 for providing a processed signal in accordance with an embodiment.

In an embodiment, features, functionalities and details of the apparatus 100 shown in Fig. 1 or of the apparatus 200 shown in Fig. 2 may optionally be introduced into the apparatus 400 (both individually and in combination), or vice versa.

The flow block 311 shown in Fig. 3, could be, for example, used in the apparatus 400 in an embodiment.

The apparatus 400 is configured to provide a processed, e.g. enhanced, audio signal on the basis on an input audio signal y, 430. Processing is performed in N flow blocks, e.g. inference flow blocks $410_{1...N}$, associated with neural networks (not shown). The flow blocks $410_{1...N}$ are configured to process incoming audio signals, e.g. speech signals.

The input audio signal y, 430 is introduced into the apparatus 400 to be processed. The input audio signal y, 430 is, for example, a noisy input signal, or e.g. a distorted audio signal. The input audio signal y is, for example, defined as $y = x + n$, wherein x is a clean part of the input signal, and n is noisy background. The input audio signal y, 430 may be represented, for example, as time domain audio samples, e.g. noisy time domain speech samples.

The input audio signal y, 430 may optionally be pre-processed, e.g. compressed, e.g. by a nonlinear compression 490.

The nonlinear compression step 490 is optionally applied to the input audio signal y, 430. The step 490 is optional, as it is shown in Fig. 4. The nonlinear compression step 490 could be applied, for example, to compress the input audio signal y, 430. In an embodiment, the nonlinear input compression step 490 is as described with the reference to Fig. 9.

In an embodiment, the nonlinear compression 490 may be represented, for example, by a $\mu$-law compression, or e.g. a $\mu$-law transformation of the input audio signal y, 430. For example:

$$g(y) = sgn(y) \cdot \left(\frac{\ln(1+\mu|y|)}{\ln(1+\mu)}\right); \qquad\qquad (2)$$

wherein sgn() is a sign function;

$\mu$ is a parameter defining a level of compression.

The parameter $\mu$ may be set, for example, to 255, which is a common values used in a telecommunication. The input audio signal y and correspondingly its clean part x may optionally be grouped into a vector representation (or into a matrix representation).

A noise signal z, 420 is, for example, an input signal to the apparatus 400 or may alternatively be generated by the apparatus 400. Prior to introducing the noise signal z, 420 into the first flow block $410_1$ of the apparatus 400, audio samples of the noise signal z are grouped (e.g. in the grouping block 405) into groups of samples, e.g. into groups of 8 samples, e.g. grouped into a vector representation (or into a matrix representation). The grouping step 405 is an optional step, as shown in Fig. 4.

An (optionally grouped) noise signal z(i), $440_1$ is introduced into a first flow blocks $410_1$ of the apparatus 400 together with the input audio signal y, 430 or together with the pre-processed, e.g. compressed, input audio signal y'. The noise signal z, 420 is, for example, generated at the apparatus 400 (or by the apparatus 400), or, e.g. generated externally and provided to the apparatus 400. The noise signal z may be stored in the apparatus 400 or provided to the apparatus from an external storage, e.g. a remote server. The noise signal z, 420 is defined, for example, as being sampled from a normal distribution (or Gaussian distribution) of zero mean and unit variance, e.g. z - N(z; 0; I). The noise signal z, 420 is represented, for example, as noise samples, e.g. as time domain noise samples.

An (optionally grouped) noise signal z(i), $440_1$ is introduced into a first flow block $410_1$ of the apparatus 400 together with the input audio signal y, 430. The noise signal z(i) is (e.g. successively or in a step-wise manner) processed (or processed further) in the flow blocks $410_{1...N}$ on the basis of, e.g. conditioned by, the input audio signal y, 430. The input audio signal y, 430 is introduced, for example, in each flow block of the flow blocks $410_{1...N}$.

The processing in the first flow block $2410_1$ is performed in two steps, e.g. in two blocks, e.g. in two operations: affine coupling layers $411_1$ and, optionally, 1x1 invertible convolution $412_1$.

In the affine coupling layer block $411_1$, the noise signal z(i=1), 440, is processed on the basis of, e.g. conditioned by, the input audio signal y, 430, which is introduced into the affine coupling layer block $411_1$ of the first flow block $410_1$. It should be noted that an affine coupling layer block may, for example, comprise a single affine coupling layer, or a plurality of affine coupling layer. The processing of the noise signal z(i=1), 440, and the input audio signal y, 430 in the affine coupling layer block $411_1$ of the first flow block $410_1$ as well as in affine coupling layer blocks $411_{2...N}$ of the subsequent flow blocks $410_{2...N}$ of the flow blocks $410_{1...N}$ may be performed as described with the reference to Fig. 3. After processing in the affine coupling layer block $411_1$ of the first flow block $410_1$ an output signal $z_{new}(i=1)$, $450_1$ is

outputted.

In the invertible convolution block $412_1$, samples of the output signal $z_{new}(i=1)$, $450_1$ are mixed (e.g. re-ordered, or subjected to an invertible matrix operation, like a rotation matrix) to receive a processed flow block output signal $z'_{new}(i=1)$. The invertible convolution block $412_1$, for example, reverses ordering of channels (or of samples) at an output of the affine coupling layer block $411_1$. The invertible convolution block 412, may be, for example, be performed using a weight matrix W, e.g. as a random (or pseudo-random but deterministic) rotation matrix or as a random (or pseudo-random but deterministic) permutation matrix.

The first flow block $410_1$ provides the output signal $z_{new}(i=1)$ or the processed flow block output signal $z'_{new}(i=1)$ as an output flow block signal $451_1$, which is, correspondingly, an input signal $z(i=2)$, $440_2$ for the second flow block $410_2$ of the apparatus 400 together with the input audio signal y, 430. An output signal $z_{new}(i=2)$ or $z'_{new}(i=2)$, $450_2$ of the second flow block $410_2$ is an input signal $z(i=3)$ of the third block etc. The last N flow block $410_N$ has a signal $z(i=N)$, $440_N$ as an input signal and outputs a signal $z_{new}(i=N)$ or $z'_{new}(i=N)$, $450_N$ which forms an output signal 460 of the apparatus 400. The signal $z_{new}(i=N)$ or $z'_{new}(i=N)$, $450_N$ forms a processed audio signal x, 460 e.g. an enhanced audio signal, which represents, for example, an enhanced clean part of the input audio signal y, 430. In an embodiment, the processed audio signal $\hat{x}$ 460 is, for example an output signal of the apparatus 400.

Processing in all subsequent flow blocks of the flow blocks $410_{1...N}$ is, for example, performed in two steps, e.g. in two blocks, e.g. in two operations: affine coupling layers and 1x1 invertible convolution. These two steps are, for example, (e.g. qualitatively) the same as described related to the first flow block $410_1$. However, different neural network coefficients for the neural networks for determining the scaling values and the shift values may be used in different processing stages. Moreover, the invertible convolutions may also be different in different stages (but may also be equal in the different stages).

The affine coupling layer blocks of the flow blocks $410_{1...N}$ are associated with corresponding neural networks (not shown), the neural networks associated with the flow blocks $410_{1...N}$, as indicated.

A nonlinear expansion step 415 is optionally applied to the processed audio signal $\hat{x}$ 460. The step 415 is optional, as it is shown in Fig. 4. The nonlinear expansion step 415 could be applied, for example, to expand the processed audio signal $\hat{x}$ 460 to a regular signal. In an embodiment, the nonlinear expansion may be represented, for example, by an inverse $\mu$-law transformation of the processed audio signal $\hat{x}$ 460. For example:

$$g^{-1}(\hat{x}) = sgn(\hat{x}) \cdot \left(\frac{(1+\mu)^{\hat{x}} - 1}{\mu}\right); \qquad (3)$$

wherein sgn() is a sign function;
$\mu$ is a parameter defining a level of expansion.

The parameter $\mu$ may be set, for example, to 255, which is a common values used in a telecommunication. The nonlinear expansion step 415 could be applied, for example, when a nonlinear compression was used as a pre-processing step during training of the neural networks associated with the flow blocks $410_{1...N}$.

It should be noted that the clean part x of the input audio signal y, 430 is not introduced separately into the apparatus 400. The apparatus 400 processes the, e.g. generated, noise signal z, 420 based on the input audio signal y, 430 to receive, e.g. generate, e.g. output, an enhanced audio signal, being e.g. an enhancement of the clean part of the input audio signal y, 430.

However, it should be noted that the apparatus 400 may optionally be supplemented by any of the features, functionalities and details disclosed herein, both individually or taken in combination.

Fig. 5 shows a schematic representation of an apparatus 500 for providing neural network parameters in accordance with an embodiment.

The apparatus 500 is configured to provide neural network parameters (e.g. for use by the neural networks 380, NN(i) associated with the flow blocks $110_{1...N}$, $210_{1...N}$, $410_{1...N}$) on the basis of a training audio signal x, 505, e.g. a clean audio signal, and a distorted version of the training audio signal y, 530, e.g. a distorted audio signal. Processing is performed, for example, in N flow blocks, e.g. training flow blocks $510_{1...N}$, associated with neural networks $580_{1...N}$. The training flow blocks $510_{1...N}$ are, for example, configured to process incoming audio signals, e.g. speech signals.

The distorted version of the training audio signal y, 530 is introduced into the apparatus 500 to be processed (or generated by the apparatus 500). The distorted audio signal y is, for example, a noisy input signal. The distorted training audio signal y, 530 is defined, for example, as $y = x + n$, wherein x is a clean part of the input signal, e.g. a training input signal x, 505, and n is noisy background. The distorted training audio signal y, 530 may be represented, for example, as time domain audio samples, e.g. noisy time domain speech samples.

The training audio signal x and correspondingly the distorted version of the training audio signal y may optionally be grouped into a vector representation (or into a matrix representation).

The apparatus 500 is configured to provide neural network parameters for the neural networks $580_{1...N}$ (which may, for example, correspond to the neural networks 380, NN(i), or which may even be equal to respective ones of the the neural networks 380m NN(i)) based on a clean-noisy (x-y) pair, which follows the training flow blocks $510_{1...N}$, to be mapped to a distribution, e.g. a Gaussian distribution, of a training result audio signal 520, e.g. a noise signal.

A training audio signal x, 505 is introduced into a first flow block $510_1$ of the apparatus 500 together with the distorted training audio signal y, 530. The training audio signal x, 505 is represented, for example, as audio samples, e.g. as time domain samples.

The training audio signal x may (optionally) be pre-processed into the training audio signal x(i=1) prior to coming into the apparatus 500. For example, the audio samples x of the noise signal x may be grouped into groups of samples, e.g. into groups of 8 samples, e.g. grouped into a vector representation (or into a matrix representation). Optional preprocessing steps are not shown in Fig. 1.

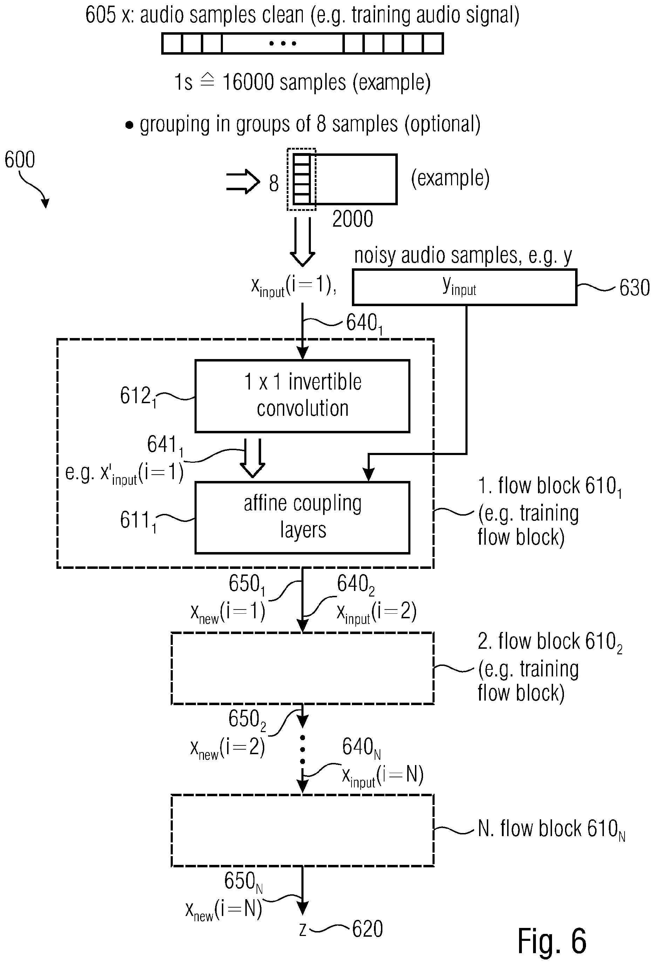

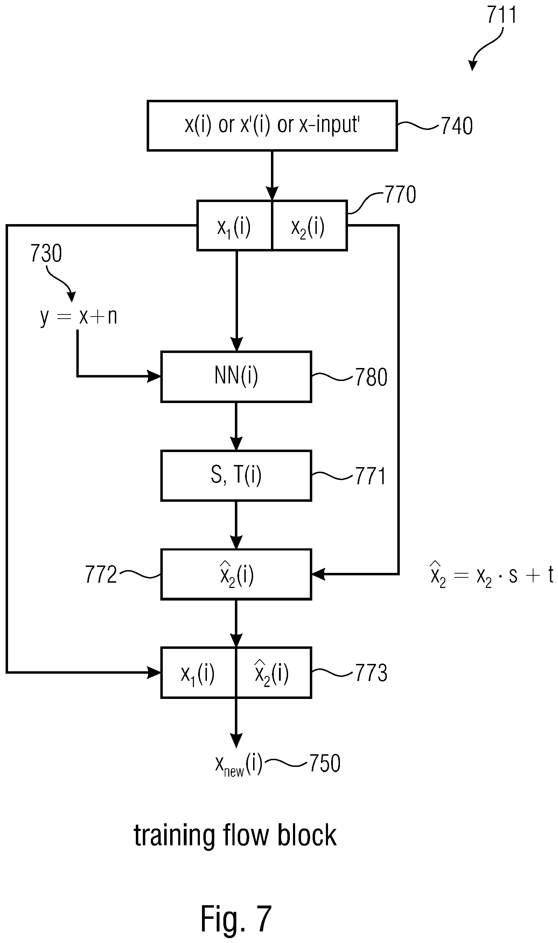

The training audio signal x(i=1), $540_1$ is introduced into the first flow block $510_1$, e.g. a training flow block, of the apparatus 500, together with the distorted training audio signal y, 530. The processing of the training audio signal x(i=1), $540_1$ and the distorted training audio signal y, 530 in the first flow block $510_1$ and subsequent flow blocks of the flow blocks $510_{1...N}$ will be described further with the references to Figs. 6 and 7. The training audio signal x(i=1), $540_1$ is (e.g. successively or step-wisely) processed (or processed further) in the flow blocks $510_{1...N}$ on the basis of, e.g. conditioned by, the distorted training audio signal y, 530. The distorted training audio signal y, 530 is, for example, introduced in each flow block of the flow blocks $510_{1...N}$.

After processing in the first flow block $510_1$ of the training audio signal x(i=1), $540_1$, an output signal $x_{new}(i=1)$, $550_1$ is outputted. The signal $x_{new}(i=1)$, $550_1$ is an input signal x(i=2), $540_2$ for the second flow block $510_2$ of the apparatus 500 together with the distorted training audio signal y, 530. An output signal $x_{new}(i=2)$, $550_2$ of the second flow block $510_2$ is an input signal x(i=3) of the third flow block etc. The last N flow block $510_N$ has a signal x(i=N), $540_N$ as an input signal and outputs a signal $x_{new}(i=N)$, $550_N$, which forms an output signal 520 of the apparatus 500 or the training result audio signal z, 520, being e.g. a noise signal (or at least a noise like signal, having statistical characteristics which are similar to a noise signal). The training result audio signal z, 520 may optionally be grouped into a vector representation (or into a matrix representation).

Processing of the training audio signal x in dependence on the distorted training audio signal y, 530 in the flow blocks $510_{1...N}$ is performed, e.g. iteratively.

An estimation (or an evaluation or an assessment) of the training result audio signal z, 520 may be performed, e.g. after each iteration in order to determine or estimate, whether a characteristic, e.g. a distribution (e.g. a distribution of signal values), of the training result audio signal z, 520 approximates a predetermined characteristic, e.g. a Gaussian distribution. If the characteristic of the training result audio signal z, 520 does not approach the predetermined characteristic (e.g. within a desired tolerance), neural network parameters may be varied before a subsequent iteration.

Accordingly, neural network parameters of the neural networks $580_{1...N}$ may be determined (e.g. iteratively) such that the training result audio signal which is obtained on the basis of a processing of the training audio signal in a sequence of flow blocks $510_{1...N}$ under the control of the neural networks $580_{1...N}$ comprises (or approximates) desired statistical characteristic (e.g. a desired distribution of values) within an (e.g. predetermined) allowable tolerance.

Neural network parameters of the neural networks $580_{1...N}$ may be determined e.g. using an evaluation of a cost function, e.g. an optimization function; e.g. using a parameter optimization procedure, such that a characteristic, e.g. a probability distribution, of the training result audio signal approximates or comprises a predetermined characteristic, e.g. a noise-like characteristic; e.g. a Gaussian distribution.

In the apparatus 500, the clean signal x is introduced together with the corresponding distorted, e.g. noisy, audio signal y to train neural networks $580_{1...N}$ associated with the training flow blocks $510_{1...N}$. Considering the training result audio signal 520, the apparatus 500 determines (590) neural network parameters, e.g. edge weights ($\theta$), of the neural networks $580_{1...N}$, as a result of the training.

The neural network parameters determined by the apparatus 500 may be used, for example, by neural networks associated with the flow blocks of the apparatuses shown in Figs. 1, 2 and 4 (wherein it should be noted that the flow blocks of the apparatuses of Figs. 1, 2 and 4 may, for example, be configured to perform affine transformations which are substantially inverse to the affine transformations performed by the flow blocks $510_{1...N}$).

However, it should be noted that the apparatus 500 may optionally be supplemented by any of the features, functionalities and details disclosed herein, both individually or taken in combination.

Fig. 6 shows a schematic representation of an apparatus 600 for providing neural network parameters in accordance with an embodiment.

In an embodiment, features, functionalities and details of the apparatus 600 may optionally be introduced into the apparatus 500 shown in Fig. 5 (both individually and in combination), or vice versa.

The apparatus 600 is configured to provide neural network parameters on the basis on a training audio signal x, 605, e.g. a clean audio signal, and a distorted version of the training audio signal y, $y_{input}$, 630, e.g. a distorted audio signal. Processing is performed in N flow blocks, e.g. training flow blocks $610_{1...N}$, associated with neural networks (not shown), for example such neural networks, as the neural networks $580_{1...N}$ of Fig. 5. The flow blocks $610_{1...N}$ are configured to process incoming audio signals, e.g. speech signals.

The distorted version of the training audio signal y, 630 is introduced into the apparatus 600 to be processed. The distorted audio signal y, 630 is, for example, a noisy input signal. The distorted training audio signal y, 630 is, for example, defined as $y = x + n$, wherein x is a clean part of the input signal, e.g. a training input signal x, 605, and n is noisy background. The distorted training audio signal y, 630 is represented, for example, as time domain audio samples, e.g. noisy time domain speech samples.

The training audio signal x and correspondingly the distorted version of the training audio signal y may optionally be grouped into a vector representation (or into a matrix representation).

The apparatus 600 is configured to provide neural network parameters for the neural networks (not shown) based on a clean-noisy (x-y) pair, which follows the training flow blocks $610_{1...N}$, to be mapped to a distribution, e.g. a Gaussian distribution, of a training result audio signal 620, e.g. a noise signal.

A training audio signal x, 605 is introduced into a first flow block $610_1$ of the apparatus 600 together with the distorted training audio signal y, 630. The training audio signal x, 605 may be represented, for example, as audio samples, e.g. as time domain samples.

The training audio signal x is optionally pre-processed into an input audio signal $x_{input}(i=1)$, 606 prior to coming into the apparatus 600 or within the apparatus 600. As shown in Fig. 6, the audio samples x, having e.g. 16000 samples, of the training audio signal x are e.g. grouped into groups of samples, e.g. into 2000 groups of 8 samples, e.g. grouped into a vector representation (or into a matrix representation).

The input audio signal $x_{input}(i=1)$, 640 is introduced into the first flow block $610_1$, e.g. a training flow block, of the apparatus 600, together with the distorted training audio signal y, $y_{input}$, 630. The input audio signal $x_{input}(i=1)$, 640 is (e.g. successively or tep-wisely) processed (or processed further) in the flow blocks $610_{1...N}$ on the basis of, e.g. conditioned by, the distorted training audio signal y, $y_{input}$, 630. The distorted training audio signal y, $y_{input}$, 630 is introduced in each flow block of the flow blocks $610_{1...N}$.

The processing in the first flow block $610_1$ is performed in two steps, e.g. in two blocks, e.g. in two operations: 1x1 invertible convolution 612, and affine coupling layers $611_1$.

In the invertible convolution block 612, samples of the input audio signal $x_{input}(i=1)$, 640 are mixed (e.g. re-ordered, or subjected to an invertible matrix operation, like a rotation matrix) prior to introducing into the affine coupling layer block $611_1$. The invertible convolution block $612_1$, for example, reverses ordering of channels at an input of the affine coupling layer block $611_1$. The invertible convolution block $612_1$ may be, for example, performed using a weight matrix W, e.g. as a random rotation matrix a pseudo-random but deterministic rotation matrix or a permutation matrix. The input audio signal $x_{input}(i=1)$, 640 is processed in the invertible convolution block 612, to output a pre-processed, e.g. a convoluted, input audio signal $x'_{input}(i=1)$, 641. For example, the distorted training audio signal y, $y_{input}$, 630 is not introduced into the invertible convolution block $612_1$ and serves as an input only to the affine coupling layer block $611_1$. The invertible convolution block may optionally be absent in an embodiment.

In the affine coupling layer block $611_1$, the pre-processed input audio signal $x'_{input}(i=1)$, 641 is processed on the basis of, e.g. conditioned by, the distorted training audio signal y, $y_{input}$, 630, which is introduced into the affine coupling layer block $611_1$ of the first flow block $610_1$. The processing of the pre-processed input audio signal $x'_{input}(i=1)$, 641 and the distorted training audio signal y, $y_{input}$, 630 in the affine coupling layer block $611_1$ of the first flow block $610_1$ as well as in affine coupling layer blocks of the subsequent flow blocks of the flow blocks $610_{1...N}$ will be described further with the reference to Fig. 7.

Processing in all subsequent flow blocks of the flow blocks $610_{1...N}$ is, for example, performed in two steps, e.g. in two blocks, e.g. in two operations: 1x1 invertible convolution and affine coupling layers. These two steps are, for example, (e.g qualitatively) the same as described related to the first flow block $610_1$ (wherein neural networks of different processing stages or flow blocks may comprise different parameters, and wherein the invertible convolutions may be different in different flow blocks or stages).

The affine coupling layer blocks of the flow blocks $610_{1...N}$ are associated with corresponding neural networks (not shown).

After processing in the affine coupling layer block $611_1$ of the first flow block $610_1$, an output signal $x_{new}(i=1)$, $650_1$ is outputted. The signal $x_{new}(i=1)$, $650_1$ is an input signal $x_{input}(i=2)$, $640_2$ for the second flow block $610_2$ of the apparatus 600 together with the distorted training audio signal y, $y_{input}$, 630. An output signal $x_{new}(i=2)$, $650_2$ of the second flow block $610_2$ is an input signal $x(i=3)$ of the third block etc. The last N flow block $610_N$ has a signal $x_{input}(i=N)$, $640_N$ as an input signal and outputs a signal $x_{new}(i=N)$, $650_N$ which forms an output signal 620 of the apparatus 600. The signal $x_{new}(i=N)$, $650_N$ forms a training result audio signal z, 620 e.g. a noise signal. The training result audio signal z, 620 may optionally be grouped into a vector representation (or into a matrix representation).

Processing of the training audio signal x in dependence on the distorted training audio signal y, 630 in the flow blocks $610_{1...N}$ is performed, e.g. iteratively. An estimation (or an evaluation or an assessment) of the training result audio signal z, 620 may be performed, e.g. after each iteration in order to estimate, whether a characteristic, e.g. a distribution (e.g. a distribution of signal values), of the training result audio signal z, 620 approximates a predetermined characteristic, e.g. a Gaussian distribution (e.g. within a desired tolerance). If the characteristic of the training result signal z, 620 does not approach the predetermined characteristic, neural network parameters may be varied before a subsequent iteration.

Accordingly, neural network parameters of the neural networks (which may, for example, correspond to the neural networks $580_{1..N}$) may be determined (e.g. iteratively) such that the training result audio signal 620, $650_N$ which is obtained on the basis of a processing of the training audio signal in a sequence of flow blocks $610_{1...N}$ under the control of the neural networks $580_{1...N}$ comprises (or approximates) desired statistical characteristic (e.g. a desired distribution of values) within an (e.g. predetermined) allowable tolerance.

Neural network parameters of the neural networks may be determined e.g. using an evaluation of a cost function, e.g. an optimization function; e.g. using a parameter optimization procedure, such that a characteristic, e.g. a probability distribution, of the training result audio signal approximates or comprises a predetermined characteristic, e.g. a noise-like characteristic; e.g. a Gaussian distribution.

In the apparatus 600, the clean signal x is introduced together with the corresponding distorted, e.g. noisy, audio signal y to train neural networks (not shown) associated with the training flow blocks $610_{1...N}$. Considering (or evaluating) the training result audio signal 620, the apparatus 600 determines neural network parameters, e.g. edge weights ($\theta$), of the neural networks, as a result of the training.

The neural network parameters determined by the apparatus 600 may be used, for example, by neural networks associated with the flow blocks of the apparatuses shown in Figs. 1, 2 and 4, e.g. in an inference processing which follows the training.

However, it should be noted that the apparatus 600 may optionally be supplemented by any of the features, functionalities and details disclosed herein, both individually or taken in combination.

Fig. 7 shows a schematic representation of a flow block 711, e.g. a training flow block, in accordance with an embodiment.

The flow block may be a part of processing, for example, by the apparatus 500 shown in Fig. 5 or by the apparatus 600, shown in Fig. 5. The flow blocks of the apparatus 500, shown in Fig. 5, may, for example, have the same structure or functionality as flow block 711 shown in Fig. 7. The affine coupling layer blocks of the flow blocks of the apparatus 600, shown in Fig. 6, may, for example, have the same structure or functionality as flow block 711 shown in Fig. 7.

The flow block 711 is, for example, an inverse version of the corresponding flow block 311 shown in Fig. 3, or may, for example, perform an affine processing which is (at least substantially) inverse to an affine processing which is performed by the flow block 311. As an example, the addition of the shift value t in the training flow block 711 may be inverse to the subtraction of the shift value in the inference flow block 311. Similarly, the multiplication with the scaling value s in the training flow block 711 may be inverse to the division by the scaling value s in the inference flow block 311. However, the neural network in the training flow block 711 may, for example, be identical to the neural network in the corresponding inference flow block 311.

The flow block index i is partly omitted in Fig. 7 and in the following description for simplicity.

An input signal 740 is introduced into the flow block 711. The input signal 740 may represent a training audio signal x(i), or e.g. a processed version of the training audio signal output by a preceding flow block, or e.g. a pre-processed, e.g. a convoluted, input audio signal $x'_{input}(i=1)$.

The input signal 740 is splitted (770) into two parts $x_1(i)$ and $x_2(i)$, e.g. randomly or in a pseudo-random (but deterministic) manner.

The first part $x_1(i)$ is introduced into a neural network 780, associated with a flow block 711. The neural network 780 could be, for example, a neural network associated with any (or with a given one) of the flow blocks $510_{1...N}$ of the apparatus 500 shown in Fig. 5. The neural network 780 could be, for example, a neural network associated with any (or with a given one) of the affine coupling layer blocks of the flow blocks $610_{1...N}$ of the apparatus 600 shown in Fig. 6.

The first part $x_1(i)$ is introduced into the neural network 780 together with a distorted training audio signal y, 730. The distorted training audio signal y, 730 is, for example, a noisy signal, or e.g. a distorted audio signal. The distorted training audio signal y, 730 is, for example, defined as y = x + n, wherein x is a clean training audio signal, e.g. the input signal 740, e.g. a clean part of the distorted training audio signal y, 730, and n is a noisy background.

The training audio signal x and correspondingly the distorted version of the training audio signal y may optionally be grouped into a vector representation (or into a matrix representation).

The neural network 780 processes the first part $x_1(i)$ of the input signal 740 and the distorted training audio signal y, 730, e.g. processes the first part $x_1(i)$ depending on, e.g. conditioned by, the distorted training audio signal y, 730. The neural network 780 determines processing parameters, e.g. a scaling factor, e.g. S, and a shift value, e.g. T, which are output (771) of the neural network 780. The determined parameters S, T have, for example, a vector representation. The second part $x_2(i)$ of the input signal 740 is processed (772) using the determined parameters S, T.

The processed second part second part $\hat{x}_2(i)$ is defined by the equation:

$$\widehat{x_2} = x_2 \cdot s + t. \qquad\qquad (4)$$

In this equation, s may be equal to S (e.g. if only a single scale factor value is provided by the neural net), or s may be an element of a vector S of scale factor values (e.g. if a vector of scale factor values is provided by the neural net). Similarly, t may be equal to T (e.g. if only a single shift value is provided by the neural net), or t may be an element of a vector T of shift values (e.g. if a vector of scale factor values is provided by the neural net, entries of which are associated with different sample values of $x_2(i)$).

For example, the above equation for $\widehat{x_2}$ may be applied in an element-wise manner on individual elements or on groups of elements of the second part $x_2$. However, if only a single value s and a single value t is provided by the neural net, this single value s and this single value t may be applied to all elements of the second part $x_2$ in the same manner.

The unprocessed first part $x_1(i)$ of the signal x and the processed part $\widehat{x_2}$ of the signal x are combined (773) to form signal $x_{new}$, 750 processed at the flow block 711. This output signal $x_{new}$ is introduced in the next, e.g. consequent flow block, e.g. in the second flow block, e.g. in the flow block (i plus 1). If i=N, the signal $x_{new}$, 750 is an output signal, e.g. z, of a corresponding apparatus. The output signal z may optionally be grouped into a vector representation (or into a matrix representation).

In case the pre-processed noise signal x'(i) is used as the input signal 740, the input signal 740 is, for example, pre-mixed in order to avoid processing same x(i) in the flow block 711. For example, the pre-processing (e.g. using an invertible convolution) may have the effect that different samples (of the training audio signal) (e.g. originating from different original sample positions) are affinely processed in different flow blocks (i.e. to avoid that the same subset of samples is affinely processed in each flow block), and that different samples (of the training audio signal) (e.g. originating from different original sample positions) serve as input signals of the neural networks associated with different flow blocks or processing stages (i.e. to avoid that the same subset of samples is input into the neural networks in each flow block). However, it should be noted that the flow block 711 may optionally be supplemented by any of the features, functionalities and details disclosed herein, both individually or taken in combination.

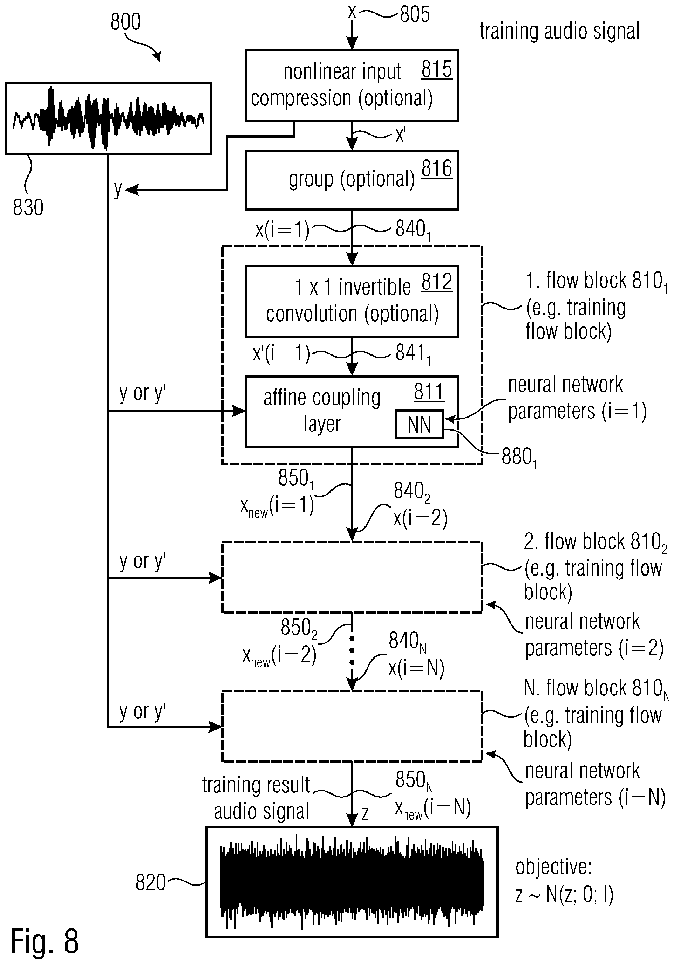

Fig. 8 shows a schematic representation of an apparatus 800 for providing neural network parameters in accordance with an embodiment.

In an embodiment, the apparatus 800 may be, for example, combined with the apparatus 500, shown in Fig. 5, or for example, with the apparatus 600, shown in Fig. 8. Also, features, functionalities and details of the apparatus 800 may optionally be introduced into the apparatus 500 or into the apparatus 600 (both individually and in combination), or vice versa.

The flow block 711 shown in Fig. 7, could be, for example, used in the apparatus 800 in an embodiment.

The apparatus 800 is configured to provide neural network parameters on the basis on a training audio signal x, 805, e.g. a clean audio signal, and a distorted version of the training audio signal y, 830, e.g. a distorted audio signal. Processing is performed, for example, in N flow blocks, e.g. training flow blocks $810_{1...N}$, associated with neural networks (only a neural network $880_1$ of the first flow block $810_1$ is shown). The flow blocks $810_{1...N}$ are configured to process incoming audio signals, e.g. speech signals.

The distorted version of the training audio signal y, 830 is introduced into the apparatus 800 to be processed. The distorted audio signal y, 830 is, for example, a noisy input signal. The distorted training audio signal y, 830 is, for example, defined as y = x + n, wherein x is a clean part of the input signal, e.g. a training audio signal x, 805, and n is a noisy background. The distorted training audio signal y, 830 is represented, for example, as time domain audio samples, e.g. noisy time domain speech samples.

The training audio signal x and correspondingly the distorted version of the training audio signal y may optionally be grouped into a vector representation (or into a matrix representation).

A training audio signal x, 805 is introduced into a flow block $810_1$ of the apparatus 800 together with the distorted training audio signal y, 830. The training audio signal x, 805 is represented, for example, as audio samples, e.g. as time domain samples.

The apparatus 800 is configured to provide neural network parameters for the neural networks (not shown) based on a clean-noisy (x-y) pair, which follows the training flow blocks $810_{1...N}$, to be mapped to a distribution, e.g. a Gaussian distribution, of a training result signal 820, e.g. a noise signal.

A nonlinear input compression step 815 is optionally applied to the training audio signal x, 805. The step 815 is optional, as it is shown in Fig. 8. The nonlinear input compression step 815 could be applied, for example, to compress the training audio signal x 805. Rather than to learn distribution of clear utterances, e.g. clear audio signal x, upon training the neural networks associated with the flow blocks $810_{1...N}$, the distribution of the compressed signal is learned in case the optional nonlinear input compression step 815 is present. In an embodiment, the nonlinear input compression step 815 is as described with the reference to Fig. 9.

In an embodiment, the nonlinear input compression 815 may be represented, for example, by a $\mu$-law compression, or e.g. a $\mu$-law transformation of the training audio signal x, 805. For example:

$$g(x) = sgn(x) \cdot \left(\frac{\ln(1+\mu|x|)}{\ln(1+\mu)}\right); \qquad (5)$$

wherein sgn() is a sign function;

$\mu$ is a parameter defining a level of compression.

The parameter $\mu$ may be set, for example, to 255, which is a common values used in a telecommunication. The nonlinear input compression step 815 could be applied, for example, when there is a desire to make sure, that all values, from which the distribution of the noise signal z is to be learned, are evenly spread out.
Prior to introducing the training audio signal x, 805 into the first flow block $810_1$ of the apparatus 800, audio samples of the training audio signal x, 805 or compressed audio samples of the training input signal x' are optionally grouped (816) into groups of samples, e.g. into groups of 8 samples, e.g. grouped into a vector representation (or into a matrix representation). The grouping step 816 is an optional step, as shown in Fig. 8.
An (optionally grouped) training audio signal, x(i=1) 840, is introduced into a flow block $810_1$ of the apparatus 800 together with the distorted training audio signal y, 830.
A nonlinear input compression step 815 is optionally applied also to the distorted training audio signal y, 830. The step 815 is optional, as it is shown in Fig. 8. The nonlinear input compression step 815 could be applied, for example, to compress the distorted training audio signal y, 830. In an embodiment, the nonlinear input compression step 815 is as described with the reference to Fig. 9.
In an embodiment, the nonlinear input compression 815 may be represented, for example, by a $\mu$-law compression, or e.g. a $\mu$-law transformation of the distorted training audio signal y, 830. For example:

$$g(y) = sgn(y) \cdot \left(\frac{\ln(1+\mu|y|)}{\ln(1+\mu)}\right); \qquad (6)$$

wherein sgn() is a sign function;

$\mu$ is a parameter defining a level of compression.

The parameter $\mu$ may be set, for example, to 255, which is a common values used in a telecommunication.
The training audio signal, x(i=1) $840_1$ is introduced into the first flow block $810_1$, e.g. a training flow block, of the apparatus 800, together with the distorted training audio signal y, 830 or together with the pre-processed, e.g. compressed, distorted training audio signal y'. The training audio signal, x(i=1) 840, is processed in the flow blocks $810_{1...N}$ on the basis of, e.g. conditioned by, the distorted training audio signal y, 830. The distorted training audio signal y, 830 is introduced in each flow block of the flow blocks $810_{1...N}$.
The processing in the first flow block $810_1$ is performed, for example, in two steps, e.g. in two blocks, e.g. in two operations: 1x1 invertible convolution $812_1$ and affine coupling layers $811_1$.
In the invertible convolution block 812, samples of the training audio signal, x(i=1) 840, are mixed (e.g. re-ordered, or subjected to an invertible matrix operation, like a rotation matrix) prior to introducing into the affine coupling layer block $811_1$. The invertible convolution block $812_1$, for example, reverses (or changes) ordering of channels at an input of the affine coupling layer block $811_1$. The invertible convolution block 812, may be, for example, performed using a weight matrix W, e.g. as a random rotation matrix or a peudorandom but deterministic rotation matrix, or a permutation matrix. For example, the training audio signal, x(i=1) 840, is processed in the invertible convolution block 812, to output a pre-processed, e.g. a convoluted, training audio signal, x'(i=1) $841_1$. For example, the distorted training audio signal y, 830 is not introduced into the invertible convolution block 812, and serves as an input only to the affine coupling layer block $811_1$. The invertible convolution block may optionally be absent in an embodiment.
In the affine coupling layer block $811_1$, the pre-processed training audio signal, x'(i=1) $841_1$ is processed on the basis of, e.g. conditioned by, the distorted training audio signal y, 830, which is introduced into the affine coupling layer block $811_1$ of the first flow block $810_1$. The processing of the pre-processed training audio signal, x'(i=1) $841_1$ and the distorted training audio signal y, 830 in the affine coupling layer block $811_1$ of the first flow block $810_1$ as well as in affine coupling layer blocks of the subsequent flow blocks of the flow blocks $810_{1...N}$ is described, for example, with the reference to Fig. 7.

Processing in all subsequent flow blocks of the flow blocks $810_{1...N}$ is performed, for example, in two steps, e.g. in two blocks, e.g. in two operations: 1x1 invertible convolution and affine coupling layers. These two steps are for example, (e.g qualitatively) the same as described related to the first flow block $810_1$ (wherein neural networks of different processing stages or flow blocks may comprise different parameters, and wherein the invertible convolutions may be different in different flow blocks or stages).

The affine coupling layer blocks of the flow blocks $810_{1...N}$ are associated with corresponding networks (only a neural network $880_1$ of the first flow block $810_1$ is shown).

After processing in the affine coupling layer block $811_1$ of the first flow block $810_1$ an output signal $x_{new}(i=1)$, $850_1$ is outputted. The signal $8_{new}(i=1)$, $850_1$ is an input signal $x(i=2)$, $840_2$ for the second flow block $810_2$ of the apparatus 800 together with the distorted training audio signal y, 830. An output signal $x_{new}(i=2)$, $850_2$ of the second flow block $810_2$ is an input signal $x(i=3)$ of the third block etc. The last N flow block $810_N$ has a signal $x(i=N)$, $840_N$ as an input signal and outputs a signal $x_{new}(i=N)$, $850_N$ which forms an output signal 820 of the apparatus 800, e.g. a training result audio signal. The signal $x_{new}(i=N)$, $850_N$ forms a training result audio signal z, 820 e.g. a noise signal. The training result audio signal z, 820 may optionally be grouped into a vector representation (or into a matrix representation).

Processing of the training audio signal x in dependence on the distorted training audio signal y, 830 in the flow blocks $810_{1...N}$ is performed, e.g. iteratively. An estimation (or an evaluation or an assessment) of the training result signal z, 820 may be performed, e.g. after each iteration in order to estimate, whether a characteristic, e.g. a distribution (e.g. a distribution of signal values), of the training result signal z, 820 approximates a predetermined characteristic, e.g. a Gaussian distribution (e.g. within a desired tolerance). If the characteristic of the training result audio signal z, 820 does not approach the predetermined characteristic, neural network parameters may be varied before a subsequent iteration.

Accordingly, neural network parameters of the neural networks (which may, for example, correspond to the neural networks $580_{1..N}$, $780_{1..N}$) may be determined (e.g. iteratively) such that the training result audio signal 820, $850_N$ which is obtained on the basis of a processing of the training audio signal in a sequence of flow blocks $810_{1...N}$ under the control of the neural networks $880_{1...N}$ comprises (or approximates) desired statistical characteristic (e.g. a desired distribution of values) within an (e.g. predetermined) allowable tolerance.

Neural network parameters of the neural networks may be determined e.g. using an evaluation of a cost function, e.g. an optimization function; e.g. using a parameter optimization procedure, such that a characteristic, e.g. a probability distribution, of the training result audio signal approximates or comprises a predetermined characteristic, e.g. a noise-like characteristic; e.g. a Gaussian distribution.

In the apparatus 800, the clean signal x is introduced together with the corresponding distorted, e.g. noisy, audio signal y to train neural networks associated with the training flow blocks $810_{1...N}$. Considering (or evaluating) the training result signal 820, neural network parameters, e.g. edge weights ($\theta$), of the neural networks, are determined as a result of the training.

The neural network parameters determined by the apparatus 800 may be used, for example, by neural networks associated with the flow blocks of the apparatuses shown in Figs. 1, 2 and 4, e.g. in an inference processing which follows the training.

However, it should be noted that the apparatus 800 may optionally be supplemented by any of the features, functionalities and details disclosed herein, both individually or taken in combination.

In the following, some considerations underlying embodiments according to the present invention will be described. For example, a problem formulation will be provided, normalizing flow fundamentals will be described and a speech enhancement flow will be discussed. The concepts described in the following can be used individually, and also in combination with the embodiments described herein.

Flow block processing as used in the apparatuses 100, 200, 400 shown in Figs. 1, 2 and 4 and also flow block processing used in the apparatuses 500, 600 and 800 shown in Figs. 5, 6 and 8 can be, for example, described as a transformation of a simple to a more complex probability distribution using an invertible and differentiable mapping, formally expressed as

$$\mathbf{x} = f(\mathbf{z}), \tag{7}$$

where $\mathbf{x} \in R^D$ and $\mathbf{z} \in R^D$ are D dimensional random variables, and
$f$ is the function mapping $\mathbf{z}$ to $\mathbf{x}$.
(5) represents a differentiable and invertible transformation with a differentiable inverse.

The invertibility of $f$ ensures, that this step can be reverted to go back from $\mathbf{x}$ to $\mathbf{z}$:

$$z = f^{-1}(\mathbf{x}). \tag{8}$$

Moreover, if function f is invertible and differentiable it is ensured that the composition of a sequence of *1* to *T* transformations is also invertible and can be described by a neural network:

$$\mathbf{x} = f_1{}^\circ f_2{}^\circ ...{}^\circ f_T(\mathbf{z}) \tag{9}$$

Following this, the log probability density function, e.g. a log-likelihood, log $p_x(\mathbf{x})$ can be computed, e.g. directly, by a change of variables:

$$\log p_x(\mathbf{x}) = \log p_z\left(f^{-1}(\mathbf{x})\right) + \log\left|\det\left(J(\mathbf{x})\right)\right| \tag{10}$$

where $J(\mathbf{x}) = \partial f^{-1}(\mathbf{x})/\partial \mathbf{x}$ defines the Jacobian consisting of all first order partial derivatives.

It should be noted that, for example, a function $f^1$ (e.g. composed from partial functions performed by the training flow blocks $510_{1...N}$) may be performed in the apparatuses 500, 600, 800, and a function f (e.g. composed from partial functions performed by the inference flow blocks $110_{1...N}$) may be performed in the apparatuses 100, 200, 400.

A function definition of f may, for example, be derived from the function definition of $f^1$, since the partial functions performed by the training flow blocks are invertible. Thus, by determining (in a training) rules (e.g. neural network parameters) defining the function f performed by the training apparatuses 500, 600, 800, a definition of the function $f^1$ is implicitly also obtained. In other words, the function definition of $f^1$ may be determined in the training (e.g. by determining neural network parameters such that a training audio signal x is transformed into a noise like signal z), and the function definition of f may be derived from the function definition of $f^1$.

In the following, some more (optional) details with respect to a speech enhancement flow will be described, which may optionally be used in apparatuses and methods according to embodiments of the present invention (e.g. in the apparatuses 100, 200, 400, 500, 600, 800 or in the flow blocks 311, 711).

In case of speech enhancement (or, generally, in case of audio enhancement), a time domain mixture signal $\mathbf{y} \in R^{1 \times N}$ of length $N$ may be composed of a clean speech utterance $\mathbf{x} \in R^{1 \times N}$ and some additive disturbing background $\mathbf{n} \in R^{1 \times N}$, e.g. a noisy mixture is shown as a summation of clean speech and interfering background, so that

$$\mathbf{y} = \mathbf{x} + \mathbf{n}. \tag{11}$$

Further, $\mathbf{z} \in R^{1 \times N}$ is defined as being sampled from a normal distribution of zero mean and unit variance, e.g. as a Gaussian sample, i.e.,

$$\mathbf{z} \sim N(\mathbf{z}; 0, I). \tag{12}$$

The flow blocks based model proposed in the apparatuses 500, 600 and 800 shown in Figs. 5, 6 and 8 is defined as a DNN and aims to outline the probability distribution $p_x(\mathbf{x}|\mathbf{y})$ formed by clean speech utterances $\mathbf{x}$ conditioned on the noisy mixture $\mathbf{y}$, e.g. learn a probability distribution function of $\mathbf{x}$ conditioned on $\mathbf{y}$. Minimizing the negative log-likelihood of the previously defined probability distribution is, for example, seen as a training objective (wherein, for example, the value of the following expression may be minimized by optimization of the neural network parameters):

$$\log p_x(\mathbf{x}|\mathbf{y}; \theta) = \log p_z\left(f_\theta^{-1}(\mathbf{x})|\mathbf{y}\right) + \log\left|\det\left(J(\mathbf{x})\right)\right| \tag{13}$$

where $\theta$ represents the neural network parameters.

In the enhancement step (e.g. in the apparatuses 100, 200 and 400 shown in Figs. 1, 2 and 4) a sample is taken from $p_z(\mathbf{z})$ and handed together with a noisy sample as input to the neural network, e.g. sample $\mathbf{z}$ follow the inverted flow together with noisy input $\mathbf{y}$. For example, time domain sample values of a noise-like signal having a predetermined distribution, e.g. a Gaussian distribution, may be input into a (first) flow block (and consequently, e.g. in a pre-processed form, into a neural net, e.g. together with samples of an audio signal y). Following the inverted flow, e.g. an inverted flow block processing, e.g. inverted to the processing performed in the training flow blocks, the neural network (e.g. in combination with the affine processing 372) maps the random sample (or samples) back to the distribution of clean utterances to create an enhanced audio signal, e.g. an enhanced speech signal $\hat{x}$, with $\hat{x}$ ideally being close to underlying **x,** e.g. $\hat{x} \approx$ **x.**

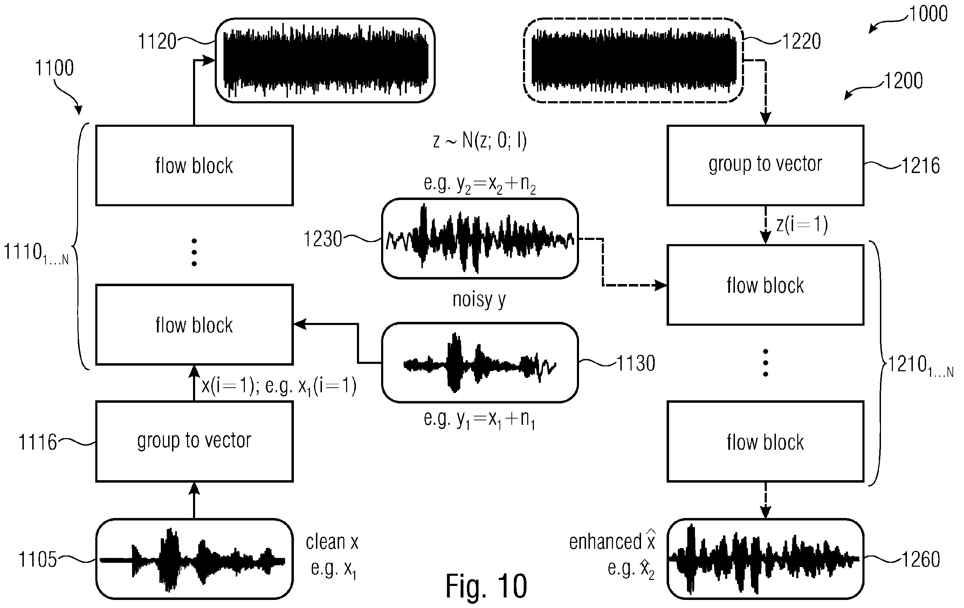

These correspondences 7-13 are also correct for the system 1000 shown in Fig. 10.

In the following, a nonlinear input companding, e.g. compression and/or expansion, will be described, which may optionally be used in embodiments according to the present invention.

Fig 9 shows an illustration of a nonlinear input compression, step used in the apparatuses described herein.

A nonlinear input compression, step could be used, for example, as a pre-processing block at any of the apparatuses 500, 600 or 800 shown in Figs. 5, 6 and 8 correspondingly.

The non-linear compression, algorithm may be applied to map small amplitudes of audio data samples to a wider interval and larger amplitudes to a smaller interval.

Fig. 9 demonstrates, at reference numeral 910, one audio signal, e.g. a clean signal x, shown as a function of time, e.g. in a time domain representation. The speech signal shows an example of a speech signal, e.g. x, from which neural networks associated with the apparatuses 500, 600 or 800 shown in Figs. 5, 6 and 8 learn from. Since the neural networks model the probability distribution of time domain audio, e.g. speech, utterances, it is important to inspect the range of values from which the distribution is learned from. The audio data is normally, for example, stored as normalized 32-bits flows in a range of [-1, 1]. Time domain audio, e.g. speech, samples approximately follow a Laplacian distribution.

This audio, e.g. speech, signal is shown together with a histogram of values before (a) and after (b) applying the compression, algorithm, e.g. a nonlinear input compression, e.g. 815. The compression, is understood, for example, as a sort of histogram equalization or as a histogram spreading for relatively low signal values and/or as a histogram compression for relatively large signal values. For example, as can be seen by a comparison of a first histogram 920 before the application of the compression, algorithm and a second histogram 920 after the application of the compression, algorithm, it can be seen that the histogram gets broader. For example, an abscissa 922 of histogram 920 shows signal values before compression, and an ordinate 924 describes a probability distribution of respective signal values. For example, an abscissa 932 of histogram 920 shows signal values after compression, and an ordinate 934 describes a probability distribution of respective signal values. It becomes apparent that the compressed, signal values comprise a broader (more evenly distributed, less peak-like) probability distribution which has been found to be advantageous for the processing in the flow blocks.

As it is shown in Fig. 9(a), (e.g. at reference numeral 920) most values of an approximate Laplacian distribution lie in a small range around zero. It has been recognized that in clean speech sample (or clean speech signals), e.g. x, data sample (or signal values) with a higher absolute amplitude carry significant information and are usually underrepresented, as can be seen in Fig. 9(a). Applying the compression, algorithm provides that the values of the time domain speech sample are more evenly spread out.

In an embodiment, the nonlinear input compression, may be represented, for example, by a μ-law compression, of the input data without quantization:

$$g(x) = sgn(x) \cdot \frac{\ln(1+\mu|x|)}{\ln(1+\mu)}; \qquad (14)$$

wherein sgn() is a sign function;

μ is a parameter defining a level of compression.

The parameter μ may be set, for example, to 255, which is a common value used in a telecommunication.

With respect to the learning, e.g. training objective, in the flow block processing of the apparatuses 500, 600 or 800 shown in Figs. 5, 6 and 8, the distribution of the compressed signal, e.g. a pre-processed signal x, is learned, instead of learning the distribution of clean utterances, e.g. unprocessed clean signal x.

The algorithm inverse to this described nonlinear input compression algorithm is, for example, used in the apparatuses 100, 200 or 400 shown in Figs. 1, 2 and 4 as a final processing step, e.g. a nonlinear expansion 415 shown in Fig. 4. The enhanced sample $\hat{x}$ of Figs. 1, 2 and 4 can be expanded to a regular signal, e.g. by using reverting the μ-law transform, e.g.:

$$g^{-1}(\hat{x}) = sgn(\hat{x}) \cdot (\frac{(1+\mu)^{\hat{x}}-1}{\mu}); \qquad (15)$$

wherein sgn() is a sign function;

$\mu$ is a parameter defining a level of expansion.

However, it should be noted that the nonlinear input compression shown in Fig. 9 may optionally be supplemented by any of the features, functionalities and details disclosed herein, both individually or taken in combination.

Fig 10 shows a schematic representation of a flow block system 1000 for audio signal processing in accordance with an embodiment.

The flow block system 1000 represents a combination of an apparatus 1100 for providing neural network parameters and an apparatus 1200 for providing a processed signal (which may also be used individually). The apparatus 1100 may, for example, be implemented as any of the apparatuses 500, 600 or 800 shown in Figs. 5, 6 and 8. The apparatus 1200 may, for example, be implemented as any of the apparatuses 100, 200 or 400 shown in Figs. 1, 2 and 4.

In the apparatus 1100 a clean-noisy pair **(x-y)** follows (or is input into) a flow block processing to be mapped to a Gaussian distribution, N($\mathbf{z}$;0;I) (or to a distribution which approximates a Gaussian distribution). In inference (apparatus 1200), a sample $\mathbf{z}$ (e.g. a block of sample values) is drawn from this distribution (or from a signal having the desired, e.g. Gaussian, distribution of signal value) and follows the inverted flow block processing together with another noisy utterance **y** to generate the enhanced signal $\hat{\mathbf{x}}$.

The apparatus 1100 is configured to provide neural network parameters on the basis on a training audio signal 1105, e.g. a clean x, e.g. $x_1$, and a distorted version of the training audio signal 1130, e.g. a noisy y, e.g. $y_1=x_1+n_1$. Processing is performed in N flow blocks, e.g. training flow blocks $1010_{1...N}$, associated with neural networks (not shown). The flow blocks $1010_{1...N}$ are configured to process incoming audio signals, e.g. speech signals.

Prior to introducing the training audio signal 1105 into the first flow block $1110_1$ of the apparatus 1100, audio samples of the training audio signal x are grouped (1116) into groups of samples, e.g. into groups of 8 samples, e.g. grouped to vector.

An optionally grouped training audio signal, x(i=1), e.g. $x_1$(i=1) is introduced into a first flow block $1110_1$ of the apparatus 1100 together with the distorted training audio signal y, 1130, e.g. $y_1$.

The distorted audio signal y, 1130 is, for example, a noisy input signal. The distorted training audio signal y, 1130 is, for example, defined as y = x + n, wherein x is a clean part of the input signal, e.g. a training input signal x, 1105, and n is noisy background, e.g. $y_1 = x_1 + n_1$, wherein $x_1$ is a clean part of the input signal, e.g. a training input signal $x_1$, 1105, and $n_1$ is noisy background. The distorted training audio signal y, 1130 may be represented, for example, as time domain audio samples, e.g. noisy time domain speech samples.

The training audio signal x and correspondingly the distorted version of the training audio signal y may optionally be grouped into a vector representation (or into a matrix representation).

The apparatus 1100 is configured to provide neural network parameters for the neural networks (e.g for neural networks $580_{1...N}$) based on a clean-noisy (x-y) pair (or based on a plurality of clean-noisy pairs), which follows (or is processed by) the training flow blocks $1110_{1...N}$, to be mapped to a distribution, e.g. a Gaussian distribution, of a training result audio signal 1120, e.g. a noise signal, e.g. z. The training result audio signal 1120 may optionally be grouped into a vector representation (or into a matrix representation).

A training audio signal x, 1105 is introduced into a first flow block $1110_1$ of the apparatus 1100 together with the distorted training audio signal y, 1130. The training audio signal x, 1105 is represented, for example, as audio samples, e.g. as time domain samples.

The flow blocks $1110_{1...N}$ may be, for example, implemented as the flow blocks $510_{1...N}$, $610_{1...N}$, or $810_{1...N}$ of the apparatues 500, 600 or 800, shown in Figs. 5, 6, and 8 correspondingly.

The flow blocks $1110_{1...N}$ may, for example, comprise an affine coupling layer block, as, for example, the flow blocks $611_1$, or $711_1$, or $811_1$, as shown in Figs. 6, 7 and 8.

As an output of the flow blocks $1110_{1...N}$, a training result audio signal z, 1120, being e.g. a noise signal (or approximating a noise signal) is provided. The noise signal z, 1120 is defined, for example, as e.g. z - N(z; 0; I).

In the apparatus 1100, the clean signal x, 1105 is introduced together with the corresponding distorted, e.g. noisy, audio signal y, 1130 to train neural networks associated with the training flow blocks $1110_{1...N}$ and to determine neural network parameters, e.g. edge weights ($\theta$), of the neural networks, as a result of the training.

The neural network parameters determined by the apparatus 1100 may be used, for example, further in an inference, provided by the apparatus 1200.

The apparatus 1200 is configured to provide a processed, e.g. enhanced, audio signal on the basis on an input audio signal y, 1230. Processing is performed in N flow blocks, e.g. inference flow blocks $1210_{1...N}$, associated with neural networks (not shown). The flow blocks $1210_{1...N}$ are configured to process incoming audio signals, e.g. speech signals.

The input audio signal y, 1230, e.g. new noisy signal $y_2$, is introduced into the apparatus 1200 to be processed. The input audio signal y is, for example, a noisy input signal, or e.g. a distorted audio signal. The input audio signal y, 1230 is defined as y = x + n, wherein x is a clean part of the input audio signal, and n is noisy background, e.g. $y_2 = x_2 + n_2$. The input audio signal y, 1230 may be represented, for example, as time domain audio samples, e.g. noisy time domain speech samples.

The input audio signal y and correspondingly the its clean part x may optionally be grouped into a vector representation (or into a matrix representation).

A noise signal z, 1220 is obtained (e.g. generated) and introduced into a first flow block $1210_1$ of the apparatus 100 together with the input audio signal y, 1230. The noise signal z, 1220 is defined, for example, as being sampled from a normal distribution of zero mean and unit variance, e.g. z - N(z; 0; I). The noise signal z, 1220 is represented, for example, as noise samples, e.g. as time domain noise samples.

Prior to introducing the noise signal 1220 into the first flow block 1210, of the apparatus 1200, audio samples of the noise signal z are optionally grouped (1216) into groups of samples, e.g. into groups of 8 samples, e.g. grouped to vector (or grouped into a matrix). This grouping step may, for example, be optional.

An optionally grouped noise signal, z(i=1), e.g. $x_1(i=1)$ is introduced into a first flow block $1210_1$ of the apparatus 1200 together with the input audio signal y, 1230, e.g. $y_2$. The flow blocks $1210_{1...N}$ represent an inversion of the flow blocks $1110_{1...N}$ of the apparatus 1100 (e.g. perform an inverse affine processing and optionally also an inverse convolution processing when compared to the corresponding flow blocks of the apparatus 1100).

The flow blocks $1210_{1...N}$ may be, for example, implemented as the flow blocks $110_{1...N}$, $210_{1...N}$, or $410_{1...N}$ of the apparatuses 100, 200 or 400, shown in Figs. 1, 2, and 4 correspondingly.

The flow blocks $1210_{1...N}$ may, for example, comprise an affine coupling layer block, as, for example, the flow blocks $211_1$, or $311_1$, or $411_1$, as shown in Figs. 1, 2, and 4.

As an output of the flow blocks $1210_{1...N}$ a processed, e.g. enhanced, audio signal $\hat{x}$, 1260, is provided. The enhanced audio signal $\hat{x}$, 1260 represents, for example, an enhanced clean part of the input audio signal y, 1230.

The clean part x of the input audio signal y, 1230 is not introduced separately into the apparatus 1200. The apparatus 1200 processes the, e.g. generated, noise signal z, 1220 based on the input audio signal y, 1230 to receive, e.g. generate, e.g. output, an enhanced audio signal, being e.g. an enhancement of the clean part of the input audio signal y, 1230.

However, it should be noted that the system 1000 may optionally be supplemented by any of the features, functionalities and details disclosed herein, both individually or taken in combination.

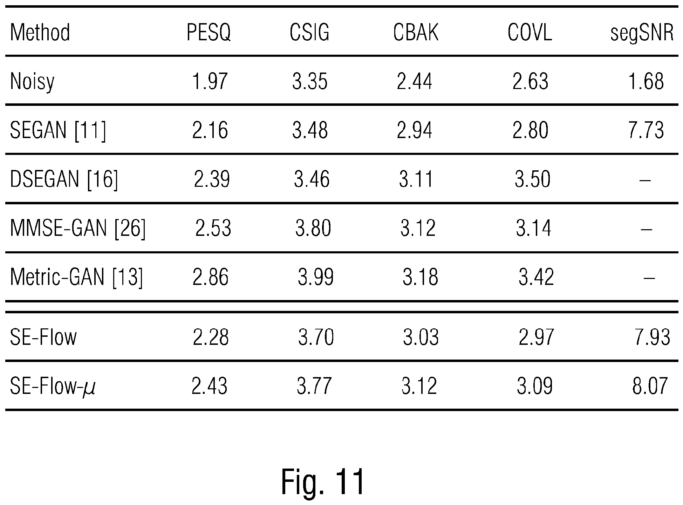

Fig. 11 shows a table, Table 1, which illustrates a comparison of the apparatuses and methods in accordance with an embodiment with conventional techniques.

Table 1 shows evaluation results using objective evaluation metrics. SE-Flow represents the proposed flow-based approach in accordance with embodiments, as described above referring to Figs. 1-3, 5-7 and 10, and SE-Flow-$\mu$ represents the approach including $\mu$-law transformation, for example as a nonlinear companding, e.g. compression, described referring to Fig. 9, e.g. as a nonlinear input compression or a nonlinear expansion, as a pre-processing or post-processing step correspondingly, for example as the one used in the embodiments described above referring to Figs. 8 and 4 correspondingly.

As is shown in the table, in between the two proposed flow-based experiments, the model using $\mu$-companding shows better results in all metrics. This demonstrates the effectiveness of this easy preprocessing and post-processing technique, e.g. nonlinear companding, for modeling the distribution of time domain signals.

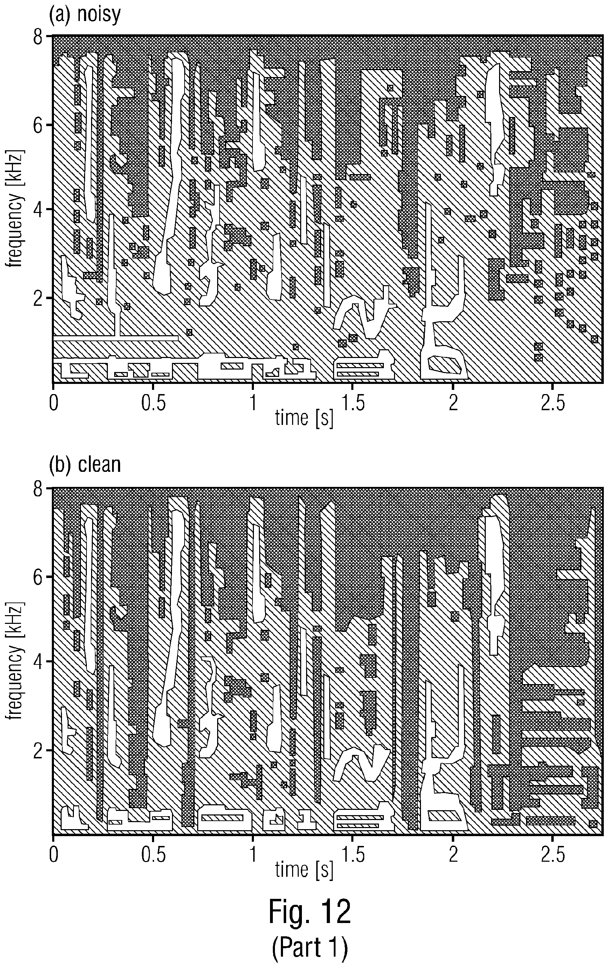

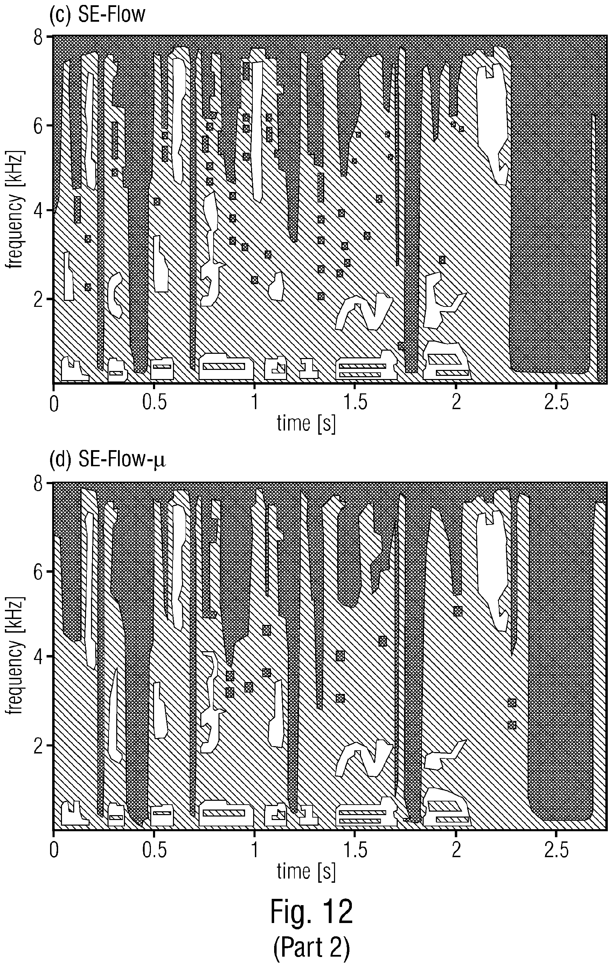

An illustration of the enhancement capabilities can also be seen in Fig. 12.

Fig. 12 shows a graphic representation of a performance of the apparatuses and methods in accordance with an embodiment.

Fig. 12 shows example spectrograms to show the performance of the proposed embodiments. In (a), a noisy speech utterance at 2.5 dB (Signal-to-noise ratio, SNR) is displayed. (b) shows the corresponding clean utterance. In (c) and (d) the results of the proposed flow-based systems, e.g. shown in Fig. 10, in accordance with an embodiment according to the invention are shown.

Further embodiments and Aspects

In the following, further aspects and embodiments according to the invention will be described, which can be used individually or in combination with any other embodiments disclosed herein.

Moreover, the embodiments disclosed in this section may optionally be supplemented by any other features, functionalities and details disclosed herein, both individually and taken in combination.

In the following, a concept of a flow-based neural network for time domain speech enhancement will be described.

In the following, an idea underlying embodiments of the invention will be described.

In the following, some goals and purposes of the invention will be described which may be reached (at least partly) in some or all of the embodiments, and some aspects of the invention will be briefly summarized.

Speech enhancement involves the distinction of a target speech signal from an intrusive background. Although conventional generative approaches using variational autoencoders or generative adversarial networks (GANs) have increasingly been used in recent years, normalizing flow (NF) based systems are still scarce, despite their success in related fields. Thus, in the following a NF framework to directly model the enhancement process by density estimation of clean speech utterances conditioned on their noisy counterpart is proposed in according with embodiments. A conventional model inspired from speech synthesis is adapted in an embodiment to enable direct enhancement of noisy utterances in time domain. Experimental evaluation on a publicly available dataset in accordance with an embodiment shows comparable performance to current state-of-the-art GAN-based approaches, while surpassing the chosen baselines using objective evaluation metrics.

Embodiments according to the invention can be used for speech enhancement. Embodiments according to the invention make use of normalizing flows and/or deep learning and/or generative modeling.

In the following, a brief introduction will be provided.

Conventionally, the goal of speech enhancement (SE) is to emphasize a target speech signal from an interfering background to ensure better intelligibility of the spoken content [1]. Due to its importance to a wide range of applications, including, e.g., hearing aids [2] or automatic speech recognition [3], it has been investigated extensively in the past. In doing so, deep neural networks (DNNs) have largely taken over traditional techniques like Wiener filtering [4], spectral subtraction [5], subspace methods [6] or the minimum mean square error (MMSE) [7]. Most commonly, DNNs are conventionally used to estimate time-frequency (T-F) masks which are able to separate speech and background from a mixture signal [8]. Nonetheless, systems based on time domain in-put were proposed in recent years, which have the benefit of avoiding expensive T-F transformations [9, 10, 11]. Lately, there has also been increasing attention in SE research to generative approaches such as generative adversarial networks (GAN) [11, 12, 13], variational autoencoders (VAE) [14] and autoregressive models [10]. Especially the usage of GANs, where a generator and a discriminator are trained simultaneously in an adversarial manner, was broadly investigated in the past couple of years. For instance, Pascual et al. [11], proposed a GAN-based end-to-end system, where the generator enhances noisy speech samples directly on a waveform level. In the following, this approach has been extended multiple times, e.g. by making usage of the Wasserstein distance [15] or by combining multiple genera-tors to increase performance [16]. Others reported impressive SE results working with GANs to estimate clean T-F spectrograms by implementing additional techniques like a mean squared error regularization [12] or optimizing the network directly with respect to a speech specific evaluation metric [13]. While the aforementioned conventional approaches received increasing popularity lately, normalizing flow (NF) based systems are still rare in SE. Just recently, the work of Nugraha et al. [17] proposed a flow based model combined with a VAE to learn a deep latent representation, which can be used as a deep speech prior. Yet, their approach does not model the enhancement process itself and therefore depends on the SE algorithm it is combined with. However, it was shown in areas like computer vision [18] or speech synthesis [19] that NFs have the ability to successfully generate high quality samples in their respective tasks. Consequently, this leads to the assumption, underlying embodiments of the invention, of that enhancement of speech samples can be performed directly using a flow-based system by modeling a generative process.

The idea of the embodiments according to the invention is that NFs can successfully be applied to SE by a learned mapping from an easy to a more complex probability distribution based on clean speech samples conditioned on their noisy counterpart. Therefore, in embodiments according to the invention a conventional flow-based DNN architecture is modified from speech synthesis to perform SE directly in time domain without the need of any predefined features or T-F transformations. Further in embodiments according to the invention an easy preprocessing technique of the input signal, e.g. using compression, e.g. nonlinear compression, as part of a companding process, is applied to increase the performance of SE models based on density estimation. The experimental evaluation of the proposed methods and apparatuses of embodiments according to the invention confirms these assumptions and shows close to or improved performance in comparison with current state-of-the-art systems, while surpassing the results of other time domain GAN baselines.

Fig. 10 shows an overview of the proposed system in accordance with an embodiment. The clean-noisy (x-y) pair follows the flow steps (blue-solid lines) to be mapped to a Gaussian distribution, $N(z; 0, I)$. In inference, a sample $z$ is drawn from this distribution and follows the inverted flow (red-dashed lines) together with another noisy utterance $y$ to generate the enhanced signal $\hat{x}$ (Best viewed in colors or considering the different hatching of the outlines of the blocks).

**Problem Formulation and Aspects of Embodiments**

In the following, a problem formulation and some explanations regarding aspects of embodiments according to the invention will be provided.

**Normalizing flow fundamentals**

A normalizing flow can be described as the transformation of a simple to a more complex probability distribution using an invertible and differentiable mapping [20], formally expressed as

$$\mathbf{x} = f(\mathbf{z}), \tag{16}$$

where $\mathbf{x} \in R^D$ and $\mathbf{z} \in R^D$ are D dimensional random variables, and $f$ is the function mapping $\mathbf{z}$ to $\mathbf{x}$. The invertibility of $f$ ensures, that this step can be revered to go back from $\mathbf{x}$ to $\mathbf{z}$, i.e.,

$$\mathbf{z} = f^{-1}(\mathbf{x}). \tag{17}$$

Moreover, if function $f$ is invertible and differentiable it is ensured that the composition of a sequence of 1 to $T$ transformations is also invertible.

$$\mathbf{x} = f_1 {}^{\circ} f_2 {}^{\circ} ... {}^{\circ} f_T(\mathbf{z}) \tag{18}$$

Following this, the log probability density function log $p_x(\mathbf{x})$ can be computed by a change of variables [21]:

$$\log p_x(\mathbf{x}) = \log p_z\left(f^{-1}(\mathbf{x})\right) + \log\left|\det(J(\mathbf{x}))\right| \tag{19}$$

where $J(\mathbf{x}) = \partial f^{-1}(\mathbf{x})/\partial\mathbf{x}$ defines the Jacobian consisting of all first order partial derivatives.

**Speech enhancement flow**

In the case of speech enhancement in accordance with an embodiment according to the invention a time domain mixture signal $\mathbf{y} \in R^{1\times N}$ of length $N$ composed of a clean speech utterance $\mathbf{x} \in R^{1\times N}$ and some additive disturbing background $\mathbf{n} \in R^{1\times N}$ so that

$$\mathbf{y} = \mathbf{x} + \mathbf{n}. \tag{20}$$

Further, it is defined $\mathbf{z} \in R^{1\times N}$ being sampled from a normal distribution of zero mean and unit variance, i.e.,

$$\mathbf{z} \sim N(\mathbf{z};\ 0,\ \mathrm{I}). \tag{21}$$

The proposed NF model in accordance with an embodiment according to the invention is now defined as a DNN and aims to outline the probability distribution $p_x(\mathbf{x}|\mathbf{y})$ formed by clean speech utterances $\mathbf{x}$ conditioned on the noisy mixture $\mathbf{y}$. As training objective in accordance with an embodiment according to the invention the negative log-likelihood of the previously defined probability distribution, e.g. of speech samples, can now be simply minimized:

$$\log p_x(\mathbf{x}|\mathbf{y};\ \theta) = \log p_z\left(f_\theta^{-1}(\mathbf{x})|\mathbf{y}\right) + \log\left|\det(J(\mathbf{x}))\right| \tag{22}$$

where $\theta$ represents the network parameters.

log $p_x(\mathbf{x}|\mathbf{y};\ \theta)$ is e.g. a probability distribution of speech samples to be defined, $\log p_z\left(f_\theta^{-1}(\mathbf{x})|\mathbf{y}\right)$ is e.g. a likelihood of the Gaussian function, log$|\det(J(\mathbf{x}))|$ shows a level of changing (e.g. how much we change) the Gaussian function for creating, e.g. generating, the speech samples.

In the enhancement step, in accordance with an embodiment according to the invention, it can be samples from $p_z(\mathbf{z})$ and it can be handed together with a noisy sample as input to the network. Following the inverted flow the neural network maps the random sample back to the distribution of clean utterances to create $\hat{\mathbf{x}}$, with $\hat{\mathbf{x}}$ ideally being close to the underlying $\mathbf{x}$, e.g. $\hat{\mathbf{x}} \approx \mathbf{x}$. This process is also illustrated in Figure 10.

In practice, e.g. in modelling or in a neural network, where e.g. an overall amount of neural network parameters is e.g. ~ 25 Millions, in accordance with embodiment according to the invention, during training of a neural network, signals x, y are introduced into the neural network to be trained. Output of the neural network comprises z (the processed signal after all flow blocks), log|s| (from each affine coupling layer) and log|det $W$| (from each 1x1 invertible convolution).

A loss function to be optimized:

$$-\frac{z^2}{2\sigma^2} + \sum \log s + \sum \log|\det W| = \text{number/scalar}, \tag{23}$$

$-\frac{z^2}{2\sigma^2}$ is a likelihood of the Gaussian function (see above); ( $\Sigma \log s$ + $\Sigma$ log|det W|) - (det($J(\mathbf{x})$)) (see above).

**Proposed methods in accordance with an embodiment according to the invention**

**Model architecture**

In accordance with an embodiment according to the invention the Waveglow architecture [19] was modified for speech synthesis to perform speech enhancement. Originally, this model takes speech utterances together with a corresponding Mel-spectrogram as an input for several steps of flow, learning to generate realistic speech samples based on the conditional spectrogram in-put. One flow block consists of a 1x1 invertible convolution [22] ensuring the exchange of information along channel dimension and a so-called affine coupling layer [23], which is used to ensure invertibility and efficient computing of the Jacobian determinant. Therefore, the input signal is split along the channel dimension with one half being fed to a Wavenet-like NN block, e.g. Wavenet-line affine coupling layer, defining the scaling and translation factor for the second half. To create this multi-channel input, multiple audio samples are stacked together in one group to mimic a multi-channel signal. The affine coupling layer is also where the conditional information is included. For further details on this procedure it is referred to [19]. The original Waveglow is computationally heavy (> 87 Mio. parameters), so a few architectural modifications were carried out to make it feasible to train on a single GPU and to enable the enhancement speech. In contrast to Waveglow not Mel-spectrograms were used as conditional input, in accordance with an embodiment according to the invention, but noisy time domain speech samples. Hence, since both signals are of the same dimension, no upsampling layer was needed. Additionally, the standard convolutions in the Wavenet-like blocks were replaced, in accordance with an embodiment according to the invention, by depthwise separable convolutions [24] to reduce the amount of parameters, as it was recommended in [25].

**Nonlinear input companding**

Fig. 9 shows an example of the effect of nonlinear input companding, e.g. compression, in accordance with an embodiment according to the invention. At the top a clean speech utterance is shown. (a) shows the histogram ($n_{bins}$ = 100) of the clean utterance. In (b), the effect to the values by the companding, e.g. compression, algorithm can be seen.

Since the network models the probability distribution of time domain speech utterances, it is important to inspect the range of values from which the distribution is learned from. The audio data was stored as normalized 32-bit floats in a range of *[-1, 1]*. Since time domain speech samples approximately follow a Laplacian distribution [27], it is easy to see that most values lie in a small range around zero (See Figure 9 (a)). However, especially in clean speech utterances, data samples with a higher absolute amplitude carry significant information and are in this case underrepresented. To make sure that the values, e.g. learnable amplitude values, are more evenly spread out, a non-linear companding, e.g. compression, algorithm in accordance with an embodiment according to the invention can be applied to map small amplitudes to a wider and larger amplitudes to a smaller interval. This is demonstrated in Figure 9, where one speech sample is displayed together with a histogram of values before and after applying a companding, e.g. compression, algortihm. In this sense, the companding, e.g. compression, can be understood as a sort of histogram equalization. Following this, additional experiments were conducted using $\mu$-law companding, e.g. compression, (ITU-T. Recommendation G. 711) of the input data without quantization, which is formally defined as

$$g(x) = sgn(x) \cdot \frac{\ln(1+\mu|x|)}{\ln(1+\mu)}, \tag{24}$$

where sgn() is the sign function and $\mu$ is the parameter defining the level of compression. Here, in accordance with an embodiment according to the invent, $\mu$ is set to 255 throughout the experiments, which is a common value also used in telecommunication. With respect to the learning objective, rather than to learn the distribution of clean utterances, the distribution of the compressed signal is learned. The enhanced sample can be expanded back to a regular signal afterwards reverting the μ-law transform.

## EXPERIMENTS

### Data

The dataset used in the experiments was published along with the work of Valentini et al. [28] and is a commonly used database for the development of SE algorithms. It includes 30 individual speakers from the Voice Bank corpus [29] separated into a training and a test set with 28 and 2 speakers, respectively. Both sets are balanced according to male and female participants. The training samples were mixed together with eight real noise samples from the DEMAND database [30] and two artificial (babble and speech shaped) samples according to 0, 5, 10 and 15 dB signal-to-noise-ratio (SNR). In the test set, different noise samples were selected and mixed according to SNR values of 2.5, 7.5, 12.5, and 17.5 dB ensuring that the test set only includes unseen conditions. In addition, one male and one female speaker were taken out of the training set to form a validation set for model development.

### Training strategy

The values for batch size $\in$ [4, 8, 12], number of flow blocks $\in$ [8, 12, 16] and the amount of samples grouped together as input $\in$ [8, 12, 24] were selected in a, e.g. small, hyper-parameter search. Each individual model was trained for 150 epochs to select the parameters based on the lowest validation loss. A few initial experiments using a higher batch size were conducted, however it was found that the model was not generalizing well enough. The selected model was trained further until convergence based on an early stopping mechanism of 20 epochs patience. A fine-tuning step followed using a decreased learning rate and the same early stopping criterion.

### Model settings

As a result of the parameter search the model was built with 16 flow blocks, a group of 12 samples as input and a batch size of 4. The learning rate was set to $3 \times 10^{-4}$ in the initial training step using the Adam [31] optimizer and weight normalization [32]. For fine-tuning the learning rate was lowered to $3 \times 10^{-5}$. As training input 1 s long chunks (sampling rate $f_s$ = 16 kHz) were randomly extracted from each audio file. The standard deviation of the Gaussian distribution was set to $\sigma$ = 1.0. Similar to other NF models [33] the effect was experienced that using a lower value for $\sigma$ in inference leads to higher quality output, which is why it was set to $\sigma$ = 0.9 in inference. According to the original Waveglow architecture Wavenet-like blocks with 8 layers of dilated convolutions, 512 channels as residual connections and 256 channels in the skip connections were used in the affine coupling layers. In addition, after every 4 coupling layers 2 channels were passed to the loss function to form a multi-scale architecture.

### Evaluation

in order to compare the approach in accordance with embodiments according to the invention to recent works in the field the following evaluation metrics were used:

- (i) Perceptual evaluation of speech quality (PESO) in the recommended wideband version in ITU-T P.862.2 (from -0.5 to 4.5).

- Three mean opinion score (from 1 to 5) metrics [34]: (ii) pre-diction of the signal distortion (CSIG), (iii) prediction of the background intrusiveness (CBAK) and (iv) prediction of the overall speech quality (COVL).

- The segmental SNR (segSNR) [35] improvement (from 0 to $\infty$).

As a baseline to the proposed methods in accordance with embodiments according to the invention two generative time domain approaches were defined, namely the SEGAN [11] and the improved deep SEGAN (DSEGAN) [16] models, since they were evaluated with the same database and metrics. Further, it was compared against two other state-of-the-art GAN based systems, namely the MMSE-GAN [26] and Metric-GAN [13], which are working on T-F masks. It is noted, that there are several discriminative approaches, e.g. [9, 36, 37], reporting a higher performance on this dataset. However, the focus of this work was on generative models, which is why they are not included in the comparison.

## EXPERIMENTAL RESULTS

The experimental results are displayed in Table 1 shown in Fig. 11. Table 1 shows evaluation results using objective evaluation metrics. SE-Flow represents the proposed flow-based approach and SE-Flow-$\mu$ the approach together with $\mu$-law companding, e.g. including compression and expansion, of the input data. The values of all comparing methods are taken from the corresponding papers.

As is shown in the table, in between the two proposed flow-based experiments, the model using $\mu$-companding, e.g. including compression and expansion, shows better results in all metrics. This demonstrates the effectiveness of this easy preprocessing and correspondingly post-processing technique for modeling the distribution of time domain signals. An illustration of the enhancement capabilities can also be seen in Figure 12.

Fig. 12 shows example spectrograms to show the performance of the proposed system. In (a), a noisy speech utterance at 2.5 dB (Signal-to-noise ratio, SNR) is displayed. (b) shows the corresponding clean utterance. In (c) and (d) the results of the proposed flow-based systems in accordance with an embodiment according to the invention are shown.

Comparing the spectrogram of the two proposed systems in accordance with an embodiment according to the invention, it appears that the SE-Flow-$\mu$ is able to capture more fine grained speech parts with less background leaking. It is also to be noted, that the breathing sound at the end of the displayed example is not recovered by the models in accordance with an embodiment according to the invention, which emphasizes that the proposed models in accordance with an embodiment according to the invention focus on real speech samples.

Further, it is visible in the flow-based examples that when speech is active, more noise-like frequency content is present in the higher frequencies compared to the clean signal. This can be explained by the Gaussian sampling which is not completely eliminated during inference.

In comparison to the SEGAN baseline proposed methods and apparatuses in accordance with embodiments according to the invention show superior performance throughout all metrics by a large margin. It is to be noted, that only for SEGAN the segSNR performance can be seen, because it was not evaluated by the other methods. Looking at DSEGAN it can be seen that the proposed SE-Flow reaches the compared performance in CSIG, while showing slightly lower values in the other metrics. However, the SE-Flow-$\mu$ based system or method or apparatus in accordance with an embodiment according to the invention still performs better in all metrics besides COVL. Thus, within the time-domain approaches the proposed flow-based model in accordance with an embodiment according to the invention seems to better model the generative process from a noisy to an enhanced signal. With regards to MMSE-GAN it is observed that the approach has a similar performance with a slight edge towards MMSE-GAN, although no additional regularization technique was implemented here. However, the Metric-GAN shows superior results compared to the pro-posed approaches with regards to all displayed metrics. However, it is important to notice that this model in accordance with an embodiment according to the invention was directly optimized according to the PESO metric, so a good performance in embodiments according to the invention would be expected. Consequently, connecting the training with direct optimization of the evaluation metric might also be an effective way to improve the system or method or apparatus in accordance with embodiments according to the invention.

## CONCLUSIONS

In this disclosure a normalizing flow based speech enhancement method in accordance with an embodiment according to the invention was introduced. The model in accordance with an embodiment according to the invention allows for density estimation of clean speech samples given their noisy counterparts and signal enhancement via generative inference. A simple non-linear companding, e.g. compression or expansion, technique in accordance with an embodiment according to the invention was demonstrated to be an effective (optional) preprocessing, or e.g. post-processing, tool to increase the enhancement outcome. The proposed systems and methods and apparatuses in accordance with embodiments according to the invention surpass the performance of other time-domain GAN-based baselines while closing up to state-of-the-art T-F techniques. Furthers explorations of different techniques in the coupling layer, as well as, a combination of time and frequency domain signals could be implemented in accordance with embodiments according to the invention.

Moreover, it should be noted that the embodiments and procedures may be used as described in this section (and also in the sections "Problem Formulation", "Normalizing Flow Fundamentals", "Speech Enhancement Flow", "Proposed Methods", "Model Architecture", Nonlinear Input Companding", "Experiments", "Data", "Training Strategy", "Model Settings", "Evaluation" and "Experimental Results"), and may optionally be supplemented by any of the features, functionalities and details disclosed herein (in this entire document), both individually and taken in combination.

However, the features, functionalities and details described in any other chapters can also, optionally, be introduced into the embodiments according to the present invention.

Also, the embodiments described in the above mentioned chapters can be used individually, and can also be supplemented by any of the features, functionalities and details in another chapter.

Also, it should be noted that individual aspects described herein can be used individually or in combination. Thus, details can be added to each of said individual aspects without adding details to another one of said aspects.

In particular, embodiments are also described in the claims. The embodiments described in the claims can optionally be supplemented by any of the features, functionalities and details as described herein, both individually and in combination.

Moreover, features and functionalities disclosed herein relating to a method can also be used in an apparatus (configured to perform such functionality). Furthermore, any features and functionalities disclosed herein with respect to an apparatus can also be used in a corresponding method. In other words, the methods disclosed herein can be supplemented by any of the features and functionalities described with respect to the apparatuses.

Also, any of the features and functionalities described herein can be implemented in hardware or in software, or using a combination of hardware and software, as will be described in the section "implementation alternatives".

To further conclude, embodiments according to the invention create normalizing flow (NF) based systems for use in the speech enhancement field (e.g. builds a speech enhancement framework using normalizing flows directly modeling the enhancement process, which includes e.g. learning probability distribution of clean speech).

To further conclude, embodiments according to the invention create a concept where a flow-based system is to be applied in speech enhancement, particularly by performing audio signal enhancement directly using a flow-based system and independently of other algorithms to be combined with, without reducing an audio signal enhancement performance and quality of a resulting signal.

Moreover, embodiments according to the invention provide a trade-off between an effective modeling of a flow-based audio signal processing using neural networks and audio signal enhancement capabilities.

Implementation Alternatives

Although some aspects are described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, one or more of the most important method steps may be executed by such an apparatus.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The apparatus described herein may be implemented using a hardware apparatus, or using a computer, or using a combination of a hardware apparatus and a computer.

The apparatus described herein, or any components of the apparatus described herein, may be implemented at least partially in hardware and/or in software.

The methods described herein may be performed using a hardware apparatus, or using a computer, or using a combination of a hardware apparatus and a computer.

The methods described herein, or any components of the apparatus described herein, may be performed at least partially by hardware and/or by software.

The herein described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

References:

[1] P Loizou, Speech Enhancement: Theory and Practice, CRC Press, 2 edition, 2013.

[2] K. Borisagar, D. Thanki, and B. Sedani, Speech Enhancement Techniques for Digital Hearing Aids, Springer International Publishing, 2018.

[3] A.H. Moore, P. Peso Parada, and P.A. Naylor, "Speech enhancement for robust automatic speech recognition: Evaluation using a baseline system and instrumental measures," Computer Speech & Language, vol. 46, pp. 574 - 584, 2017.

[4] J. Lim and A. Oppenheim, "All-pole modeling of degraded speech," IEEE Transactions on Acoustics, Speech, and Signal Processing, vol. 26, no. 3, pp. 197-210, 1978.

[5] S. Boll, "Suppression of acoustic noise in speech using spectral subtraction," IEEE Transactions on Acoustics, Speech, and Signal Processing, vol. 27, no. 2, pp. 113-120, 1979.

[6] Y. Ephraim and H.L. Van Trees, "A signal subspace approach for speech enhancement," IEEE Transactions on Speech and Audio Processing, vol. 3, no. 4, pp. 251-266, 1995.

[7] Y. Ephraim and D. Malah, "Speech enhancement using a minimum mean-square error log-spectral amplitude estimator," IEEE Transactions Acoustics, Speech and Signal Processing, vol. 33, pp. 443 - 445, 05 1985.

[8] Y. Xu, J. Du, L. Dai, and C. Lee, "A regression approach to speech enhancement based on deep neural networks," IEEE/ACM Transactions on Audio, Speech, and Language Processing, vol. 23, no. 1, pp. 7-19, 2015.

[9] F. Germain, Q. Chen, and V. Koltun, "Speech denoising with deep feature losses," in Proc. Interspeech Conf, 2019, pp. 2723-2727.

[10] K. Qian, Y. Zhang, S. Chang, X. Yang, D. Florencio, and M. Hasegawa-Johnson, "Speech enhancement using bayesian wavenet," in Proc. Interspeech Conf., 2017, pp. 2013-2017.

[11] S. Pascual, A. Bonafonte, and J. Serra', "Segan: Speech enhancement generative adversarial network," in Proc. Inter-speech Conf., 2017, pp. 3642-3646.

[12] M. H. Soni, N. Shah, and H. A. Patil, "Time-frequency masking-based speech enhancement using generative adversarial network," in Proc. IEEE Intl. Conf. on Acoustics, Speech and Signal Processing (ICASSP), 2018, pp. 5039-5043.

[13] S.-W. Fu, C.-F. Liao, Y. Tsao, and S.-D. Lin, "Metricgan: Generative adversarial networks based black-box metric scores optimization for speech enhancement," in Proc. Intl. Conf. Ma-chine Learning (ICML), 2019, pp. 2031-2041.

[14] S. Leglaive, X. Alameda-Pineda, L. Girin, and R. Horaud, "A Recurrent Variational Autoencoder for Speech Enhancement," in Proc. IEEE Intl. Conf. on Acoustics, Speech and Signal Processing (ICASSP), 2020, pp. 371-375.

[15] N. Adiga, Y. Pantazis, V. Tsiaras, and Y. Stylianou, "Speech enhancement for noise-robust speech synthesis using wasserstein gan," in Proc. Interspeech Conf, 2019, pp. 1821-1825.

[16] H. Phan, I. V. McLoughlin, L. Pham, O. Y. Chen, P. Koch, M. De Vos, and A. Mertins, "improving gans for speech enhancement," IEEE Signal Processing Letters, vol. 27, pp. 1700-1704, 2020.

[17] A. A. Nugraha, K. Sekiguchi, and K. Yoshii, "A flow-based deep latent variable model for speech spectrogram modeling and enhancement," IEEE/ACM Transactions on Audio, Speech, and Language Processing, vol. 28, pp. 1104-1117, 2020.

[18] J. Ho, X. Chen, A. Srinivas, Y. Duan, and P. Abbeel, "Flow++: Improving flow-based generative models with variational dequantization and architecture design," in Proc. of Machine Learning Research, 2019, vol. 97, pp. 2722-2730.

[19] R. Prenger, R. Valle, and B. Catanzaro, "Waveglow: A Flow-based Generative Network for Speech Synthesis," in Proc. IEEE Intl. Conf. on Acoustics, Speech and Signal Processing (ICASSP), 2019, pp. 3617-3621.

[20] I. Kobyzev, S. Prince, and M. Brubaker, "Normalizing flows: An introduction and review of current methods," IEEE Trans-actions on Pattern Analysis and Machine Intelligence, pp. 1-1, 2020.

[21] G. Papamakarios, E.T. Nalisnick, D.J. Rezende, S. Mohamed, and B Lakshminarayanan, "Normalizing flows for probabilistic modeling and inference," in arXiv:1912.02762, 2019.

[22] D.P. Kingma and P. Dhariwal, "Glow: Generative flow with invertible 1x1 convolutions," in Advances in Neural Information Processing Systems 31, 2018, pp. 10215-10224.

[23] L Dinh, J. Sohl-Dickstein, and S. Bengio, "Density estimation using real NVP," in 5th Int. Conf. on Learning Representations, ICLR, 2017.

[24] F. Chollet, "Xception: Deep learning with depthwise separable convolutions," in IEEE Conf, on Computer Vision and Pattern Recognition (CVPR), 2017, pp. 1800-1807.

[25] B. Zhai, T. Gao, F. Xue, D. Rothchild, B. Wu, J. Gonzalez, and K. Keutzer, "Squeezewave: Extremely lightweight vocoders for on-device speech synthesis," in arXiv:2001.05685, 2020.

[26] D. Rethage, J. Pons, and X. Serra, "A wavenet for speech de-noising," in Proc. IEEE Intl. Conf. on Acoustics, Speech and Signal Processing (ICASSP), 2018, pp. 5069-5073.

[27] J. Jensen, I. Batina, R. C Hendriks, and R. Heusdens, "A study of the distribution of time-domain speech samples and discrete fourier coefficients," in Proc. SPS-DARTS, 2005, vol. 1, pp. 155-158.

[28] C. Valentini Botinhao, X. Wang, S. Takaki, and J. Yamagishi, "Speech enhancement for a noise-robust text-to-speech synthesis system using deep recurrent neural networks," in Proc. In-terspeech Conf, 2016, pp. 352-356.

[29] C. Veaux, J. Yamagishi, and S. King, "The voice bank corpus: Design, collection and data analysis of a large regional accent speech database," in Int. Conf. Oriental COCOSDA held jointly with the Conf. on Asian Spoken Language Research and Evaluation (O-COCOSDA/CASLRE), 2013, pp. 1-4.

[30] J. Thiemann, N. Ito, and E. Vincent, "The diverse environments multi-channel acoustic noise database (demand): A database of multichannel environmental noise recordings," Proc. of Meetings on Acoustics, vol. 19, no. 1, pp. 035081, 2013.

[31] D.P. Kingma and J. Ba, "Adam: A method for stochastic optimization," in 3rd Int. Conf. on Learning Representations, ICLR, 2015.

[32] T. Salimans and D. P. Kingma, "Weight normalization: A simple reparameterization to accelerate training of deep neural net-works," in Advances in Neural Information Processing Systems 29, 2016, pp. 901-909.

[33] M. Pariente, A. Deleforge, and E. Vincent, "A statistically principled and computationally efficient approach to speech enhancement using variational autoencoders," in Proc. Interspeech Conf., 2019, pp. 3158-3162.

[34] Y. Hu and P. Loizou, "Evaluation of objective quality measures for speech enhancement," IEEE Transactions on Audio, Speech, and Language Processing, vol. 16, pp. 229 - 238, 02 2008.

[35] J. Hansen and B. Pellom, "An effective quality evaluation protocol for speech enhancement algorithms," in ICSLP, 1998.

[36] R. Giri, U. Isik, and A. A. Krishnaswamy, "Attention wave-u-net for speech enhancement," in Proc. IEEE Workshop on Applications of Signal Processing to Audio and Acoustics, 2019, pp. 249-253.

[37] Y. Koizumi, K. Yatabe, M. Delcroix, Y. Masuyama, and D. Takeuchi, "Speech enhancement using self-adaptation and multi-head self-attention," in Proc. IEEE Intl. Conf. on Acoustics, Speech and Signal Processing (ICASSP), 2020, pp. 181- 185.

## Claims

1. An apparatus (100, 200, 400) for providing a processed audio signal ($\hat{x}$, 160, 260, 460) on the basis of an input audio signal (y, 130, 230, 430),

   wherein the apparatus (100, 200, 400) is configured to process a noise signal (z, 120, 220, 420), or a signal derived from the noise signal (z, 120, 220, 420), using one or more flow blocks ($110_{1...N}$, $210_{1...N}$, $410_{1...N}$) in order to obtain the processed audio signal ($\hat{x}$, 160, 260, 460),
   wherein the apparatus (100, 200, 400) is configured to adapt a processing performed using the one or more flow blocks ($110_{1...N}$, $210_{1...N}$, $410_{1...N}$) in dependence on the input audio signal (y, 130, 230, 430) and using a neural network.

2. The apparatus (100, 200, 400) according to claim 1, wherein the input audio signal (y, 130, 230, 430) is represented by a set of time domain audio samples.

3. The apparatus (100, 200, 400) according to any of claims 1 or 2, wherein a neural network associated with a given flow block of the one or more flow blocks ($110_{1...N}$, $210_{1...N}$, $410_{1...N}$) is configured to determine one or more processing parameters for the given flow block in dependence on the noise signal (z, 120, 220, 420), or a signal derived from the noise signal (z, 120, 220, 420), and in dependence on the input audio signal (y, 130, 230, 430).

4. The apparatus (100, 200, 400) according to any of claims 1 to 3, wherein a neural network associated with a given flow block is configured to provide one or more parameters of an affine processing, which is applied to the noise signal (z, 120, 220, 420), or to a processed version of the noise signal, or to a portion of the noise signal (z, 120, 220, 420), or to a portion of a processed version of the noise signal during the processing.

5. The apparatus (100, 200, 400) according to claim 4, wherein a neural network associated with the given flow block is configured to determine one or more parameters of the affine processing, in dependence on a first part ($z_1$) of a flow block input signal (z) and in dependence on the input audio signal (y, 130, 230, 430), and

   wherein an affine processing associated with the given flow block is configured to apply the determined parameters to a second part ($z_2$) of the flow block input signal ($z$), to obtain an affinely processed signal ($\widehat{z_2}$); and

wherein the first part ($z_1$) of the flow block input signal ($z$) and the affinely processed signal ($\widehat{z_2}$) form a flow block output signal ($z_{new}$) of the given flow block.

6. The apparatus (100, 200, 400) according to claim 5, wherein the neural network associated with the given flow block includes a depthwise separable convolution in the affine processing associated with the given flow block.

7. The apparatus (100, 200, 400) according to any of claims 5 or 6, wherein the apparatus (100, 200, 400) is configured to apply an invertible convolution to the flow block output signal ($z_{new}$) of the given flow block, to obtain a processed flow block output signal ($z'_{new}$).

8. The apparatus (100, 200, 400) according to any of the previous claims, wherein the apparatus (100, 200, 400) is configured to apply a nonlinear compression (490) to the input audio signal ($y$, 130, 230, 430) prior to processing the noise signal ($z$, 120, 220, 420) in dependence on the input audio signal ($y$, 130, 230, 430).

9. The apparatus (100, 200, 400) according to claim 8, wherein the apparatus (100, 200, 400) is configured to apply a $\mu$-law transformation as the nonlinear compression (490) to the input audio signal ($y$, 130, 230, 430).

10. The apparatus (100, 200, 400) according to any of claims 8 or 9, wherein the apparatus (100, 200, 400) is configured to apply a transformation according to

$$g(y) = sgn(y) \cdot \frac{\ln(1+\mu|y|)}{\ln(1+\mu)};$$

to the input audio signal ($y$, 130, 230, 430),
wherein sgn() is a sign function;
$\mu$ is a parameter defining a level of compression.

11. The apparatus (100, 200, 400) according to any of the previous claims, wherein the apparatus (100, 200, 400) is configured to apply a nonlinear expansion (415) to the processed audio signal ($\hat{x}$, 160, 260, 460).

12. The apparatus (100, 200, 400) according to claim 11, wherein the apparatus (100, 200, 400) is configured to apply an inverse $\mu$-law transformation as the nonlinear expansion (415) to the processed audio signal ($x$, 160, 260, 460).

13. The apparatus (100, 200, 400) according to any of claims 11 or 12, wherein the apparatus (100, 200, 400) is configured to apply a transformation according to

$$g^{-1}(\hat{x}) = sgn(\hat{x}) \cdot \left(\frac{(1+\mu)^{\hat{x}}-1}{\mu}\right);$$

to the processed audio signal ($x$, 160, 260, 460),
wherein sgn() is a sign function;
$\mu$ is a parameter defining a level of expansion.

14. The apparatus (100, 200, 400) according to any of the previous claims, wherein neural network parameters of the neural network for processing the noise signal ($z$, 120, 220, 420), or the signal derived from the noise signal, are obtained using

a processing of a training audio signal or a processed version thereof, in one or more training flow blocks in order to obtain a training result signal, wherein a processing of the training audio signal or of the processed version thereof using the one or more training flow blocks is adapted in dependence on a distorted version of the training audio signal and using the neural network, and
wherein the neural network parameters of the neural network are determined, such that a characteristic of the training result signal approximates or comprises a predetermined characteristic.

15. The apparatus (100, 200, 400) according to any of the previous claims, wherein the apparatus (100, 200, 400) is configured to provide neural network parameters of the neural network for processing the noise signal, or the signal derived from the noise signal,

wherein the apparatus (100, 200, 400) is configured to process a training audio signal or a processed version thereof, using the one or more flow blocks in order to obtain a training result signal, and

wherein the apparatus (100, 200, 400) is configured to adapt a processing of the training audio signal or of the processed version thereof which is performed using the one or more flow blocks in dependence on a distorted version of the training audio signal and using the neural network, and

wherein the apparatus (100, 200, 400) is configured to determine neural network parameters of the neural network, such that a characteristic of the training result signal approximates or comprises a predetermined characteristic.

16. The apparatus (100, 200, 400) according to any of the previous claims, wherein the apparatus comprises an apparatus for providing neural network parameters,

wherein the apparatus (100, 200, 400) for providing neural network parameters is configured to provide neural network parameters of the neural network for processing the noise signal, or the signal derived from the noise signal,

wherein the apparatus (100, 200, 400) for providing neural network parameters is configured to process a training audio signal or a processed version thereof, using one or more training flow blocks in order to obtain a training result signal, and

wherein the apparatus (100, 200, 400) for providing neural network parameters is configured to adapt a processing of the training audio signal or the processed version thereof which is performed using the one or more flow blocks in dependence on a distorted version of the training audio signal and using the neural network;

wherein the apparatus (100, 200, 400) is configured to determine neural network parameters of the neural network such that a characteristic of the training result signal approximates or comprises a predetermined characteristic.

17. The apparatus (100, 200, 400) according to any of the previous claims, wherein the one or more flow blocks ($110_{1...N}$, $210_{1...N}$, $410_{1...N}$) are configured to synthesize the processed audio signal ($\hat{x}$, 160, 260, 460) on the basis of the noise signal (z, 120, 220, 420) under the guidance of the input audio signal (y, 130, 230, 430).

18. The apparatus (100, 200, 400) according to any of the previous claims, wherein the one or more flow blocks ($110_{1...N}$, $210_{1...N}$, $410_{1...N}$) are configured to synthesize the processed audio signal ($\hat{x}$, 160, 260, 460) on the basis of the noise signal (z, 120, 220, 420) under the guidance of the input audio signal (y, 130, 230, 430) using the affine processing of sample values of the noise signal (z, 120, 220, 420), or of a signal derived from the noise signal,

wherein processing parameters of the affine processing are determined on the basis of sample values of the input audio signal (y, 130, 230, 430) using the neural network.

19. The apparatus (100, 200, 400) according to any of the previous claims, wherein the apparatus (100, 200, 400) is configured to perform a normalizing flow processing, in order to derive the processed audio signal from the noise signal (z, 120, 220, 420).

20. A method for providing a processed audio signal on the basis of an input audio signal (y, 130, 230, 430),

wherein the method comprises processing a noise signal (z, 120, 220, 420), or a signal derived from the noise signal, using one or more flow blocks ($110_{1...N}$, $210_{1...N}$, $410_{1...N}$), in order to obtain the processed audio signal ($\hat{x}$, 160, 260, 460);

wherein the method comprises adapting the processing performed using the one or more flow blocks ($\hat{x}$, 160, 260, 460) in dependence on the input audio signal (y, 130, 230, 430) and using a neural network.

21. An apparatus (500, 600, 800) for providing neural network parameters for an audio processing,

wherein the apparatus (500, 600, 800) is configured to process a training audio signal (x, 505, 605, 805), or a processed version thereof, using one or more flow blocks ($510_{1...N}$, $610_{1...N}$, $810_{1...N}$) in order to obtain a training result signal (z, 520, 620, 820),
wherein the apparatus (500, 600, 800) is configured to adapt a processing performed using the one or more flow blocks ($510_{1...N}$, $610_{1...N}$, $810_{1...N}$) in dependence on a distorted version of the training audio signal (y, 530, 630, 830) and using a neural network;
wherein the apparatus (500, 600, 800) is configured to determine neural network parameters of the neural network, such that a characteristic of the training result signal (z, 520, 620, 820) approximates or comprises a predetermined characteristic.

22. The apparatus (500, 600, 800) according to claim 21,

wherein the apparatus (500, 600, 800) is configured to evaluate a cost function in dependence on characteristics of the obtained training result signal (z, 520, 620, 820), and
wherein the apparatus (500, 600, 800) is configured to determine neural network parameters to reduce or minimize a cost defined by the cost function.

23. The apparatus (500, 600, 800) according to any of claims 21 or 22, wherein the training audio signal (x, 505, 605, 805) and/or the distorted version of the training audio signal (y, 530, 630, 830) is represented by a set of time domain audio samples.

24. The apparatus (500, 600, 800) according to any of claims 21 to 23, wherein a neural network associated with a given flow block of the one or more flow blocks ($510_{1...N}$, $610_{1...N}$, $810_{1...N}$) is configured to determine one or more processing parameters for the given flow block in dependence on the training audio signal (x, 505, 605, 805), or a signal derived from the training audio signal, and in dependence on the distorted version of the training audio signal (y, 530, 630, 830).

25. The apparatus (500, 600, 800) according to any of claims 21 to 24, wherein a neural network associated with a given flow block is configured to provide one or more parameters of an affine processing, which is applied to the training audio signal (x, 505, 605, 805), or to a processed version of the training audio signal, or to a portion of the training audio signal (x, 505, 605, 805), or to a portion of a processed version of the training audio signal during the processing.

26. The apparatus (500, 600, 800) according to claim 25, wherein a neural network associated with the given flow block is configured to determine one or more parameters of the affine processing, in dependence on a first part ($x_1$) of a flow block input signal (x) or in dependence on a first part of a pre-processed flow block input signal (x') and in dependence on the distorted version of the training audio signal (y, 530, 630, 830), and

wherein an affine processing associated with the given flow block is configured to apply the determined parameters to a second part ($x_2$) of the flow block input signal (x) or to a second part of the pre-processed flow block input signal (x'), to obtain an affinely processed signal ( $\widehat{x_2}$ ); and
wherein the first part ($x_1$) of the flow block input signal (x) or of the pre-processed flow block input signal (x') and the affinely processed signal ( $\widehat{x_2}$ ) form a flow block output signal $x_{new}$ of the given flow block.

27. The apparatus (100, 200, 400) according to claim 26, wherein the neural network associated with the given flow block includes a depthwise separable convolution in the affine processing associated with the given flow block.

28. The apparatus (500, 600, 800) according to any of claims 26 or 27, wherein the apparatus (500, 600, 800) is configured to apply an invertible convolution to the flow block input signal (x) of the given flow block to obtain the pre-processed flow block input signal (x').

29. The apparatus (500, 600, 800) according to any of claims 21 to 28, wherein the apparatus (500, 600, 800) is configured to apply a nonlinear input compression (815) to the training audio signal (x, 505, 605, 805) prior to processing the training audio signal (x, 505, 605, 805).

30. The apparatus (500, 600, 800) according to claim 29, wherein the apparatus (500, 600, 800) is configured to apply a $\mu$-law transformation as the nonlinear input compression (815) to the training audio signal (x, 505, 605, 805).

31. The apparatus (500, 600, 800) according to any of claims 29 or 30, wherein the apparatus (500, 600, 800) is configured to apply a transformation according to

$$g(x) = sgn(x) \cdot \frac{\ln(1+\mu|x|)}{\ln(1+\mu)};$$

to the training audio signal (x, 505, 605, 805),
wherein sgn() is a sign function;
$\mu$ is a parameter defining a level of compression.

32. The apparatus (500, 600, 800) according to any of claims 21 to 31, wherein the apparatus (500, 600, 800) is configured to apply a nonlinear input compression (815) to the distorted version of the training audio signal (y, 530, 630, 830) prior to processing the training audio signal (x, 505, 605, 805) in dependence on the distorted version of the training audio signal (y, 530, 630, 830).

33. The apparatus (500, 600, 800) according to claim 32, wherein the apparatus (500, 600, 800) is configured to apply a $\mu$-law transformation as the nonlinear input compression (815) to the distorted version of the training audio signal (y, 530, 630, 830).

34. The apparatus (500, 600, 800) according to any of claims 32 or 33, wherein the apparatus (500, 600, 800) is configured to apply a transformation according to

$$g(y) = sgn(y) \cdot \frac{\ln(1+\mu|y|)}{\ln(1+\mu)};$$

to the distorted version of the training audio signal (y, 530, 630, 830),
wherein sgn() is a sign function;
$\mu$ is a parameter defining a level of compression.

35. The apparatus (500, 600, 800) according to any of claims 21 to 34, wherein the one or more flow blocks ($510_{1...N}$, $610_{1...N}$, $810_{1...N}$) are configured to convert the training audio signal (x, 505, 605, 805) into the training result signal (z, 520, 620, 820).

36. The apparatus (500, 600, 800) according to any of claims 21 to 35, wherein the one or more flow blocks ($510_{1...N}$, $610_{1...N}$, $810_{1...N}$) are adjusted to convert the training audio signal (x, 505, 605, 805) into the training result signal (z, 520, 620, 820) under the guidance of the distorted version of the training audio signal (y, 530, 630, 830), using the affine processing of sample values of the training audio signal (x, 505, 605, 805), or of a signal derived from the training audio signal (x, 505, 605, 805),
wherein processing parameters of the affine processing are determined on the basis of sample values of the distorted version of the training audio signal (y, 530, 630, 830) using the neural network.

37. The apparatus (500, 600, 800) according to any of claims 21 to 36, wherein the apparatus (500, 600, 800) is configured to perform a normalizing flow processing, in order to derive the training result signal (z, 520, 620, 820) from the training audio signal (x, 505, 605, 805).

38. A method for providing neural network parameters for an audio processing,

wherein the method comprises processing a training audio signal (x, 505, 605, 805), or a processed version thereof, using one or more flow blocks ($510_{1...N}$, $610_{1...N}$, $810_{1...N}$) in order to obtain a training result signal (z, 520, 620, 820),
wherein the method comprises adapting the processing performed using the one or more flow blocks ($510_{1...N}$, $610_{1...N}$, $810_{1...N}$) in dependence on a distorted version of the training audio signal (y, 530, 630, 830) and using a neural network,
wherein the method comprises determining the neural network parameters of the neural network, such that a characteristic of the training result signal (z, 520, 620, 820) approximates or comprises a predetermined characteristic.

**39.** Computer program having a program code which, when the program is executed by a computer, causes the computer to carry out the method according to any of claims 20 or 38.

**Patentansprüche**

**1.** Eine Vorrichtung (100, 200, 400) zum Bereitstellen eines verarbeiteten Audiosignals ($\hat{x}$, 160, 260, 460) auf der Basis eines Eingangsaudiosignals (y, 130, 230, 430),

wobei die Vorrichtung (100, 200, 300) dazu konfiguriert ist, ein Rauschsignal (z, 120, 220, 420) oder ein aus dem Rauschsignal (z, 120, 220, 420) abgeleitetes Signal, unter Verwendung von einem oder mehreren Flussblöcken ($110_{1...N}$, $210_{1...N}$, $410_{1...N}$) zu verarbeiten, um das verarbeitete Audiosignal ($\hat{x}$, 160, 260, 460) zu erhalten,

wobei die Vorrichtung (100, 200, 400) dazu konfiguriert ist, eine Verarbeitung, die unter Verwendung des einen oder der mehreren Flussblöcke ($110_{1...N}$, $210_{1...N}$, $410_{1...N}$) durchgeführt wird, in Abhängigkeit von dem Eingangsaudiosignal (y, 130, 230, 430) und unter Verwendung eines neuronalen Netzwerks anzupassen.

**2.** Die Vorrichtung (100, 200, 400) gemäß Anspruch 1, bei der das Eingangsaudiosignal (y, 130, 230, 430) durch einen Satz von Zeitbereichsaudioabtastwerten dargestellt ist.

**3.** Die Vorrichtung (100, 200, 400) gemäß einem der Ansprüche 1 oder 2, bei der ein neuronales Netzwerk, das einem gegebenen Flussblock des einen oder der mehreren Flussblöcke ($110_{1...N}$, $210_{1...N}$, $410_{1...N}$) zugeordnet ist, dazu konfiguriert ist, einen oder mehrere Verarbeitungsparameter für den gegebenen Flussblock in Abhängigkeit von dem Rauschsignal (z, 120, 220, 420), oder einem aus dem Rauschsignal (z, 120, 220, 420) abgeleiteten Signal, und in Abhängigkeit von dem Eingangsaudiosignal (y, 130, 230, 430) zu bestimmen.

**4.** Die Vorrichtung (100, 200, 400) gemäß einem der Ansprüche 1 bis 3, bei der ein neuronales Netzwerk, das einem gegebenen Flussblock zugeordnet ist, dazu konfiguriert ist, einen oder mehrere Parameter einer affinen Verarbeitung bereitzustellen, die auf das Rauschsignal (z, 120, 220, 420), oder auf eine verarbeitete Version des Rauschsignals, oder auf einen Abschnitt des Rauschsignals (z, 120, 220, 420), oder auf einen Abschnitt einer verarbeiteten Version des Rauschsignals während der Verarbeitung angewendet werden.

**5.** Die Vorrichtung (100, 200, 400) gemäß Anspruch 4, bei der ein neuronales Netzwerk, das dem gegebenen Flussblock zugeordnet ist, dazu konfiguriert ist, in Abhängigkeit von einem ersten Teil ($z_1$) eines Flussblockeingangssignals (z) und in Abhängigkeit von dem Eingangsaudiosignal (y, 130, 230, 430) einen oder mehrere Parameter der affinen Verarbeitung zu bestimmen, und

wobei eine affine Verarbeitung, die dem gegebenen Flussblock zugeordnet ist, dazu konfiguriert ist, die bestimmten Parameter auf einen zweiten Teil ($z_2$) des Flussblockeingangssignals (z) anzuwenden, um ein affin verarbeitetes Signal ( $\widehat{z_2}$ ) zu erhalten; und

wobei der erste Teil ($z_1$) des Flussblockeingangssignals (z) und das affin verarbeitete Signal ( $\widehat{z_2}$ ) ein Flussblockausgangssignal ($z_{new}$) des gegebenen Flussblocks bilden.

**6.** Die Vorrichtung (100, 200, 400) gemäß Anspruch 5, bei der das neuronale Netzwerk, das dem gegebenen Flussblock zugeordnet ist, eine tiefenweise trennbare Faltung in der affinen Verarbeitung umfasst, die dem gegebenen Flussblock zugeordnet ist.

**7.** Die Vorrichtung (100, 200, 400) gemäß einem der Ansprüche 5 oder 6, wobei die Vorrichtung (100, 200, 400) dazu konfiguriert ist, eine umkehrbare Faltung auf das Flussblockausgangssignal ($z_{new}$) des gegebenen Flussblocks anzuwenden, um ein verarbeitetes Flussblockausgangssignal ($z'_{new}$) zu erhalten.

**8.** Die Vorrichtung (100, 200, 400) gemäß einem der vorhergehenden Ansprüche, wobei die Vorrichtung (100, 200, 400) dazu konfiguriert ist, vor dem Verarbeiten des Rauschsignals (z, 120, 220, 420) in Abhängigkeit von dem Eingangsaudiosignal (y, 130, 230, 430) eine nichtlineare Kompression (490) auf das Eingangsaudiosignal (y, 130, 230, 430) anzuwenden.

9. Die Vorrichtung (100, 200, 400) gemäß Anspruch 8, wobei die Vorrichtung (100, 200, 400) dazu konfiguriert ist, eine µ-Law-Transformation als die nichtlineare Kompression (490) auf das Eingangsaudiosignal (y, 130, 230, 430) anzuwenden.

10. Die Vorrichtung (100, 200, 400) gemäß einem der Ansprüche 8 oder 9, wobei die Vorrichtung (100, 200, 400) dazu konfiguriert ist, eine Transformation gemäß

$$g(y) = sgn(y) \cdot \frac{\ln(1 + \mu|y|)}{\ln(1 + \mu)}$$

auf das Eingangsaudiosignal (y, 130, 230, 430) anzuwenden,
wobei sgn() eine Vorzeichenfunktion ist;
wobei µ ein Parameter ist, der einen Kompressionsgrad definiert.

11. Die Vorrichtung (100, 200, 400) gemäß einem der vorhergehenden Ansprüche, wobei die Vorrichtung (100, 200, 400) dazu konfiguriert ist, eine nichtlineare Expansion (415) auf das verarbeitete Audiosignal ($\hat{x}$, 160, 260, 460) anzuwenden.

12. Die Vorrichtung (100, 200, 400) gemäß Anspruch 11, wobei die Vorrichtung (100, 200, 400) dazu konfiguriert ist, eine inverse µ-Law-Transformation als die nichtlineare Expansion (415) auf das verarbeitete Audiosignal ($\hat{x}$, 160, 260, 460) anzuwenden.

13. Die Vorrichtung (100, 200, 400) gemäß einem der Ansprüche 11 oder 12, wobei die Vorrichtung (100, 200, 400) dazu konfiguriert ist, eine Transformation gemäß

$$g^{-1}(\hat{x}) = sgn(\hat{x}) \cdot (\frac{(1 + \mu)^{\hat{x}} - 1}{\mu})$$

auf das verarbeitete Audiosignal ($\hat{x}$, 160, 260, 460) anzuwenden,
wobei sgn() eine Vorzeichenfunktion ist;
wobei µ ein Parameter ist, der einen Expansionsgrad definiert.

14. Die Vorrichtung (100, 200, 400) gemäß einem der vorhergehenden Ansprüche, bei der Neuronales-Netzwerk-Parameter des neuronalen Netzwerks zum Verarbeiten des Rauschsignals (z, 120, 220, 420), oder des aus dem Rauschsignal abgeleiteten Signals, unter Verwendung einer Verarbeitung eines Trainingsaudiosignals oder einer verarbeiteten Version desselben in einem oder mehreren Trainingsflussblöcken erhalten werden, um ein Trainingsergebnissignal zu erhalten, während eine Verarbeitung des Trainingsaudiosignals oder der verarbeiteten Version desselben unter Verwendung des einen oder der mehreren Trainingsflussblöcke in Abhängigkeit von einer verzerrten Version des Trainingsaudiosignals und unter Verwendung des neuronalen Netzwerks angepasst wird, wobei die Neuronales-Netzwerk-Parameter des neuronalen Netzwerks derart bestimmt werden, dass sich eine Charakteristik des Trainingsergebnissignals einer vorbestimmten Charakteristik annähert oder dieselbe aufweist.

15. Die Vorrichtung (100, 200, 400) gemäß einem der vorhergehenden Ansprüche, wobei die Vorrichtung (100, 200, 400) dazu konfiguriert ist, Neuronales-Netzwerk-Parameter des neuronalen Netzwerks zum Verarbeiten des Rauschsignals, oder des aus dem Rauschsignal abgeleiteten Signals, bereitzustellen,

wobei die Vorrichtung (100, 200, 400) dazu konfiguriert ist, ein Trainingsaudiosignal oder eine verarbeitete Version desselben unter Verwendung des einen oder der mehreren Flussblöcke zu verarbeiten, um ein Trainingsergebnissignal zu erhalten, und
wobei die Vorrichtung (100, 200, 400) dazu konfiguriert ist, eine Verarbeitung des Trainingsaudiosignals oder der verarbeiteten Version desselben, die unter Verwendung des einen oder der mehreren Flussblöcke durchgeführt wird, in Abhängigkeit von einer verzerrten Version des Trainingsaudiosignals und unter Verwendung des neuronalen Netzwerks anzupassen, und
wobei die Vorrichtung (100, 200, 400) dazu konfiguriert ist, Neuronales-Netzwerk-Parameter des neuronalen Netzwerks derart zu bestimmen, dass sich eine Charakteristik des Trainingsergebnissignals einer vorbestimmten Charakteristik annähert oder dieselbe aufweist.

**16.** Die Vorrichtung (100, 200, 400) gemäß einem der vorhergehenden Ansprüche, wobei die Vorrichtung eine Vorrichtung zum Bereitstellen von Neuronales-Netzwerk-Parametern aufweist,

wobei die Vorrichtung (100, 200, 400) zum Bereitstellen von Neuronales-Netzwerk-Parametern dazu konfiguriert ist, Neuronales-Netzwerk-Parameter des neuronalen Netzwerks zum Verarbeiten des Rauschsignals, oder des aus dem Rauschsignal abgeleiteten Signals, bereitzustellen,

wobei die Vorrichtung (100, 200, 400) zum Bereitstellen von Neuronales-Netzwerk-Parametern dazu konfiguriert ist, ein Trainingsaudiosignal oder eine verarbeitete Version desselben unter Verwendung von einem oder mehreren Trainingsflussblöcken zu verarbeiten, um ein Trainingsergebnis zu erhalten, und

wobei die Vorrichtung (100, 200, 400) zum Bereitstellen von Neuronales-Netzwerk-Parametern dazu konfiguriert ist, eine Verarbeitung des Trainingsaudiosignals oder der verarbeiteten Version desselben, die unter Verwendung des einen oder der mehreren Flussblöcke durchgeführt wird, in Abhängigkeit von einer verzerrten Version des Trainingsaudiosignals und unter Verwendung des neuronalen Netzwerks anzupassen;

wobei die Vorrichtung (100, 200, 400) dazu konfiguriert ist, Neuronales-Netzwerk-Parameter des neuronalen Netzwerks derart zu bestimmen, dass sich eine Charakteristik des Trainingsergebnissignals einer vorbestimmten Charakteristik annähert oder dieselbe aufweist.

**17.** Die Vorrichtung (100, 200, 400) gemäß einem der vorhergehenden Ansprüche, bei der der eine oder die mehreren Flussblöcke ($110_{1...N}$, $210_{1...N}$, $410_{1...N}$) dazu konfiguriert sind, das verarbeitete Audiosignal ($\hat{x}$, 160, 260, 460) auf der Basis des Rauschsignals (z, 120, 220, 420) unter der Führung des Eingangsaudiosignals (y, 130, 230, 430) zu synthetisieren.

**18.** Die Vorrichtung (100, 200, 400) gemäß einem der vorhergehenden Ansprüche, bei der der eine oder die mehreren Flussblöcke ($110_{1...N}$, $210_{1...N}$, $410_{1...N}$) dazu konfiguriert sind, das verarbeitete Audiosignal ($\hat{x}$, 160, 260, 460) auf der Basis des Rauschsignals (z, 120, 220, 420) unter der Führung des Eingangsaudiosignals (y, 130, 230, 430) unter Verwendung der affinen Verarbeitung von Abtastwerten des Rauschsignals (z, 120, 220, 420), oder eines aus dem Rauschsignal abgeleiteten Signals, zu synthetisieren,

wobei Verarbeitungsparameter der affinen Verarbeitung auf der Basis von Abtastwerten des Eingangsaudiosignals (y, 130, 230, 430) unter Verwendung des neuronalen Netzwerks bestimmt werden.

**19.** Die Vorrichtung (100, 200, 400) gemäß einem der vorhergehenden Ansprüche, wobei die Vorrichtung (100, 200, 400) dazu konfiguriert ist, eine normalisierende Flussverarbeitung durchzuführen, um das verarbeitete Audiosignal aus dem Rauschsignal (z, 120, 220, 420) abzuleiten.

**20.** Ein Verfahren zum Bereitstellen eines verarbeiteten Audiosignals auf der Basis eines Eingangsaudiosignals (y, 130, 230, 430),

wobei das Verfahren eine Verarbeitung eines Rauschsignals (z, 120, 220, 420), oder eines aus dem Rauschsignal abgeleiteten Signals, unter Verwendung von einem oder mehreren Flussblöcken ($110_{1...N}$, $210_{1...N}$, $410_{1...N}$) aufweist, um das verarbeitete Audiosignal ($\hat{x}$, 160, 260, 460) zu erhalten;

wobei das Verfahren ein Anpassen der Verarbeitung, die unter Verwendung des einen oder der mehreren Flussblöcke ($\hat{x}$, 160, 260, 460) durchgeführt wird, in Abhängigkeit von dem Eingangsaudiosignal (y, 130, 230, 430) und unter Verwendung eines neuronalen Netzwerks aufweist.

**21.** Eine Vorrichtung (500, 600, 800) zum Bereitstellen von Neuronales-Netzwerk-Parametern für eine Audioverarbeitung,

wobei die Vorrichtung (500, 600, 800) dazu konfiguriert ist, ein Trainingsaudiosignal (x, 505, 605, 805), oder eine verarbeitete Version desselben, unter Verwendung von einem oder mehreren Flussblöcken ($510_{1...N}$, $610_{1...N}$, $810_{1...N}$) zu verarbeiten, um ein Trainingsergebnissignal (z, 520, 620, 820) zu erhalten,

wobei die Vorrichtung (500, 600, 800) dazu konfiguriert ist, eine Verarbeitung, die unter Verwendung des einen oder der mehreren Flussblöcke ($510_{1...N}$, $610_{1...N}$, $810_{1...N}$) durchgeführt wird, in Abhängigkeit von einer verzerrten Version des Trainingsaudiosignals (y, 530, 630, 830) und unter Verwendung eines neuronalen Netzwerks anzupassen;

wobei die Vorrichtung (500, 600, 800) dazu konfiguriert ist, Neuronales-Netzwerk-Parameter des neuronalen Netzwerks derart zu bestimmen, dass sich eine Charakteristik des Trainingsergebnissignals (z, 520, 620, 820) einer vorbestimmten Charakteristik annähert oder dieselbe aufweist.

**22.** Die Vorrichtung (500, 600, 800) gemäß Anspruch 21,

wobei die Vorrichtung (500, 600, 800) dazu konfiguriert ist, eine Kostenfunktion in Abhängigkeit von Charakteristika des erhaltenen Trainingsergebnissignals (z, 520, 620, 820) auszuwerten, und
wobei die Vorrichtung (500, 600, 800) dazu konfiguriert ist, Neuronales-Netzwerk-Parameter zum Reduzieren oder Minimieren von Kosten, die von der Kostenfunktion definiert werden, zu bestimmen.

**23.** Die Vorrichtung (500, 600, 800) gemäß einem der Ansprüche 21 oder 22, bei der das Trainingsaudiosignal (x, 505, 605, 805) und/oder die verzerrte Version des Trainingsaudiosignals (y, 530, 630, 830) durch einen Satz von Zeitbereichsaudioabtastwerten dargestellt wird.

**24.** Die Vorrichtung (500, 600, 800) gemäß einem der Ansprüche 21 bis 23, bei der ein neuronales Netzwerk, das einem gegebenen Flussblock des einen oder der mehreren Flussblöcke ($510_{1...N}$, $610_{1...N}$, $810_{1...N}$) zugeordnet ist, dazu konfiguriert ist, einen oder mehrere Verarbeitungsparameter für den gegebenen Flussblock in Abhängigkeit von dem Trainingsaudiosignal (x, 505, 605, 805), oder einem aus dem Trainingsaudiosignal abgeleiteten Signal, und in Abhängigkeit von der verzerrten Version des Trainingsaudiosignals (y, 530, 630, 830) zu bestimmen.

**25.** Die Vorrichtung (500, 600, 800) gemäß einem der Ansprüche 21 bis 23, bei der ein neuronales Netzwerk, das einem gegebenen Flussblock zugeordnet ist, dazu konfiguriert ist, einen oder mehrere Parameter einer affinen Verarbeitung bereitzustellen, die auf das Trainingsaudiosignal (x, 505, 605, 805), oder auf eine verarbeitete Version des Trainingsaudiosignals, oder auf einen Abschnitt des Trainingsaudiosignals (x, 505, 605, 805), oder auf einen Abschnitt einer verarbeiteten Version des R Trainingsaudiosignals während der Verarbeitung angewendet werden.

**26.** Die Vorrichtung (500, 600, 800) gemäß Anspruch 25, bei der ein neuronales Netzwerk, das einem gegebenen Flussblock zugeordnet ist, dazu konfiguriert ist, in Abhängigkeit von einem ersten Teil ($x_1$) eines Flussblockeingangssignals (x) oder in Abhängigkeit einem ersten Teil eines vorverarbeiteten Flussblockeingangssignals (x') und in Abhängigkeit von der verzerrten Version des Trainingsaudiosignals (y, 530, 630, 830) einen oder mehrere Parameter der affinen Verarbeitung zu bestimmen, und

wobei eine affine Verarbeitung, die dem gegebenen Flussblock zugeordnet ist, dazu konfiguriert ist, die bestimmten Parameter auf den zweiten Teil ($x_2$) des Flussblockeingangssignals (x) oder auf einen zweiten Teil des vorverarbeiteten Flussblockeingangssignals (x') anzuwenden, um ein affin verarbeitetes Signal ($\widehat{X_2}$) zu erhalten; und
wobei der erste Teil ($x_1$) des Flussblockeingangssignals (x) oder des vorverarbeiteten Flussblockeingangssignals (x') und das affin verarbeitete Signal ($\widehat{X_2}$) ein Flussblockausgangssignal $x_{new}$ des gegebenen Flussblocks bilden.

**27.** Die Vorrichtung (100, 200, 400) gemäß Anspruch 26, bei der das neuronale Netzwerk, das dem gegebenen Flussblock zugeordnet ist, eine tiefenweise trennbare Faltung in der affinen Verarbeitung umfasst, die dem gegebenen Flussblock zugeordnet ist.

**28.** Die Vorrichtung (500, 600, 800) gemäß einem der Ansprüche 26 oder 27, wobei die Vorrichtung (500, 600, 800) dazu konfiguriert ist, eine umkehrbare Faltung auf das Flussblockeingangssignal (x) des gegebenen Flussblocks anzuwenden, um ein vorverarbeitetes Flussblockeingangssignal (x') zu erhalten.

**29.** Die Vorrichtung (500, 600, 800) gemäß einem der Ansprüche 21 bis 28, wobei die Vorrichtung (500, 600, 800) dazu konfiguriert ist, vor dem Verarbeiten des Trainingsaudiosignals (x, 505, 605, 805) eine nichtlineare Eingangskompression (815) auf das Trainingsaudiosignal (x, 505, 605, 805) anzuwenden.

**30.** Die Vorrichtung (500, 600, 800) gemäß Anspruch 29, wobei die Vorrichtung (500, 600, 800) dazu konfiguriert ist, eine $\mu$-Law-Transformation als die nichtlineare Eingangskompression (815) auf das Trainingsaudiosignal (x, 505, 605, 805) anzuwenden.

**31.** Die Vorrichtung (500, 600, 800) gemäß einem der Ansprüche 29 oder 30, wobei die Vorrichtung (500, 600, 800) dazu konfiguriert ist, eine Transformation gemäß

$$g(x) = sgn(x) \cdot \frac{\ln(1 + \mu|x|)}{\ln(1 + \mu)}$$

auf das Trainingsaudiosignal (x, 505, 605, 805) anzuwenden,
wobei sgn() eine Vorzeichenfunktion ist;
wobei $\mu$ ein Parameter ist, der einen Kompressionsgrad definiert.

32. Die Vorrichtung (500, 600, 800) gemäß einem der Ansprüche 21 bis 31, wobei die Vorrichtung (500, 600, 800) dazu konfiguriert ist, vor der Verarbeitung des Trainingsaudiosignals (x, 505, 605, 805) in Abhängigkeit von der verzerrten Version des Trainingsaudiosignals (y, 530, 630, 830) eine nichtlineare Eingangskompression (815) auf die verzerrte Version des Trainingsaudiosignals (y, 530, 630, 830) anzuwenden.

33. Die Vorrichtung (500, 600, 800) gemäß Anspruch 43, wobei die Vorrichtung (500, 600, 800) dazu konfiguriert ist, eine $\mu$-Law-Transformation als die nichtlineare Eingangskompression (815) auf die verzerrte Version des Trainingsaudiosignals (y, 530, 630, 830) anzuwenden.

34. Die Vorrichtung (500, 600, 800) gemäß einem der Ansprüche 32 oder 33, wobei die Vorrichtung (500, 600, 800) dazu konfiguriert ist, eine Transformation gemäß

$$g(y) = sgn(y) \cdot \frac{\ln(1 + \mu|y|)}{\ln(1 + \mu)}$$

auf die verzerrte Version des Trainingsaudiosignals (y, 530, 630, 830) anzuwenden,
wobei sgn() eine Vorzeichenfunktion ist;
wobei $\mu$ ein Parameter ist, der einen Kompressionsgrad definiert.

35. Die Vorrichtung (500, 600, 800) gemäß einem der Ansprüche 21 bis 34, bei der der eine oder die mehreren Flussblöcke ($510_{1...N}$, $610_{1...N}$, $810_{1...N}$) dazu konfiguriert sind, das Trainingsaudiosignal (x, 505, 605, 805) in das Trainingsergebnissignal (z, 520, 620, 820) umzuwandeln.

36. Die Vorrichtung (500, 600, 800) gemäß einem der Ansprüche 21 bis 35, bei der der eine oder die mehreren Flussblöcke ($510_{1...N}$, $610_{1...N}$, $810_{1...N}$) dazu eingestellt sind, das Trainingsaudiosignal (x, 505, 605, 805) unter der Führung der verzerrten Version des Trainingsaudiosignals (y, 530, 630, 830) unter Verwendung der affinen Verarbeitung von Abtastwerten des Trainingsaudiosignals (x, 505, 605, 805), oder eines aus dem Trainingsaudiosignal (x, 505, 605, 805) abgeleiteten Signals, in das Trainingsergebnissignal (z, 520, 620, 820) umzuwandeln.

37. Die Vorrichtung (500, 600, 800) gemäß einem der Ansprüche 21 bis 36, wobei die Vorrichtung (500, 600, 800) dazu konfiguriert ist, eine normalisierende Flussverarbeitung durchzuführen, um das Trainingsergebnissignal (z, 520, 620, 820) aus dem Trainingsaudiosignal (x, 505, 605, 805) abzuleiten.

38. Ein Verfahren zum Bereitstellen von Neuronales-Netzwerk-Parametern für eine Audioverarbeitung,

wobei das Verfahren eine Verarbeitung eines Trainingsaudiosignals (x, 505, 605, 805), oder einer verarbeiteten Version desselben, unter Verwendung von einem oder mehreren Flussblöcken ($510_{1...N}$, $610_{1...N}$, $810_{1...N}$) aufweist, um ein Trainingsergebnissignal (z, 520, 620, 820) zu erhalten,
wobei das Verfahren ein Anpassen der Verarbeitung, die unter Verwendung des einen oder der mehreren Flussblöcke ($510_{1...N}$, $610_{1...N}$, $810_{1...N}$) durchgeführt wird, in Abhängigkeit von einer verzerrten Version des Trainingsaudiosignals (y, 530, 630, 830) und unter Verwendung eines neuronalen Netzwerks aufweist,
wobei das Verfahren ein Bestimmen der Neuronales-Netzwerk-Parameter des neuronalen Netzwerks derart aufweist, dass sich eine Charakteristik des Trainingsergebnissignals (z, 520, 620, 820) einer vorbestimmten Charakteristik annähert oder dieselbe aufweist.

39. Computerprogramm, das einen Programmcode aufweist, der, wenn das Programm von einem Computer ausgeführt wird, den Computer dazu veranlasst, das Verfahren gemäß einem der Ansprüche 20 oder 38 auszuführen.

**Revendications**

1. Appareil (100, 200, 400) pour fournir un signal audio traité ($\hat{x}$, 160, 260, 460) sur base d'un signal audio d'entrée (y, 130, 230, 430),

   dans lequel l'appareil (100, 200, 400) est configuré pour traiter un signal de bruit (z, 120, 220, 420), ou un signal dérivé du signal de bruit (z, 120, 220, 420), à l'aide d'un ou plusieurs blocs de flux ($110_{1...N}$, $210_{1...N}$, $410_{1...N}$) pour obtenir le signal audio traité ($\hat{x}$, 160, 260, 460),

   dans lequel l'appareil (100, 200, 400) est configuré pour adapter un traitement effectué à l'aide des un ou plusieurs blocs de flux ($110_{1...N}$, $210_{1...N}$, $410_{1...N}$) en fonction du signal audio d'entrée (y, 130, 230, 430) et à l'aide d'un réseau neuronal.

2. Appareil (100, 200, 400) selon la revendication 1, dans lequel le signal audio d'entrée (y, 130, 230, 430) est représenté par un ensemble d'échantillons audio dans le domaine temporel.

3. Appareil (100, 200, 400) selon l'une quelconque des revendications 1 ou 2, dans lequel un réseau neuronal associé à un bloc de flux donné parmi les un ou plusieurs blocs de flux ($110_{1...N}$, $210_{1...N}$, $410_{1...N}$) est configuré pour déterminer un ou plusieurs paramètres de traitement pour le bloc de flux donné en fonction du signal de bruit (z, 120, 220, 420), ou d'un signal dérivé du signal de bruit (z, 120, 220, 420), et en fonction du signal audio d'entrée (y, 130, 230, 430).

4. Appareil (100, 200, 400) selon l'une quelconque des revendications 1 à 3, dans lequel un réseau neuronal associé à un bloc de flux donné est configuré pour fournir un ou plusieurs paramètres d'un traitement affiné qui est appliqué au signal de bruit (z, 120, 220, 420), ou à une version traitée du signal de bruit, ou à une partie du signal de bruit (z, 120, 220, 420), ou à une partie d'une version traitée du signal de bruit pendant le traitement.

5. Appareil (100, 200, 400) selon la revendication 4, dans lequel un réseau neuronal associé au bloc de flux donné est configuré pour déterminer un ou plusieurs paramètres du traitement affiné, en fonction d'une première partie ($z_1$) d'un signal d'entrée de bloc de flux (z) et en fonction du signal audio d'entrée (y, 130, 230, 430), et

   dans lequel un traitement affiné associé au bloc de flux donné est configuré pour appliquer les paramètres déterminés à une deuxième partie ($z_2$) du signal d'entrée de bloc de flux (z), pour obtenir un signal traité de manière affinée ($\hat{z}_2$); et

   dans lequel la première partie ($z_1$) du signal d'entrée de bloc de flux (z) et le signal traité de manière affinée ($\hat{z}_2$) forment un signal de sortie de bloc de flux ($z_{new}$) du bloc de flux donné.

6. Appareil (100, 200, 400) selon la revendication 5, dans lequel le réseau neuronal associé au bloc de flux donné comporte une convolution séparable par profondeur dans le traitement affiné associé au bloc de flux donné.

7. Appareil (100, 200, 400) selon l'une quelconque des revendications 5 ou 6, dans lequel l'appareil (100, 200, 400) est configuré pour appliquer une convolution inversible au signal de sortie de bloc de flux ($z_{new}$) du bloc de flux donné, pour obtenir un signal de sortie de bloc de flux traité ($z'_{new}$).

8. Appareil (100, 200, 400) selon l'une quelconque des revendications précédentes, dans lequel l'appareil (100, 200, 400) est configuré pour appliquer une compression non linéaire (490) au signal audio d'entrée (y, 130, 230, 430) avant de traiter le signal de bruit (z, 120, 220, 420) en fonction du signal audio d'entrée (y, 130, 230, 430).

9. Appareil (100, 200, 400) selon la revendication 8, dans lequel l'appareil (100, 200, 400) est configuré pour appliquer une transformation selon la loi de $\mu$ comme compression non linéaire (490) au signal audio d'entrée (y, 130, 230, 430).

10. Appareil (100, 200, 400) selon l'une quelconque des revendications 8 ou 9, dans lequel l'appareil (100, 200, 400) est configuré pour appliquer une transformation selon

$$g(y) = sgn(y) \cdot \frac{\ln(1 + u|y|)}{\ln(1 + u)};$$

au signal audio d'entrée (y, 130, 230, 430),

où sgn() est une fonction de signe;
$\mu$ est un paramètre définissant un niveau de compression.

11. Appareil (100, 200, 400) selon l'une quelconque des revendications précédentes, dans lequel l'appareil (100, 200, 400) est configuré pour appliquer une expansion non linéaire (415) au signal audio traité ($\hat{x}$, 160, 260, 460).

12. Appareil (100, 200, 400) selon la revendication 11, dans lequel l'appareil (100, 200, 400) est configuré pour appliquer une transformation selon la loi de $\mu$ inverse comme expansion non linéaire (415) au signal audio traité ($\hat{x}$, 160, 260, 460).

13. Appareil (100, 200, 400) selon l'une quelconque des revendications 11 ou 12, dans lequel l'appareil (100, 200, 400) est configuré pour appliquer une transformation selon

$$g^{-1}(\hat{x}) = sgn(\hat{x}) \cdot \left( \frac{(1+\mu)^{\hat{x}} - 1}{\mu} \right);$$

au signal audio traité ($\hat{x}$, 160, 260, 460),
où sgn() est une fonction de signe;
$\mu$ est un paramètre définissant un niveau d'expansion.

14. Appareil (100, 200, 400) selon l'une quelconque des revendications précédentes, dans lequel les paramètres de réseau neuronal du réseau neuronal pour traiter le signal de bruit (z, 120, 220, 420), ou le signal dérivé du signal de bruit, sont obtenus à l'aide d'un traitement d'un signal audio d'apprentissage ou d'une version traitée de ce dernier, dans un ou plusieurs blocs de flux d'apprentissage pour obtenir un signal de résultat d'apprentissage, dans lequel un traitement du signal audio d'apprentissage ou de la version traitée de ce dernier à l'aide des un ou plusieurs blocs de flux d'apprentissage est adapté en fonction d'une version déformée du signal audio d'apprentissage et à l'aide du réseau neuronal, et
dans lequel les paramètres de réseau neuronal de réseau neuronal du réseau neuronal sont déterminés de sorte qu'une caractéristique du signal de résultat d'apprentissage se rapproche de ou comprenne une caractéristique prédéterminée.

15. Appareil (100, 200, 400) selon l'une quelconque des revendications précédentes, dans lequel l'appareil (100, 200, 400) est configuré pour fournir des paramètres de réseau neuronal du réseau neuronal pour traiter le signal de bruit, ou le signal dérivé du signal de bruit,

dans lequel l'appareil (100, 200, 400) est configuré pour traiter un signal audio d'apprentissage ou une version traitée de ce dernier, à l'aide des un ou plusieurs blocs de flux pour obtenir un signal de résultat d'apprentissage, et
dans lequel l'appareil (100, 200, 400) est configuré pour adapter un traitement du signal audio d'apprentissage ou de la version traitée de ce dernier qui est effectué à l'aide des un ou plusieurs blocs de flux en fonction d'une version déformée du signal audio d'apprentissage et à l'aide du réseau neuronal, et
dans lequel l'appareil (100, 200, 400) est configuré pour déterminer les paramètres de réseau neuronal du réseau neuronal, de sorte qu'une caractéristique du signal de résultat d'apprentissage se rapproche de ou comprenne une caractéristique prédéterminée.

16. Appareil (100, 200, 400) selon l'une quelconque des revendications précédentes, dans lequel l'appareil comprend un appareil destiné à fournir des paramètres de réseau neuronal,

dans lequel l'appareil (100, 200, 400) destiné à fournir des paramètres de réseau neuronal est configuré pour fournir les paramètres de réseau neuronal du réseau neuronal pour traiter le signal de bruit, ou le signal dérivé du signal de bruit,
dans lequel l'appareil (100, 200, 400) destiné à fournir les paramètres de réseau neuronal est configuré pour traiter un signal audio d'apprentissage ou une version traitée de ce dernier, à l'aide d'un ou plusieurs blocs de flux d'apprentissage pour obtenir un signal de résultat d'apprentissage, et
dans lequel l'appareil (100, 200, 400) destiné à fournir les paramètres de réseau neuronal est configuré pour adapter un traitement du signal audio d'apprentissage, ou de la version traitée de ce dernier, qui est effectué à l'aide des un ou plusieurs blocs de flux en fonction d'une version déformée du signal audio d'apprentissage et à l'aide du réseau neuronal;

dans lequel l'appareil (100, 200, 400) est configuré pour déterminer les paramètres de réseau neuronal du réseau neuronal, de sorte qu'une caractéristique du signal de résultat d'apprentissage se rapproche de ou comprenne une caractéristique prédéterminée.

17. Appareil (100, 200, 400) selon l'une quelconque des revendications précédentes, dans lequel les un ou plusieurs blocs de flux ($110_{1...N}$, $210_{1...N}$, $410_{1...N}$) sont configurés pour synthétiser le signal audio traité ($\hat{x}$, 160, 260, 460) sur base du signal de bruit (z, 120, 220, 420) sous le guidage du signal audio d'entrée (y, 130, 230, 430).

18. Appareil (100, 200, 400) selon l'une quelconque des revendications précédentes, dans lequel les un ou plusieurs blocs de flux ($110_{1...N}$, $210_{1...N}$, $410_{1...N}$) sont configurés pour synthétiser le signal audio traité ($\hat{x}$, 160, 260, 460) sur base du signal de bruit (z, 120, 220, 420) sous le guidage du signal audio d'entrée (y, 130, 230, 430) à l'aide du traitement affiné des valeurs d'échantillon du signal de bruit (z, 120, 220, 420), ou d'un signal dérivé du signal de bruit, dans lequel les paramètres de traitement du traitement affiné sont déterminés sur base des valeurs d'échantillon du signal audio d'entrée (y, 130, 230, 430) à l'aide du réseau neuronal.

19. Appareil (100, 200, 400) selon l'une quelconque des revendications précédentes, dans lequel l'appareil (100, 200, 400) est configuré pour effectuer un traitement de flux de normalisation, pour dériver le signal audio traité du signal de bruit (z, 120, 220, 420).

20. Procédé pour fournir un signal audio traité sur base d'un signal audio d'entrée (y, 130, 230, 430),

dans lequel le procédé comprend le fait de traiter un signal de bruit (z, 120, 220, 420), ou un signal dérivé du signal de bruit, à l'aide d'un ou plusieurs blocs de flux ($110_{1...N}$, $210_{1...N}$, $410_{1...N}$), pour obtenir le signal audio traité ($\hat{x}$, 160, 260, 460);

dans lequel le procédé comprend le fait d'adapter le traitement effectué à l'aide des un ou plusieurs blocs de flux ($\hat{x}$, 160, 260, 460) en fonction du signal audio d'entrée (y, 130, 230, 430) et à l'aide d'un réseau neuronal.

21. Appareil (500, 600, 800) pour fournir des paramètres de réseau neuronal pour un traitement audio,

dans lequel l'appareil (500, 600, 800) est configuré pour traiter un signal audio d'apprentissage (x, 505, 605, 805), ou une version traitée de ce dernier, à l'aide d'un ou plusieurs blocs de flux ($510_{1...N}$, $610_{1...N}$, $810_{1...N}$) pour obtenir un signal de résultat d'apprentissage (z, 520, 620, 820),

dans lequel l'appareil (500, 600, 800) est configuré pour adapter un traitement effectué à l'aide des un ou plusieurs blocs de flux ($510_{1...N}$, $610_{1...N}$, $810_{1...N}$) en fonction d'une version déformée du signal audio d'apprentissage (y, 530, 630, 830) et à l'aide d'un réseau neuronal;

dans lequel l'appareil (500, 600, 800) est configuré pour déterminer les paramètres de réseau neuronal du réseau neuronal, de sorte qu'une caractéristique du signal de résultat d'apprentissage (z, 520, 620, 820) se rapproche de ou comprenne une caractéristique prédéterminée.

22. Appareil (500, 600, 800) selon la revendication 21,

dans lequel l'appareil (500, 600, 800) est configuré pour évaluer une fonction de coût en fonction des caractéristiques du signal de résultat d'apprentissage obtenu (z, 520, 620, 820), et

dans lequel l'appareil (500, 600, 800) est configuré pour déterminer les paramètres de réseau neuronal pour réduire ou de minimiser un coût défini par la fonction de coût.

23. Appareil (500, 600, 800) selon l'une quelconque des revendications 21 ou 22, dans lequel le signal audio d'apprentissage (x, 505, 605, 805) et/ou la version déformée du signal audio d'apprentissage (y, 530, 630, 830) est représenté par un ensemble d'échantillons audio dans le domaine temporel.

24. Appareil (500, 600, 800) selon l'une quelconque des revendications 21 à 23, dans lequel un réseau neuronal associé à un bloc de flux donné parmi les un ou plusieurs blocs de flux ($510_{1...N}$, $610_{1...N}$, $810_{1...N}$) est configuré pour déterminer un ou plusieurs paramètres de traitement pour le bloc de flux donné en fonction du signal audio d'apprentissage (x, 505, 605, 805), ou d'un signal dérivé du signal audio d'apprentissage, et en fonction de la version déformée du signal audio d'apprentissage (y, 530, 630, 830).

25. Appareil (500, 600, 800) selon l'une quelconque des revendications 21 à 24, dans lequel un réseau neuronal associé à un bloc de flux donné est configuré pour fournir un ou plusieurs paramètres d'un traitement affiné qui est appliqué au signal audio d'apprentissage (x, 505, 605, 805), ou à une version traitée du signal audio d'apprentissage, ou à une partie du signal audio d'apprentissage (x, 505, 605, 805), ou à une partie d'une version traitée du signal audio d'apprentissage pendant le traitement.

26. Appareil (500, 600, 800) selon la revendication 25, dans lequel un réseau neuronal associé au bloc de flux donné est configuré pour déterminer un ou plusieurs paramètres du traitement affiné, en fonction d'une première partie ($x_1$) d'un signal d'entrée de bloc de flux (x) ou en fonction d'une première partie d'un signal d'entrée de bloc de flux prétraité (x') et en fonction de la version déformée du signal audio d'apprentissage (y, 530, 630, 830), et

dans lequel un traitement affiné associé au bloc de flux donné est configuré pour appliquer les paramètres déterminés à une deuxième partie ($x_2$) du signal d'entrée de bloc de flux (x) ou à une deuxième partie du signal d'entrée de bloc de flux prétraité (x'), pour obtenir un signal traité de manière affinée ($\hat{z}_2$); et
dans lequel la première partie ($x_1$) du signal d'entrée de bloc de flux (x) ou du signal d'entrée de bloc de flux prétraité (x') et le signal traité de manière affinée ($\hat{z}_2$) forment un signal de sortie de bloc de flux ($x_{new}$) du bloc de flux donné.

27. Appareil (100, 200, 400) selon la revendication 26, dans lequel le réseau neuronal associé au bloc de flux donné comporte une convolution séparable par profondeur dans le traitement affiné associé au bloc de flux donné.

28. Appareil (500, 600, 800) selon l'une quelconque des revendications 26 ou 27, dans lequel l'appareil (500, 600, 800) est configuré pour appliquer une convolution inversible au signal d'entrée de bloc de flux (x) du bloc de flux donné pour obtenir le signal d'entrée de bloc de flux prétraité (x').

29. Appareil (500, 600, 800) selon l'une quelconque des revendications 21 à 28, dans lequel l'appareil (500, 600, 800) est configuré pour appliquer une compression d'entrée non linéaire (815) au signal audio d'apprentissage (x, 505, 605, 805) avant de traiter le signal audio d'apprentissage (x, 505, 605, 805).

30. Appareil (500, 600, 800) selon la revendication 29, dans lequel l'appareil (500, 600, 800) est configuré pour appliquer une transformation selon la loi de µ comme compression d'entrée non linéaire (815) au signal audio d'apprentissage (x, 505, 605, 805).

31. Appareil (500, 600, 800) selon l'une quelconque des revendications 29 ou 30, dans lequel l'appareil (500, 600, 800) est configuré pour appliquer une transformation selon

$$g(x) = sgn(x) \cdot \frac{\ln(1 + u|x|)}{\ln(1 + u)};$$

au signal audio d'apprentissage (x, 505, 605, 805),
où sgn() est une fonction de signe;
µ est un paramètre définissant un niveau de compression.

32. Appareil (500, 600, 800) selon l'une quelconque des revendications 21 à 31, dans lequel l'appareil (500, 600, 800) est configuré pour appliquer une compression d'entrée non linéaire (815) à la version déformée du signal audio d'apprentissage (y, 530, 630, 830) avant de traiter le signal audio d'apprentissage (x, 505, 605, 805) en fonction de la version déformée du signal audio d'apprentissage (y, 530, 630, 830).

33. Appareil (500, 600, 800) selon la revendication 32, dans lequel l'appareil (500, 600, 800) est configuré pour appliquer une transformation selon la loi de µ comme compression d'entrée non linéaire (815) à la version déformée du signal audio d'apprentissage (y, 530, 630, 830).

34. Appareil (500, 600, 800) selon l'une quelconque des revendications 32 ou 33, dans lequel l'appareil (500, 600, 800) est configuré pour appliquer une transformation selon

$$g(y) = sgn(y) \cdot \frac{\ln(1 + u|y|)}{\ln(1 + u)};$$

à la version déformée du signal audio d'apprentissage (y, 530, 630, 830),

où sgn() est une fonction de signe;

$\mu$ est un paramètre définissant un niveau de compression.

35. Appareil (500, 600, 800) selon l'une quelconque des revendications 21 à 34, dans lequel les un ou plusieurs blocs de flux ($510_{1...N}$, $610_{1...N}$, $810_{1...N}$) sont configurés pour convertir le signal audio d'apprentissage (x, 505, 605, 805) en signal de résultat d'apprentissage (z, 520, 620, 820).

36. Appareil (500, 600, 800) selon l'une quelconque des revendications 21 à 35, dans lequel les un ou plusieurs blocs de flux ($510_{1...N}$, $610_{1...N}$, $810_{1...N}$) sont ajustés pour convertir le signal audio d'apprentissage (x, 505, 605, 805) en signal de résultat d'apprentissage (z, 520, 620, 820) sous le guidage de la version déformée du signal audio d'apprentissage (y, 530, 630, 830), à l'aide du traitement affiné des valeurs d'échantillon du signal audio d'apprentissage (x, 505, 605, 805), ou d'un signal dérivé du signal audio d'apprentissage (x, 505, 605, 805),

dans lequel les paramètres de traitement du traitement affiné sont déterminés sur base des valeurs d'échantillon de la version déformée du signal audio d'apprentissage (y, 530, 630, 830) à l'aide du réseau neuronal.

37. Appareil (500, 600, 800) selon l'une quelconque des revendications 21 à 36, dans lequel l'appareil (500, 600, 800) est configuré pour effectuer un traitement de flux de normalisation, pour dériver le signal de résultat d'apprentissage (z, 520, 620, 820) du signal audio d'apprentissage (x, 505, 605, 805).

38. Procédé permettant de fournir les paramètres de réseau neuronal pour un traitement audio,

dans lequel le procédé comprend le fait de traiter un signal audio d'apprentissage (x, 505, 605, 805), ou une version traitée de ce dernier, à l'aide d'un ou plusieurs blocs de flux ($510_{1...N}$, $610_{1...N}$, $810_{1...N}$) pour obtenir un signal de résultat d'apprentissage (z, 520, 620, 820),

dans lequel le procédé comprend le fait d'adapter le traitement effectué à l'aide des un ou plusieurs blocs de flux ($510_{1...N}$, $610_{1...N}$, $810_{1...N}$) en fonction d'une version déformée du signal audio d'apprentissage (y, 530, 630, 830) et à l'aide d'un réseau neuronal,

dans lequel le procédé comprend le fait de déterminer les paramètres de réseau neuronal, de sorte qu'une caractéristique du signal de résultat d'apprentissage (z, 520, 620, 820) se rapproche de ou comprenne une caractéristique prédéterminée.

39. Programme d'ordinateur présentant un code de programme qui, lorsque le programme est exécuté par un ordinateur, amène l'ordinateur à réaliser le procédé selon l'une quelconque des revendications 20 ou 38.

**Fig. 1**

Fig. 2

311

remark
flow block index i
omitted for simplicity
in same cases

z(i) — 340

370 — $z_1(i)$ | $z_2(i)$

330

$y = x + n$

NN(i) — 380

e.g. parameters from training

371 — S, T(i)

$\hat{z}_2 = \dfrac{z_2 - t}{s}$

372 — $\hat{z}_2(i)$

$z_1(i)$ | $\hat{z}_2(i)$ — 373

$z_{new}(i)$ — 350

inference flow block

Fig. 3

400

420

430

$z \sim N(z; 0; l)$

y

group (optional) — 405

$z(i=1)$ — $440_1$

y

affine coupling layer $\underline{411_1}$

$z_{new}(i=1)$ — $450_1$

nonlinear
compression
(optional)

1 x 1 invertible convolution $\underline{412_1}$
(optional)

$410_1$
1. flow block

$z_{new}(i=1)$ or
$z'_{new}(i=1)$ — $451_1$

490

y or y'

$z(i=2)$ — $440_2$

$410_2$
2. flow block

y or y'

$z_{new}(i=2)$ or
$z'_{new}(i=2)$

$410_N$
N. flow block

$\hat{x}$ — 460

nonlinear expansion $\underline{415}$
(optional)

Fig. 4

$\hat{x'}$ — 465

Fig. 5

605 x: audio samples clean (e.g. training audio signal)

1s ≙ 16000 samples (example)

● grouping in groups of 8 samples (optional)

600

⇒ 8

(example)

2000

noisy audio samples, e.g. y

$x_{input}(i=1),$

| $y_{input}$ | ~630 |

$640_1$

1 x 1 invertible
convolution

$612_1$

$641_1$
e.g. $x'_{input}(i=1)$

affine coupling
layers

$611_1$

1. flow block $610_1$
(e.g. training
flow block)

$650_1$    $640_2$
$x_{new}(i=1)$    $x_{input}(i=2)$

2. flow block $610_2$
(e.g. training
flow block)

$650_2$
$x_{new}(i=2)$    $640_N$
$x_{input}(i=N)$

N. flow block $610_N$

$650_N$
$x_{new}(i=N)$

z ~620

Fig. 6

711

x(i) or x'(i) or x-input' —740

x₁(i) | x₂(i) —770

730

y = x+n

NN(i) —780

S, T(i) —771

772— $\widehat{x}_2$(i)          $\widehat{x}_2 = x_2 \cdot s + t$

x₁(i) | $\widehat{x}_2$(i) —773

$x_{new}$(i) —750

training flow block

# Fig. 7

Fig. 8

Fig. 9

Fig. 10

| Method | PESQ | CSIG | CBAK | COVL | segSNR |
|---|---|---|---|---|---|
| Noisy | 1.97 | 3.35 | 2.44 | 2.63 | 1.68 |
| SEGAN [11] | 2.16 | 3.48 | 2.94 | 2.80 | 7.73 |
| DSEGAN [16] | 2.39 | 3.46 | 3.11 | 3.50 | – |
| MMSE-GAN [26] | 2.53 | 3.80 | 3.12 | 3.14 | – |
| Metric-GAN [13] | 2.86 | 3.99 | 3.18 | 3.42 | – |
| SE-Flow | 2.28 | 3.70 | 3.03 | 2.97 | 7.93 |
| SE-Flow-$\mu$ | 2.43 | 3.77 | 3.12 | 3.09 | 8.07 |

## Fig. 11

(a) noisy

(b) clean

Fig. 12
(Part 1)

(c) SE-Flow

(d) SE-Flow-μ

Fig. 12
(Part 2)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Can We Trust Deep Speech Prior?. **YING SHI.** IEEE spoken language technology workshop. IEEE, 2021, 742-749
- **BOHAN ZHAI et al.** Squeeze Wave: Extremely Lightweight Vocoders for On-Device Speech Synthesis. *Cornell University Library,* 16 January 2020
- **ZENG-XI LI et al.** Conditional Generative Model for Speech Enhancement. *Circuits, Systems and Signal Processing,* 13 March 2018, vol. 37 (1), 1005-5022
- WaveGlow: a Flow-Based Generative Network for Speech Synthesis. **R.PRENGER et al.** ICASSP 2019, IEEE International Conference on Acoustics, Speech and Signal Processing. IEEE, 17 May 2019, 3617-3621
- **P LOIZOU.** Speech Enhancement: Theory and Practice. CRC Press, 2013
- **K. BORISAGAR ; D. THANKI ; B. SEDANI.** Speech Enhancement Techniques for Digital Hearing Aids. Springer International Publishing, 2018
- **A.H. MOORE ; P. PESO PARADA ; P.A. NAYLOR.** Speech enhancement for robust automatic speech recognition: Evaluation using a baseline system and instrumental measures. *Computer Speech & Language,* 2017, vol. 46, 574-584
- **J. LIM ; A. OPPENHEIM.** All-pole modeling of degraded speech. *IEEE Transactions on Acoustics, Speech, and Signal Processing,* 1978, vol. 26 (3), 197-210
- **S. BOLL.** Suppression of acoustic noise in speech using spectral subtraction. *IEEE Transactions on Acoustics, Speech, and Signal Processing,* vol. 27 (2), 113-120
- **Y. EPHRAIM ; H.L. VAN TREES.** A signal subspace approach for speech enhancement. *IEEE Transactions on Speech and Audio Processing,* 1995, vol. 3 (4), 251-266
- **Y. EPHRAIM ; D. MALAH.** Speech enhancement using a minimum mean-square error log-spectral amplitude estimator. *IEEE Transactions Acoustics, Speech and Signal Processing,* May 1985, vol. 33, 443-445
- **Y. XU ; J. DU ; L. DAI ; C. LEE.** A regression approach to speech enhancement based on deep neural networks. *IEEE/ACM Transactions on Audio, Speech, and Language Processing,* 2015, vol. 23 (1), 7-19

- **F. GERMAIN ; Q. CHEN ; V. KOLTUN.** Speech denoising with deep feature losses. *Proc. Interspeech Conf,* 2019, 2723-2727
- **K. QIAN ; Y. ZHANG ; S. CHANG ; X. YANG ; D. FLORENCIO ; M. HASEGAWA-JOHNSON.** Speech enhancement using bayesian wavenet. *Proc. Interspeech Conf.,* 2017, 2013-2017
- **S. PASCUAL ; A. BONAFONTE ; J. SERRA.** Segan: Speech enhancement generative adversarial network. *Proc. Inter-speech Conf.,* 2017, 3642-3646
- **M. H. SONI ; N. SHAH ; H. A. PATIL.** Time-frequency masking-based speech enhancement using generative adversarial network. *Proc. IEEE Intl. Conf. on Acoustics, Speech and Signal Processing (ICASSP),* 2018, 5039-5043
- **S.-W. FU ; C.-F. LIAO ; Y. TSAO ; S.-D. LIN.** Metricgan: Generative adversarial networks based black-box metric scores optimization for speech enhancement. *Proc. Intl. Conf. Ma-chine Learning (ICML),* 2019, 2031-2041
- **S. LEGLAIVE ; X. ALAMEDA-PINEDA ; L. GIRIN ; R. HORAUD.** A Recurrent Variational Autoencoder for Speech Enhancement. *Proc. IEEE Intl. Conf. on Acoustics, Speech and Signal Processing (ICASSP),* 2020, 371-375
- **N. ADIGA ; Y. PANTAZIS ; V. TSIARAS ; Y. STYLIANOU.** Speech enhancement for noise-robust speech synthesis using wasserstein gan. *Proc. Interspeech Conf,* 2019, 1821-1825
- **H. PHAN ; I. V. MCLOUGHLIN ; L. PHAM ; O. Y. CHEN ; P. KOCH ; M. DE VOS ; A. MERTINS.** improving gans for speech enhancement. *IEEE Signal Processing Letters,* 2020, vol. 27, 1700-1704
- **A. A. NUGRAHA ; K. SEKIGUCHI ; K. YOSHII.** A flow-based deep latent variable model for speech spectrogram modeling and enhancement. *IEEE/ACM Transactions on Audio, Speech, and Language Processing,* 2020, vol. 28, 1104-1117
- **J. HO ; X. CHEN ; A. SRINIVAS ; Y. DUAN ; P. AB-BEEL.** Flow++: Improving flow-based generative models with variational dequantization and architecture design. *Proc. of Machine Learning Research,* 2019, vol. 97, 2722-2730
- **R. PRENGER ; R. VALLE ; B. CATANZARO.** Waveglow: A Flow-based Generative Network for Speech Synthesis. *Proc. IEEE Intl. Conf. on Acoustics, Speech and Signal Processing (ICASSP),* 2019, 3617-3621

- **I. KOBYZEV ; S. PRINCE ; M. BRUBAKER.** Normalizing flows: An introduction and review of current methods. *IEEE Trans-actions on Pattern Analysis and Machine Intelligence,* 2020, 1-1
- **G. PAPAMAKARIOS ; E.T. NALISNICK ; D.J. REZENDE ; S. MOHAMED ; B LAKSHMINARAY-ANAN.** Normalizing flows for probabilistic modeling and inference. *arXiv:1912.02762,* 2019
- **D.P. KINGMA ; P. DHARIWAL.** Glow: Generative flow with invertible 1x1 convolutions. *Advances in Neural Information Processing Systems,* 2018, vol. 31, 10215-10224
- **L DINH ; J. SOHL-DICKSTEIN ; S. BENGIO.** Density estimation using real NVP. *5th Int. Conf. on Learning Representations, ICLR,* 2017
- **F. CHOLLET.** Xception: Deep learning with depth-wise separable convolutions. *IEEE Conf, on Computer Vision and Pattern Recognition (CVPR),* 2017, 1800-1807
- **B. ZHAI ; T. GAO ; F. XUE ; D. ROTHCHILD ; B. WU, J. GONZALEZ ; K. KEUTZER.** Squeezewave: Extremely lightweight vocoders for on-device speech synthesis. *arXiv:2001.05685,* 2020
- **D. RETHAGE ; J. PONS ; X. SERRA.** A wavenet for speech de-noising. *Proc. IEEE Intl. Conf. on Acoustics, Speech and Signal Processing (ICASSP),* 2018, 5069-5073
- **J. JENSEN ; I. BATINA ; R. C HENDRIKS ; R. HEUSDENS.** A study of the distribution of time-domain speech samples and discrete fourier coefficients. *Proc. SPS-DARTS,* 2005, vol. 1, 155-158
- **C. VALENTINI BOTINHAO ; X. WANG ; S. TAKAKI ; J. YAMAGISHI.** Speech enhancement for a noise-robust text-to-speech synthesis system using deep recurrent neural networks. *Proc. In-terspeech Conf,* 2016, 352-356
- **C. VEAUX ; J. YAMAGISHI ; S. KING.** The voice bank corpus: Design, collection and data analysis of a large regional accent speech database. *Int. Conf. Oriental COCOSDA held jointly with the Conf. on Asian Spoken Language Research and Evaluation (O-COCOSDA/CASLRE),* 2013, 1-4
- **J. THIEMANN ; N. ITO ; E. VINCENT.** The diverse environments multi-channel acoustic noise database (demand): A database of multichannel environmental noise recordings. *Proc. of Meetings on Acoustics,* 2013, vol. 19 (1), 035081
- **D.P. KINGMA ; J. BA.** Adam: A method for stochastic optimization. *3rd Int. Conf. on Learning Representa-tions, ICLR,* 2015
- **T. SALIMANS ; D. P. KINGMA.** Weight normaliza-tion: A simple reparameterization to accelerate training of deep neural net-works. *Advances in Neural In-formation Processing Systems,* 2016, vol. 29, 901-909
- **M. PARIENTE ; A. DELEFORGE ; E. VINCENT.** A statistically principled and computationally efficient approach to speech enhancement using variational autoencoders. *Proc. Interspeech Conf.,* 2019, 3158-3162
- **Y. HU ; P. LOIZOU.** Evaluation of objective quality measures for speech enhancement. *IEEE Transactions on Audio, Speech, and Language Processing,* February 2008, vol. 16, 229-238
- **J. HANSEN ; B. PELLOM.** An effective quality eval-uation protocol for speech enhancement algorithms. *ICSLP,* 1998
- **R. GIRI ; U. ISIK ; A. A. KRISHNASWAMY.** Attention wave-u-net for speech enhancement. *Proc. IEEE Workshop on Applications of Signal Processing to Audio and Acoustics,* 2019, 249-253
- **Y. KOIZUMI ; K. YATABE ; M. DELCROIX ; Y. MASUYAMA ; D. TAKEUCHI.** Speech enhance-ment using self-adaptation and multi-head self-atten-tion. *Proc. IEEE Intl. Conf. on Acoustics, Speech and Signal Processing (ICASSP),* 2020, 181-185